# EUROPEAN PATENT APPLICATION

(11) **EP 4 539 014 A1**
(43) Date of publication of application: **16.04.2025**
(21) Application number: 23830373.9
(22) Date of filing: 29.06.2023
(51) Int. Cl.: G08G 1/14

(54) **PARKING INTERACTION METHOD AND APPARATUS, AND SYSTEM**

(30) Priority: 01.07.2022 CN 202210769908
(71) Applicant: Shenzhen Yinwang Intelligent Technologies Co., Ltd., Shenzhen, Guangdong 518129 (CN)
(72) Inventor: LIAO, Xiaofeng, Shenzhen, Guangdong 518129 (CN); ZHAO, Yaxi, Shenzhen, Guangdong 518129 (CN); YANG, Jinghuan, Shenzhen, Guangdong 518129 (CN); GUO, Ziheng, Shenzhen, Guangdong 518129 (CN); WU, Sifan, Shenzhen, Guangdong 518129 (CN); TANG, Qiuyuan, Shenzhen, Guangdong 518129 (CN)
(74) Representative: Pfenning, Meinig & Partner mbB
(86) International application number: PCT/CN2023/103533
(87) International publication number: WO 2024/002202

(57) **Abstract**

A parking interaction method and apparatus, and a system are provided. The method includes: obtaining information about a first area when a vehicle enters the first area (S2910); obtaining information about a second area when the vehicle enters the second area (S2920), where the second area is located in the first area; and determining parking location information of the vehicle based on the information about the first area and the information about the second area (S2930). According to the method, environment information can be obtained based on a location of the vehicle, and then a parking location of the vehicle is determined. In this way, a user can learn of the parking location of the vehicle insensibly, so that vehicle search experience of the user is improved.

## Description

This application claims priority to Chinese Patent Application No. 202210769908.3, filed with the China National Intellectual Property Administration on July 1, 2022 and entitled "PARKING INTERACTION METHOD AND APPARATUS, AND SYSTEM", which is incorporated herein by reference in its entirety.

### TECHNICAL FIELD

Embodiments of this application relate to the field of vehicle technologies, and more specifically, to a parking interaction method and apparatus, and a system.

### BACKGROUND

Currently, with rapid development of intelligent vehicles, people have an increasingly strong demand for finding a vehicle in a large basement parking lot. However, because terrain of a large parking lot is complex, and global positioning system (global positioning system, GPS) signal strength in some basement parking lots is weak, and a location of a vehicle cannot be accurately located, and a user usually can only manually take a photo for recording to assist in vehicle finding. However, the user often forgets to take a photo, and consequently the user cannot quickly and accurately find the parking location of the vehicle.

### SUMMARY

Embodiments of this application provide a parking interaction method and apparatus, and a system. When a vehicle enters a parking area, information about the parking area is obtained, and a parking location of the vehicle is determined. This helps improve vehicle search experience of a user.

According to a first aspect, a parking interaction method is provided. The method includes: obtaining information about a first area when a vehicle enters the first area; obtaining information about a second area when the vehicle enters the second area, where the second area is located in the first area; and determining parking location information of the vehicle based on the information about the first area and the information about the second area.

For example, a parking lot may have a plurality of levels of area division, to facilitate management. For example, an indoor parking lot may include a plurality of parking floors (for example, a basement level 1, a basement level 2, a "B1 floor", and a third floor). The parking floor may include one or more parking zones (for example, "Area A", "Area B", "B-17", "H-10-2", and "Area xx"). A same parking floor or a same parking zone may include a plurality of parking spaces (for example, "A106", "W237", and "0145"). Similarly, an outdoor parking lot may also include a plurality of parking zones and a plurality of parking spaces. For brevity, details are not described herein again.

For example, the information about the first area may be environment information of the first area. For example, image information of the first area is captured based on a vehicle-mounted sensor on the vehicle, and the image information may be image information of the first area through which the vehicle passes in a traveling process. For example, after the vehicle enters the parking lot, until the vehicle completes parking in a parking space, in other words, in a process from entering the parking lot to search for a parking space by the vehicle to completing parking (also referred to as parking) by the vehicle, the vehicle may pass through one or more parking floors and/or one or more parking zones. In this process, the vehicle may obtain, based on a location of the vehicle, information about a parking floor on which and/or a parking zone in which the vehicle is located. For example, in the process from entering the parking lot by the vehicle to completing parking by the vehicle, for example, the vehicle may obtain a vehicle pose change by using the vehicle-mounted sensor, for example, a pitch angle of the vehicle or a location change of the vehicle, and then determine, based on a pitch angle change of the vehicle, a relative change of a floor on which the vehicle is located (for example, may determine, based on the pitch angle of the vehicle, a quantity of inter-floor passages through which the vehicle passes in an uphill phase and a downhill phase, and determine the relative change of the floor on which the vehicle is located, to determine a floor location at which the vehicle is currently located; or may determine the relative change of the floor based on the pitch angle of the vehicle, a traveling route of the vehicle, and an uphill height of the vehicle, to determine a floor location at which the vehicle is currently located). For another example, the vehicle may determine, based on sign information of an inter-floor passage through which the vehicle passes, a floor on which the vehicle is located (for example, the vehicle may obtain, by using an image sensor, image information around the vehicle in a traveling process, for example, the vehicle may obtain image information of the inter-floor passage through which the vehicle passes, and determine, by recognizing a floor sign hung or posted in the passage, the floor onto which the vehicle is to travel, to determine a floor location at which the vehicle is located; or may determine a relative change of a floor on which the vehicle is located based on a quantity of intersections between floors and the inter-floor passage through which the vehicle passes). When the vehicle travels onto a new floor, information about the floor (for example, "You are currently on the basement level 2") may be displayed on an interaction apparatus like a central display screen of the vehicle. After traveling into a parking space, the vehicle may determine information about a latest recognized floor as information about the floor on which a parking location is located. For another example, in the process from entering the parking lot by the vehicle to completing parking by the vehicle, the vehicle may pass through a plurality of parking zones, and may display, on an interaction apparatus like a central display screen, information about a parking zone (for example, "You are currently in the area A" or "You have entered the area B") in which the vehicle is currently located. After traveling into a parking space, the vehicle may determine information about a latest recognized zone as a parking zone in which a parking location is located. Alternatively, when the vehicle travels into a parking space, or determines that the vehicle is to travel into a parking space, the vehicle obtains information about a zone in which the parking space is located. For another example, when there is no sign for a parking space for parking the vehicle (which may also be referred to as a parking space), a parking location of the vehicle may be determined based on the information about the parking floor and the information about the parking zone of the vehicle. Similarly, the information displayed on the interaction apparatus may alternatively be broadcast by a vehicle-mounted speaker in a voice manner. For brevity, examples are not listed one by one herein again.

In this embodiment of this application, when traveling to different locations, the vehicle obtains information about an area based on the area in which the vehicle is currently located, to determine the parking location information of the vehicle, for example, parking space information, floor information, and zone information. According to the foregoing method, vehicle search experience of a user can be improved, and the user can learn of the parking location of the vehicle without taking a photo of a parking area by using a terminal device.

With reference to the first aspect, in some implementations of the first aspect, the first area is the parking floor and/or the parking zone in the parking lot in which the vehicle is located, the second area may include a parking space for parking the vehicle, and the parking location information may include information about the parking space for parking the vehicle, and information about the parking floor and/or information about the parking zone.

For example, when the vehicle is parked in an outdoor parking lot, and the outdoor parking lot may include a plurality of parking zones, the parking location information may include the information about the parking space and the information about the parking zone. When the vehicle is parked in an indoor parking lot, the parking location information may include the information about the parking floor and the information about the parking space. When the floor includes a plurality of parking zones, the parking location information may alternatively include the information about the parking zone, the information about the parking space, and the like.

In this embodiment of this application, effective vehicle search information can be fed back to the user based on floor and area division of the parking lot, to help improve vehicle search efficiency of the user.

With reference to the first aspect, in some implementations of the first aspect, the obtaining information about a second area when the vehicle enters the second area may include: obtaining a first instruction, where the first instruction indicates that the user of the vehicle has a parking intention; and obtaining the information about the second area based on the first instruction.

For example, the first instruction may be one or more of instructions such as a voice instruction, a touch instruction, a button instruction, and a gesture instruction. For example, whether the user has the parking intention may be determined based on a voice instruction of the user. For example, the user may perform voice interaction with the vehicle. In the voice interaction, the user may deliver an instruction like "I want to park", "Automated parking", and "Drive into a parking space". The vehicle having an assisted parking function may control, based on a detected idle target parking space, the vehicle to travel into the idle target parking space, and obtain information about the target parking space (for example, a sign or an image of the target parking space). After receiving the voice instruction, the vehicle determines that the user has the parking intention, and obtains the information about the second area based on the voice instruction. For another example, the information about the target parking space may be obtained based on an indication of the user for the parking space (for example, the parking space indicated by the user by using a physical or virtual button, or the parking space indicated by the user by using a voice instruction). For another example, the user may indicate, by using a mid-air gesture, to trigger an automated parking function. After receiving the mid-air gesture, the vehicle determines that the user has the parking intention, and obtains the information about the second area based on the mid-air gesture.

In this embodiment of this application, the information about the second area is obtained based on the parking intention of the user, so that overheads used by the vehicle to obtain the information about the second area can be reduced, and invalid information in obtained data can be reduced. This improves accuracy of the obtained information about the second area.

With reference to the first aspect, in some implementations of the first aspect, the obtaining information about a second area when the vehicle enters the second area may include: obtaining the information about the second area when it is detected that the vehicle enters a parking state.

For example, whether the vehicle enters the parking state may be determined based on a control signal of the vehicle. For example, when the vehicle is located in the parking lot, if it is detected that a gear of the vehicle is adjusted to a reverse gear, it may be considered that the vehicle enters the parking state, and then information about an idle target parking space around the vehicle may be obtained. For another example, when the vehicle is located in the parking lot, if it is detected that there is an acting force on a brake pedal or an accelerator pedal and a vehicle speed is controlled to fall within a preset vehicle speed (for example, 3 km/h), it may be considered that the vehicle enters the parking state, then information about an idle target parking space around the vehicle may be obtained, and information about a parking zone in which the vehicle is located may also be obtained. For another example, a parking function of the vehicle may alternatively be implemented by an autonomous driving system or an advanced assisted driving system. After it is detected that the vehicle enables automated parking and assisted parking (or referred to as automated parking and assisted parking) functions, or after it is detected that the user indicates to enable automated parking and assisted parking functions, it is considered that the vehicle enters the parking state, and then information about an idle target parking space around the vehicle may be obtained. For another example, when it is detected that the vehicle is in the parking state, a vehicle-mounted sensor may be controlled to adjust a range of the vehicle-mounted sensor, to capture information about the target parking space. For example, the vehicle-mounted sensor may have an adjustable support, and a sensing range of the vehicle-mounted sensor may be adjusted by adjusting a posture of the support. The control signal of the vehicle may be a control signal of the vehicle, for example, a controller area network (controller area network, CAN) signal or an Ethernet signal.

The vehicle may be located in the second area when completing parking. However, when the vehicle completes parking, due to a limitation of a vehicle posture, obtaining of the information about the second area may be affected, or even the information about the second area cannot be obtained. In this embodiment of this application, when it is detected that the vehicle enters the parking state, the vehicle may obtain the information about the second area in advance, or may start to obtain the information about the second area. This can avoid impact of a vehicle pose on obtaining the information about the second area, and improve accuracy of the obtained information about the second area.

With reference to the first aspect, in some implementations of the first aspect, the method may further include: obtaining parking environment information in a process from entering the parking state by the vehicle to completing parking by the vehicle; and the obtaining information about a second area may include: obtaining the information about the second area based on the parking environment information.

For example, in the process from determining that the vehicle enters the parking state to completing parking by the vehicle, the information about the second area may be obtained based on environment information captured by a sensing sensor on the vehicle. For example, when it is detected that the vehicle is in the parking state, for example, when it is detected that a gear of the vehicle is adjusted to a reverse gear, the vehicle may be partially or completely located outside the parking space. When reversing into the parking space, the vehicle may determine the target parking space into which the vehicle is to travel based on a proportion of the parking space in an image captured by a rear-view camera on the vehicle, an expected traveling route of the vehicle, and the like, and determine information like a sign and an image of the target parking space based on the environment information captured by the sensor on the vehicle. For another example, when the vehicle is partially or completely located in the parking space, information about the parking space may not be obtained due to a mounting location of a camera or even after an angle of a camera is adjusted. In this case, when it is detected that the vehicle is in the parking state, an around view monitor system of the vehicle may be controlled to capture ambient environment information. Before the vehicle completes parking, an image of the parking space in which the vehicle is located when the vehicle is parked may be obtained by performing concatenation and fusion based on the environment information captured by the around view monitor system, for example, based on images captured by the around view monitor system at a plurality of moments in a parking process. That is, the vehicle in a parking posture affects obtaining of the information about the parking space in which the vehicle is located by the vehicle-mounted sensor. In this case, the information about the parking space may be obtained by using the ambient environment information at the plurality of moments before parking is completed, for example, by performing concatenation and fusion or the like on the images.

Because a location of the sensing sensor on the vehicle is relatively fixed, obtaining of the information about the second area based on environment information captured by the sensor at a specific moment is limited by a vehicle pose. Therefore, in this embodiment of this application, the environment information in the parking process is obtained, so that impact of the vehicle pose on obtaining the information about the second area can be reduced.

With reference to the first aspect, in some implementations of the first aspect, the method may further include: sending a first prompt message, where the first prompt message includes the parking location information of the vehicle.

For example, after the parking location information is determined, the parking location information may be displayed on an interaction apparatus like a central display screen of the vehicle. For example, after the vehicle completes parking, and before the vehicle is powered off, the interaction apparatus like the central display screen of the vehicle may be controlled to display information about a parking location of the vehicle (for example, "Your vehicle is currently located in the area A106 on the basement level 1"). That is, when an apparatus like a vehicle-mounted chip, a vehicle-mounted apparatus (for example, a cockpit domain controller or a controller), or an in-vehicle infotainment system implements the method, a vehicle-mounted communication apparatus like a telematics box (telematics box, T-box) may be enabled to send the first prompt message. For example, the first prompt message is sent to a bound terminal device, or the first prompt message is sent to the terminal of the target user for sharing. The information about the parking location may be further displayed on the interaction apparatus like the central display screen of the vehicle.

For example, the terminal device like a mobile phone may obtain the first prompt message. For example, when an apparatus like the vehicle, a vehicle-mounted chip, a vehicle-mounted apparatus, or an in-vehicle infotainment system implements the method, the first prompt message may be sent, and the terminal device like the mobile phone associated with the vehicle may obtain the first prompt message through Bluetooth or a wireless network (for example, a cellular network or Wi-Fi). In this way, the parking location of the vehicle can be learned of.

In this embodiment of this application, information exchange is performed between the vehicle and the terminal, so that the parking location of the vehicle can be provided for the user in time. This facilitates a subsequent vehicle search operation, and improves vehicle search experience.

With reference to the first aspect, in some implementations of the first aspect, the sending a first prompt message includes: sending the first prompt message when it is detected that the vehicle completes parking.

For example, when it is determined that the vehicle completes parking, the first prompt message may be sent. Correspondingly, the terminal device like the mobile phone may obtain the first prompt message, to learn of the parking location of the vehicle.

In this embodiment of this application, when the vehicle completes parking, the first prompt message is sent, and a message indicating the parking location may be automatically sent. This can reduce a request operation of the user for the parking location, and improve user experience. The terminal device like the mobile phone may display the parking location information of the vehicle when receiving the first prompt message, or may display the parking location information of the vehicle when the user opens an application, or may display the parking location information of the vehicle on a specific interface of the mobile phone (for example, a leftmost screen or a smart assistant page of the mobile phone). This improves user experience of the terminal user.

With reference to the first aspect, in some implementations of the first aspect, the method may further include: receiving parking location request information, where the parking location request information is used to request the parking location of the vehicle; and the sending a first prompt message may include: sending the first prompt message based on the parking location request information.

For example, the terminal device like the mobile phone may send the parking location request information. Correspondingly, the vehicle may obtain the parking location request information, and may send the first prompt message based on the parking location request information. Correspondingly, the terminal device like the mobile phone may obtain the first prompt message. For example, in a process in which the user searches for the vehicle, the terminal device like the mobile phone may send the parking location request information to communicate with the vehicle, to learn of the parking location of the vehicle. For another example, a server may trigger the parking location request information to obtain the parking location information of the current vehicle, and store the parking location information in a cloud. When the user has a vehicle search requirement, the parking location information of the vehicle is delivered to the terminal device like the mobile phone of the user.

In this embodiment of this application, the first prompt message may be sent based on a request of the user for the parking location, and the parking location of the vehicle may be indicated based on an actual requirement of the user, to implement interaction with the user.

In some possible implementations, the parking location request information may carry identity information of a requester, and the sending the first prompt message based on the parking location request information may include: sending the first prompt message based on the identity information of the requester.

For example, the parking location request information may include the identity information of the requester. In this way, permission of the user may be determined based on the identity information of the requester. For example, when the user is an unauthorized user, the first prompt message may not be sent. For another example, when the user is an authorized user, for example, when it is determined that the requester is a vehicle owner, the first prompt message may include an image and a sign of the parking space, an image and a sign of the parking zone, and an image and a sign of the parking floor. For another example, when it is determined that the requester is a temporarily authorized user (for example, a vehicle owner authorizes a temporarily authorized user like a friend or a service person of the vehicle owner), the first prompt message may include a sign of the parking space, an image and a sign of the parking zone, and the like. To facilitate vehicle search by the requester, for example, the first prompt message may also include license plate information of the vehicle and the like. In other words, the first prompt message sent based on an identity and the permission of the requester may include different content, and the content included in the first prompt message may be preset, or may be content requested by the requester.

In this embodiment of this application, the first prompt message is determined based on the identity information of the user. In this way, access of the unauthorized user can be avoided, and the parking location information that can be obtained by the requester can be determined based on the permission and the request of the requester. This helps ensure security of the vehicle.

With reference to the first aspect, in some implementations of the first aspect, the method may further include: obtaining image information of the second area at a plurality of moments; and determining a plurality of pieces of sign information based on the image information of the second area at the plurality of moments; and the obtaining information about a second area includes: obtaining a sign of the second area based on the plurality of pieces of sign information, where the information about the second area includes the sign of the second area.

For example, in a scenario in which the vehicle enters the parking state, obtains the first instruction, or the like,
in this embodiment of this application, a plurality of signs may be determined based on images at the plurality of moments. This can avoid defaulting sign information of an image at a single moment, and improve integrity of the determined information about the area.

With reference to the first aspect, in some implementations of the first aspect, the plurality of pieces of sign information include at least two first incomplete signs, the first incomplete sign includes a part of the sign of the second area, and the obtaining a sign of the second area based on the plurality of pieces of sign information includes: concatenating and fusing a plurality of first incomplete signs in the at least two first incomplete signs, to obtain the sign of the second area.

For example, the sign of the second area may be determined by concatenating and fusing the incomplete signs. For example, an obtained image of the second area depends on a location and a posture of the vehicle. In some scenarios, the sign information obtained by using the image may include only a part of the sign of the second area. For example, the sign of the second area is "A106". At different moments, the obtained image may include only a part of the sign (for example, "A10" or "106"). Therefore, the complete sign of the second area may not be obtained based on the image of the second area at a specific moment. In this case, the sign of the second area may be obtained by performing matching, concatenation, fusion, and the like on the incomplete signs of the second area based on the images at the plurality of moments. Similarly, a sign of the first area may also be determined by performing concatenation and fusion on the incomplete signs.

In this embodiment of this application, the incomplete signs are concatenated and fused, so that misjudgment of the information about the second area caused by the incomplete signs can be avoided. This can improve accuracy of the information about the second area.

With reference to the first aspect, in some implementations of the first aspect, the obtaining a sign of the second area based on the plurality of pieces of sign information may include: obtaining the sign of the second area based on confidence of at least one of the plurality of pieces of sign information.

For example, the sign information is obtained based on the image information of the second area, and the sign of the second area may be determined based on the confidence of the sign information. For example, it may be considered that, in the plurality of signs, confidence of a pure-symbol sign (for example, →, -, ←, or %) or a pure-text sign (for example, Personal parking space or Fire passage) is low. In this case, the sign of the second area may be obtained through screening from the plurality of pieces of sign information based on the confidence of the sign information. For another example, the confidence of the sign information may be determined based on a matching degree between each of tracks of the sign information at the plurality of moments and a vehicle traveling track. For another example, the sign of the second area may be obtained through screening from the plurality of pieces of sign information based on the confidence of the plurality of pieces of sign information obtained by concatenating and fusing the incomplete signs.

In this embodiment of this application, the sign of the second area is obtained by determining the confidence of the sign information, so that accuracy of the determined sign of the second area can be improved.

With reference to the first aspect, in some implementations of the first aspect, the method may further include: obtaining a first trigger condition when the vehicle enters the first area, where the first trigger condition may indicate a condition that needs to be met for obtaining the information about the first area; and the obtaining information about a first area may include: obtaining the information about the first area when the first trigger condition is met.

For example, the first trigger condition may be obtained when the vehicle enters the first area, and the information about the first area is obtained when the first trigger condition is met. For example, for an indoor parking lot, after the vehicle travels into the parking lot, a floor on which the vehicle is located may be recorded in real time. For example, the floor on which the vehicle is located may be recorded in real time based on a pitch angle of the vehicle. In other words, a trigger condition for the floor on which the vehicle is located may be: determining that the vehicle is located in a parking lot area. For example, it may be determined, based on a detected parking lot barrier gate, that the vehicle is located in the parking lot area. For another example, floor recognition may be triggered when it is determined that the vehicle is located in the inter-floor passage or travels out of the inter-floor passage. For another example, the first trigger condition may include: when it is detected that the vehicle is located in the parking lot area (for example, whether the vehicle is located in the parking lot area is determined based on first status information; or when a parking lot marker like a barrier gate or a parking lot column is detected, it is determined that the vehicle is located in the parking lot area), when it is detected that a gear of the vehicle is adjusted to a reverse gear, when it is detected that a traveling speed of the vehicle is less than or equal to a preset threshold, when a voice instruction of the user with the parking intention is detected, when an indication of the user for the target parking space is detected, when it is detected that the vehicle enters the parking state, or the like, obtaining information about a floor on which the vehicle is currently located. This can avoid interference from redundant information, and improve accuracy of the method. For another example, similarly, after the vehicle travels into the parking lot, a parking zone through which the vehicle passes may be detected in real time. When it is detected that the vehicle enters the parking state or the like, information about a parking zone in which the vehicle is currently located may be obtained. Alternatively, when the foregoing condition is met, the sensing sensor is controlled to be started, and ambient environment information is captured. In this way, information about a parking zone in which the vehicle is located at the moment can be determined based on the ambient environment information.

In this embodiment of this application, the first trigger condition is obtained, so that resources for obtaining the information about the first area can be saved, interference from redundant information can be reduced, and accuracy of the determined parking location information can be improved.

With reference to the first aspect, in some implementations of the first aspect, the method further includes: obtaining ambient environment information of the vehicle when it is determined that the vehicle enters the parking lot, where the ambient environment information is used to obtain the information about the first area and/or the information about the second area.

For example, when a parking lot marker is detected, it may be determined that the vehicle is located in the parking lot. For example, a first status parameter may be obtained, and parking lot marker detection is performed based on the first status parameter. The first status parameter may be a combination of parameters such as a distance between the vehicle and an entrance of the parking lot, a vehicle speed, and signal quality of a global navigation satellite system signal; or the first status parameter may be a parameter other than parameters such as a distance between the vehicle and an entrance of the parking lot, a vehicle speed, and signal quality of a global navigation satellite system (global navigation satellite system, GNSS) signal. For example, when the first status parameter is less than a first threshold, it may be considered that the vehicle may be located in the parking lot area. In this way, parking lot marker detection may be performed. When the parking lot marker is detected, it may be determined that the vehicle enters the parking lot. For example, the parking lot marker may be a parking lot barrier gate, a parking space, a parking lot column, a sign hung or posted in the parking lot, or the like.

In this embodiment of this application, when it is determined that the vehicle enters the parking lot, the ambient environment information used to determine marker information is obtained. This can ensure integrity of the obtained information about the area, and reduce a deviation of the parking location information caused by inappropriate setting of the trigger condition. In addition, false triggering of the method outside the parking lot can be avoided.

With reference to the first aspect, in some implementations of the first aspect, the method further includes: detecting a marker in the first area based on data captured by a sensor on the vehicle; and the obtaining information about a first area may include: obtaining the information about the first area based on the marker in the first area.

For example, the marker in the first area may be a parking lot column, an inner wall of the parking lot, a sign, a hung or posted sign, or the like. For example, the parking lot column may be detected based on data captured by a camera sensor and a radar sensor. When the parking lot column is detected, a sign of the parking zone may be obtained based on an image of the parking lot column.

There may be a plurality of types of sign information in an environment of the parking lot, and the environment is complex. Therefore, accuracy may be low when information like the sign of the first area is obtained through screening based on image information of the parking lot. In this embodiment of this application, marker detection is performed, and the information about the first area is obtained based on the marker, so that a range of recognizing the information about the first area can be narrowed. This can reduce interference from invalid information, and improve accuracy of the obtained information about the first area.

With reference to the first aspect, in some implementations of the first aspect, the obtaining the information about the first area based on the marker in the first area may include: determining one or more pieces of marker information based on image information of the marker in the first area; and obtaining the information about the first area based on confidence of at least one of the one or more pieces of marker information.

For example, the information about the first area may be obtained based on the confidence of the marker information. For example, the marker in the first area is a parking lot column. A plurality of pieces of marker information, for example, "Safety exit", "Area A", "←", "No smoking", and "Basement level 1", may be obtained based on the parking lot column. If it may be considered that confidence of a pure-word sign ("Safety exit", "No smoking", or the like) and a pure-symbol sign ("←" or the like) is low, it may be determined that "Area A" is the information about the parking zone. For another example, the confidence of the marker information may be determined based on whether the plurality of pieces of marker information include an area keyword. For example, for the parking zone, it may be considered that confidence of a sign including a keyword "Area" is high. For a floor, it may be considered that confidence of a sign including a keyword "Floor" is high. In this case, the information about the parking zone and the parking floor may be determined.

In this embodiment of this application, the information about the first area is obtained based on the confidence of the marker information, so that accuracy of the determined information about the first area can be improved.

With reference to the first aspect, in some implementations of the first aspect, the vehicle may include a vehicle-mounted display apparatus. The method may further include: when the information about the first area is obtained, controlling the vehicle-mounted display apparatus to display the information about the first area; and/or when the information about the second area is obtained, controlling the vehicle-mounted display apparatus to display the information about the second area.

For example, images, signs, and the like of the first area and the second area may be displayed on the vehicle-mounted display apparatus. For example, when the information (for example, "Basement level 1") about the first area in which the vehicle is located is obtained, the information (for example, "You are currently located on the basement level 1" or "You have entered the basement level 1") about the first area may be displayed in a display area. For another example, when the information about the first area is obtained by using the marker, the vehicle-mounted display apparatus may be controlled to display an image of the marker. For example, when a sign of the floor and a sign of the parking area are obtained based on an image of the parking lot column, the vehicle-mounted display apparatus may be controlled to display the image of the column, or to display a part that includes the sign of the floor and the sign of the parking zone and that is in the image of the column. Alternatively, a highlighting mark may be added when the image of the column is displayed, to highlight the sign of the floor and the sign of the parking zone on the display interface. For another example, when information about the target parking space is obtained, the vehicle-mounted display apparatus may be controlled to display an image of the target parking space. When the displayed image includes a plurality of parking spaces including the target parking space, for example, the parking space may be highlighted by using a line frame or the like. For another example, when a sign of the target parking space is obtained, the vehicle-mounted display apparatus may be controlled to display the sign of the parking space, for example, display a part that includes the sign and that is in an image of the parking space. For another example, when the image of the parking space is displayed, the sign of the parking space is prompted in a manner of highlighting the mark.

With reference to the first aspect, in some implementations of the first aspect, the first area includes the parking floor. The method further includes: obtaining pitch angle information of the vehicle; and the obtaining information about a first area may include: determining the information about the parking floor based on the pitch angle information of the vehicle.

For example, a quantity of inter-floor passages through which the vehicle passes in an uphill phase and a downhill phase may be determined based on the pitch angle information of the vehicle, to determine a floor location at which the vehicle is currently located. For example, when a pitch angle of the vehicle is greater than or equal to a preset threshold (for example, 13 degrees or 15 degrees), it may be considered that the vehicle is in an uphill phase. For example, an inter-floor passage through which the vehicle passes in the uphill phase may be denoted as +1, and an inter-floor passage through which the vehicle passes in a downhill phase is denoted as -1. In this case, the floor location at which the vehicle is currently located may be determined based on the quantity of inter-floor passages through which the vehicle passes in the uphill and downhill phases. When the vehicle enters the parking state, the floor location at which the vehicle is currently located may be determined as the parking floor, to determine the information about the parking floor. For another example, whether the vehicle is located in the inter-floor passage may be determined based on the pitch angle information of the vehicle, and an entrance and exit of the inter-floor passage may be recognized based on the obtained ambient environment information. In this way, the quantity of inter-floor passages through which the vehicle passes may be obtained more accurately, and then the floor location at which the vehicle is currently located may be determined.

In this embodiment of this application, the parking floor is determined based on the pitch angle information of the vehicle. Because obtaining of the pitch angle information may not depend on a radar sensor or a camera sensor, the method is applicable to a vehicle with a small quantity of sensing sensors and a vehicle with low configuration. In addition, resource consumption of the radar sensor, the camera sensor, and the like in a process of determining the parking location can be reduced. For an intelligent vehicle, a new energy vehicle, and the like, power consumption of the vehicle can be reduced, and an endurance mileage of the vehicle can be increased.

With reference to the first aspect, in some implementations of the first aspect, the first area includes the parking floor, and the parking floor is connected to an inter-floor passage in a parking lot. The method may further include: obtaining a passage guidance sign when it is determined that the vehicle passes through the inter-floor passage, where the passage guidance sign includes information about a floor connected to the inter-floor passage; and the obtaining information about a first area may include: obtaining the information about the parking floor based on the passage guidance sign.

For example, when it is determined that the vehicle is located in the inter-floor passage, the passage guidance sign may be obtained based on image information of the inter-floor passage. In this way, the information about the floor onto which the vehicle is to travel may be determined based on the passage guidance sign. For example, when it is detected that the vehicle passes through the inter-floor passage, the image information of the inter-floor passage may be obtained, and the sign information hung or posted in the passage may be obtained by recognizing the image information, for example, "<<<To the basement level 1<<<", "<<<xxx floor<<<", "←XXX floor", "<<<", or "←". The passage guidance sign may be obtained based on the confidence of the sign information. For example, it may be considered that confidence of a sign including only a symbol is low, and it may be considered that confidence of a sign including a keyword "Floor" is high. In this case, the passage guidance sign may be obtained, and the information about the floor onto which the vehicle is to travel may be determined. Further, when the vehicle travels out of the inter-floor passage and travels onto a new floor, a floor location at which the vehicle is currently located may be determined, and then the information about the parking floor may be determined.

When the vehicle travels onto the parking floor, because space of the floor is large, and there may be a plurality of types of signs, it may be difficult to accurately recognize a sign of the parking floor. In this embodiment of this application, when it is detected that the vehicle is located in the inter-floor passage, the information about the floor is obtained in advance based on the passage guidance sign. This can reduce difficulty in recognizing the sign of the parking floor, and also avoid impact of a building structure of the parking lot on the parking floor, to improve accuracy of determining the parking floor.

According to a second aspect, a parking interaction apparatus is provided. The apparatus may include: an obtaining module, configured to: obtain information about a first area when a vehicle enters the first area; and obtain information about a second area when the vehicle enters the second area, where the second area is located in the first area; and a processing module, configured to determine parking location information of the vehicle based on the information about the first area and the information about the second area.

With reference to the second aspect, in some implementations of the second aspect, the first area may be a parking floor and/or a parking zone in a parking lot; the second area may include a parking space for parking the vehicle; and the parking location information includes information about the parking space for parking the vehicle, and information about the parking floor and/or information about the parking zone.

With reference to the second aspect, in some implementations of the second aspect, the obtaining module may be specifically configured to: obtain a first instruction, where the first instruction indicates that a user of the vehicle has a parking intention; and obtain the information about the second area based on the first instruction.

With reference to the second aspect, in some implementations of the second aspect, the obtaining module may be specifically configured to obtain the information about the second area when it is detected that the vehicle enters a parking state.

With reference to the second aspect, in some implementations of the second aspect, the obtaining module may be further configured to obtain parking environment information in a process from entering the parking state by the vehicle to completing parking by the vehicle. The obtaining module may be specifically configured to obtain the information about the second area based on the parking environment information.

With reference to the second aspect, in some implementations of the second aspect, the apparatus may further include: a sending module, configured to send a first prompt message, where the first prompt message may include the parking location information of the vehicle.

With reference to the second aspect, in some implementations of the second aspect, the sending module may be specifically configured to send the first prompt message when it is detected that the vehicle completes parking.

With reference to the second aspect, in some implementations of the second aspect, the apparatus may further include: a receiving module, configured to receive parking location request information, where the parking location request information may be used to request the parking location information of the vehicle. The sending module may be specifically configured to send the first prompt message based on the parking location request information.

With reference to the second aspect, in some implementations of the second aspect, the parking location request information carries identity information of a requester, and the sending module may be specifically configured to send the first prompt message based on the identity information of the requester.

With reference to the second aspect, in some implementations of the second aspect, the obtaining module may be further configured to obtain image information of the second area at a plurality of moments. The processing module may be further configured to determine a plurality of pieces of sign information based on the image information of the second area at the plurality of moments. The obtaining module may be specifically configured to obtain a sign of the second area based on the plurality of pieces of sign information, where the information about the second area includes the sign of the second area.

With reference to the second aspect, in some implementations of the second aspect, the plurality of pieces of sign information may include at least two first incomplete signs, and the first incomplete sign includes a part of the sign of the second area. The obtaining module may be specifically configured to concatenate and fuse a plurality of first incomplete signs in the at least two first incomplete signs, to obtain the sign of the second area.

With reference to the second aspect, in some implementations of the second aspect, the obtaining module may be specifically configured to obtain the sign of the second area based on confidence of at least one of the plurality of pieces of sign information.

With reference to the second aspect, in some implementations of the second aspect, the obtaining module may be further configured to obtain a first trigger condition when the vehicle enters the first area, where the first trigger condition indicates a condition that needs to be met for obtaining the information about the first area. The obtaining module may be specifically configured to obtain the information about the first area when the first trigger condition is met.

With reference to the second aspect, in some implementations of the second aspect, the obtaining module may be further configured to obtain ambient environment information of the vehicle when it is determined that the vehicle enters the parking lot, where the ambient environment information is used to obtain the information about the first area and/or the information about the second area.

With reference to the second aspect, in some implementations of the second aspect, the processing module may be further configured to detect a marker in the first area based on data captured by a sensor on the vehicle. The obtaining module may be specifically configured to obtain the information about the first area based on the marker in the first area.

With reference to the second aspect, in some implementations of the second aspect, the obtaining module may be specifically configured to: determine one or more pieces of marker information based on image information of the marker in the first area; and obtain the information about the first area based on confidence of at least one of the one or more pieces of marker information.

With reference to the second aspect, in some implementations of the second aspect, the vehicle may include a vehicle-mounted display apparatus. The processing module may be further configured to: when the information about the first area is obtained, control the vehicle-mounted display apparatus to display the information about the first area; and/or when the information about the second area is obtained, control the vehicle-mounted display apparatus to display the information about the second area.

With reference to the second aspect, in some implementations of the second aspect, the first area includes the parking floor. The obtaining module may be further configured to obtain pitch angle information of the vehicle. The obtaining module may be specifically configured to determine the information about the parking floor based on the pitch angle information of the vehicle.

With reference to the second aspect, in some implementations of the second aspect, the first area may include the parking floor, and the parking floor may be connected to an inter-floor passage in the parking lot. The obtaining module may be further configured to obtain a passage guidance sign when it is determined that the vehicle is located in the inter-floor passage, where the passage guidance sign includes information about a floor connected to the inter-floor passage. The obtaining module may be specifically configured to obtain the information about the parking floor based on the passage guidance sign.

According to a third aspect, a method for recognizing a parking area is provided. The method includes: obtaining ambient environment data, where the ambient environment data is used to detect a marker in the parking area; obtaining an image of the marker when the marker is detected; and determining the parking area based on the image of the marker.

For example, the parking area may be a parking zone like "Area A", "A-17", or "W-2-6", and the marker in the parking area may include an object that does not move in the parking area. For example, the marker may be an inner wall of a parking lot, a column of the parking lot, a sign, or the like. It should be understood that the foregoing description of the marker in the parking area is merely an example. This is not limited in embodiments of this application.

In this embodiment of this application, when the marker in the parking area is detected, the parking area is determined by obtaining the image of the marker in the parking area. This can reduce impact of irrelevant information on recognizing the parking area, to improve accuracy of determining the parking area, and can also reduce overheads in a process of recognizing the parking area. When a sign of the parking area cannot be recognized, the parking area may be determined by using the marker. This helps a user learn of the parking area in which a vehicle is located without taking a photo of the parking area by using a terminal device like a mobile phone, to help the user search for the vehicle.

With reference to the third aspect, in some implementations of the third aspect, the parking area includes a first parking space, and the first parking space is a parking space in which the vehicle is located when the vehicle is in a parking pose. The method further includes: obtaining a first parking space image, where the first parking space image includes the first parking space, and the first parking space is in an idle state; and determining a sign of the first parking space based on the first parking space image, where the sign of the first parking space includes an area keyword; and the determining the parking area based on the image of the marker includes: determining the parking area based on the image of the marker and the area keyword.

For example, the first parking space image may include a part or all of the first parking space. Before the vehicle is in the parking pose, the vehicle may not be located in the first parking space. In this case, the first parking space may be a parking space into which the vehicle expects to travel, or a parking space into which the vehicle is to travel subsequently. Therefore, the first parking space may also be referred to as a target parking space. For example, the first parking space image may include three parking spaces, including all areas of one parking space and some areas of two parking spaces, and the three parking spaces include the target parking space. For another example, the first parking space image may include a partial area of one parking space, and the parking space is the target parking space. It should be understood that the foregoing description of the first parking space image is merely an example. This is not limited in embodiments of this application.

For example, the area keyword may be a keyword included in both the sign of the parking space and the sign of the parking area. For example, if the vehicle is located in an area A in the parking area, and the sign of the first parking space is A104, it may be considered that the area keyword is A. For another example, if the sign of the first parking space is W104, and a sign of a parking space adjacent to the first parking space is W103, because the two signs include a same keyword W, the keyword W may be used as the area keyword. It should be understood that the foregoing description of the area keyword is merely an example. This is not limited in embodiments of this application.

In this embodiment of this application, the sign of the first parking space is used, and when the sign includes the area keyword, accuracy of recognizing the sign of the parking area can be improved based on the area keyword and the image of the marker in the parking area. This can improve accuracy of recognizing the parking area.

With reference to the third aspect, in some implementations of the third aspect, the method further includes: obtaining parking space indication information, where the parking space indication information indicates an area in which the first parking space is located; and the determining a sign of the first parking space based on the first parking space image includes: determining the sign of the first parking space based on the parking space indication information and the first parking space image.

For example, the first parking space may be determined based on the parking space indication information. For example, when an assisted parking function is used, the user may interact with the vehicle to indicate the parking space into which the vehicle is to travel, and then the parking space indication information may be obtained. For another example, when a function like an automated parking function is used, the first parking space may be determined based on a recognition result of the parking function for the first parking space. It should be understood that the foregoing description of the parking space indication information is merely an example. This is not limited in embodiments of this application.

In this embodiment of this application, the parking space indication information is obtained, so that accuracy of the determined first parking space can be improved. Therefore, accuracy of the determined sign of the first parking space can be improved, and accuracy of recognizing the parking area can be further improved. In addition, because the parking space indication information may indicate the area in which the first parking space is located, overheads in a process of determining the sign of the first parking space can be reduced.

With reference to the third aspect, in some implementations of the third aspect, the method further includes: determining a first proportion based on the first parking space image, where the first proportion indicates a proportion of the first parking space in the first parking space image; and the determining a sign of the first parking space based on the first parking space image includes: determining the sign of the first parking space based on the first parking space image and the first proportion.

In this embodiment of this application, because the first parking space image includes at least one parking space, a part of the first parking space in the image may be determined by determining the proportion of the first parking space in the first parking space image. This can improve accuracy of recognizing the first parking space.

With reference to the third aspect, in some implementations of the third aspect, the determining a sign of the first parking space based on the first parking space image includes: determining one or more parking space information texts based on the first parking space image; and determining the sign of the first parking space based on confidence of at least one of the one or more parking space information texts.

For example, one or more texts may be determined based on the first parking space image. For ease of explanation and description, the text may also be referred to as the parking space information text.

In this embodiment of this application, the confidence of the parking space information texts is determined, so that accuracy of the determined sign of the first parking space can be improved, and further, accuracy of recognizing the parking area can be improved.

With reference to the third aspect, in some implementations of the third aspect, the vehicle includes a vehicle-mounted display apparatus. The method further includes: controlling the vehicle-mounted display apparatus to display the first parking space image.

For example, the vehicle-mounted display apparatus is controlled to display the first parking space image. For example, a central display screen or the like may be controlled to display the first parking space image, or a head-up display system or the like may be controlled to display the first parking space image. For another example, when images of a plurality of parking spaces including the first parking space are displayed on a central display screen or the like, the first parking space may be highlighted by using a line frame or the like. For another example, the first parking space image may include a partial area of the first parking space, for example, an area in which the sign of the first parking space is located. It should be understood that the foregoing manners of displaying the first parking space image are merely examples for ease of description. This is not limited in embodiments of this application.

In this embodiment of this application, the first parking space image is displayed on the vehicle-mounted display apparatus, so that the user can be prompted with the first parking space. This helps the user verify a recognition result of the first parking space.

With reference to the third aspect, in some implementations of the third aspect, the method further includes: sending a first message after the sign of the first parking space is determined, where the first message indicates the first parking space.

For example, after determining the first message text, the vehicle may send the first message. Correspondingly, the terminal device like the mobile phone may receive the first message, to learn of the first parking space.

In this embodiment of this application, the first message is sent, so that the user can learn of the parking area in which the vehicle is located without taking a photo of the parking space by using the terminal device like the mobile phone. This can improve user experience.

With reference to the third aspect, in some implementations of the third aspect, the determining the parking area based on the image of the marker includes: determining one or more pieces of marker information based on the image of the marker; and determining a sign of the parking area based on the one or more pieces of marker information, where an area indicated by the sign of the parking area is the parking area.

For example, one or more texts may be obtained based on the image of the marker. For ease of explanation and description, the text may also be referred to as marker information or a marker information text.

In this embodiment of this application, accuracy of recognizing the parking area can be improved by determining confidence of the sign of the parking area.

With reference to the third aspect, in some implementations of the third aspect, the method further includes: controlling the vehicle-mounted display apparatus to display the sign of the parking area.

For example, the sign of the parking area may be displayed in a text manner, or a part of the sign of the parking area in the image of the marker in the parking area may be displayed, or the image of the marker in the parking area may be displayed, and the sign of the parking area is highlighted by using a line frame or the like. It should be understood that this is not limited in embodiments of this application.

In this embodiment of this application, the sign of the parking area is displayed on the vehicle-mounted display apparatus, so that the user can be prompted with the parking area. This helps the user verify a recognition result of the parking area.

With reference to the third aspect, in some implementations of the third aspect, the method further includes: sending a second message after the parking area is determined, where the second message indicates the parking area.

For example, the vehicle may send the second message. Correspondingly, the terminal device like the mobile phone may receive the second message, to learn of the parking area in which the vehicle is located.

In this embodiment of this application, the second message is sent, so that the user can learn of the parking area in which the vehicle is located without taking a photo of the parking area in which the vehicle is located by using the terminal device like the mobile phone. This can improve user experience.

With reference to the third aspect, in some implementations of the third aspect, before the obtaining ambient environment data, the method may further include: obtaining a voice instruction or user operation information; detecting a parking voice instruction based on the voice instruction, where the parking voice instruction indicates that the user has a parking intention, and starting a first sensor when the parking voice instruction is detected; or detecting a first operation based on the user operation information, where the first operation indicates that the user has a parking intention, and starting a first sensor when the first operation is detected; and controlling the first sensor to capture the ambient environment data.

For example, the parking voice instruction may indicate that the user has the parking intention. For example, in voice interaction, the voice instruction like "I want to park", "Automated parking", or "Drive into a parking space" that is delivered by the user may be recognized.

For example, the first operation may indicate that the user has the parking intention. For example, when the vehicle is located in the parking lot, if it is detected that a gear is adjusted to a reverse gear, it may be considered that the user has the parking intention. For another example, when the user controls, by using a brake pedal or an accelerator pedal, a vehicle speed to fall within a preset vehicle speed (for example, 3 km/h), it may be considered that the user has the parking intention.

In this embodiment of this application, when it is determined that the user has the parking intention, the sensor is controlled to capture the ambient environment data used to detect the marker in the parking area. This can reduce overheads used by the vehicle to recognize the sign of the parking area, and reduce invalid information in the obtained data, so that accuracy of recognizing the sign of the parking area is improved.

With reference to the third aspect, in some implementations of the third aspect, before the obtaining ambient environment data, the method further includes: starting a first sensor when it is determined that the vehicle is located in a parking lot area; and controlling the first sensor to capture the ambient environment data.

For example, the first sensor may include one or more sensors of a same type or different types. For example, after it is determined that the vehicle is located in the parking lot area, data captured by one or more cameras and/or data captured by one or more radars may be obtained. The ambient environment data captured by the one or more sensors is used for marker detection in the parking area. It should be understood that this is not limited in embodiments of this application.

In this embodiment of this application, when it is determined that the vehicle is located in the parking lot area, the sensor is controlled to capture the ambient environment data used to detect the marker in the parking area, to automatically trigger a function of recognizing the parking area. This can improve user experience, and is adapted to an application manner in an autonomous driving scenario.

With reference to the third aspect, in some implementations of the third aspect, the method further includes: obtaining a first status parameter, where the first status parameter includes at least one of a distance between the vehicle and an entrance of the parking lot, a vehicle speed, and signal quality of a global navigation satellite system GNSS signal; and performing parking lot marker detection when the first status parameter is less than or equal to a first threshold; and when a parking lot marker is detected, determining that the vehicle is located in the parking lot area.

For example, the first status parameter may be a combination of parameters such as the distance between the vehicle and the entrance of the parking lot, the vehicle speed, and the signal quality of the GNSS signal; or the first status parameter may be a parameter other than parameters such as the distance between the vehicle and the entrance of the parking lot, the vehicle speed, and the signal quality of the GNSS signal. Correspondingly, the first threshold may be related to a parameter included in the first status parameter. For example, the first status parameter may alternatively be longitude and latitude information. A parking lot area may be learned of based on a map, and whether the vehicle is located around the parking lot may be determined based on longitude and latitude of the vehicle.

In this embodiment of this application, when the first status parameter is less than or equal to the first threshold, the environment data is obtained to perform parking lot marker detection. In this way, in a process of determining whether the vehicle is located in the parking lot area, dependence on the sensor to capture the environment data can be reduced, and working time of the sensor can be reduced. This reduces power consumption of the sensor, and also helps the vehicle enable a corresponding functional module after it is determined that the vehicle is located in the parking lot area.

With reference to the third aspect, in some implementations of the third aspect, the marker in the parking area is a column.

In this embodiment of this application, when the marker in the parking area is the column, compared with another object that cannot move in the parking lot, the columns are distributed regularly with high distribution density. In this way, the parking area is determined based on the column, so that accuracy of recognizing the parking area can be improved.

According to a fourth aspect, an apparatus for recognizing a parking area is provided. The parking area includes at least two parking spaces. The apparatus includes: an obtaining module, configured to: obtain ambient environment data, where the ambient environment data may be used to detect a marker in the parking area; and obtain an image of the marker when the marker is detected; and a processing module, configured to determine the parking area based on the image of the marker.

With reference to the fourth aspect, in some implementations of the fourth aspect, the parking area includes a first parking space, and the first parking space is a parking space in which a vehicle is located when the vehicle is in a parking pose. The obtaining module may be further configured to obtain a first parking space image, where the first parking space image includes the first parking space. The processing module may be further configured to determine a sign of a first parking space based on the first parking space image, where the sign of the first parking space includes an area keyword. The processing module may be specifically configured to determine the parking area based on the image of the marker and the area keyword.

With reference to the fourth aspect, in some implementations of the fourth aspect, the obtaining module may be further configured to obtain parking space indication information, where the parking space indication information may indicate an area in which the first parking space is located. The processing module may be specifically configured to determine the sign of the first parking space based on the parking space indication information and the first parking space image.

With reference to the fourth aspect, in some implementations of the fourth aspect, the processing module may be further configured to determine a first proportion based on the first parking space image, where the first proportion may indicate a proportion of the first parking space in the first parking space image. The processing module may be specifically configured to determine the sign of the first parking space based on the first parking space image and the first proportion.

With reference to the fourth aspect, in some implementations of the fourth aspect, the processing module may be specifically configured to: determine one or more parking space information texts based on the first parking space image; and determine the sign of the first parking space based on confidence of at least one parking space information text in the one or more pieces of parking space information.

With reference to the fourth aspect, in some implementations of the fourth aspect, the vehicle includes a vehicle-mounted display apparatus, and the processing module may be further configured to control the vehicle-mounted display apparatus to display the first parking space image.

With reference to the fourth aspect, in some implementations of the fourth aspect, the apparatus further includes a sending module. The sending module may be configured to send a first message after the sign of the first parking space is determined, where the first message may indicate the first parking space.

With reference to the fourth aspect, in some implementations of the fourth aspect, the processing module is specifically configured to: determine one or more pieces of marker information based on the image of the marker; and determine a sign of the parking area based on the one or more pieces of marker information, where an area indicated by the sign of the parking area is the parking area.

With reference to the fourth aspect, in some implementations of the fourth aspect, the processing module may be further configured to control the vehicle-mounted display apparatus to display the sign of the parking area.

With reference to the fourth aspect, in some implementations of the fourth aspect, the sending module may be further configured to send a second message after the parking area is determined, where the second message may indicate the parking area.

With reference to the fourth aspect, in some implementations of the fourth aspect, before obtaining the ambient environment data, the obtaining module may be further configured to obtain a voice instruction or user operation information. The processing module may be further configured to: detect a parking voice instruction based on the voice instruction, where the parking voice instruction may indicate that a user has a parking intention, and start a first sensor when the parking voice instruction is detected; or detect a first operation based on the user operation information, where the first operation may indicate that a user has a parking intention, and start a first sensor when the first operation information is detected; and control the first sensor to capture the ambient environment data.

With reference to the fourth aspect, in some implementations of the fourth aspect, before obtaining the ambient environment data, the processing module may be further configured to: start a first sensor when it is determined that the vehicle is located in a parking lot area; and control the first sensor to capture the ambient environment data.

With reference to the fourth aspect, in some implementations of the fourth aspect, the obtaining module may be further configured to obtain a first status parameter. The processing module may be configured to: perform parking lot marker detection when the first status parameter is less than or equal to a first threshold; and when a parking lot marker is detected, determine that the vehicle is located in the parking lot area.

With reference to the fourth aspect, in some implementations of the fourth aspect, the marker in the parking area is a column.

According to a fifth aspect, a method for determining that a vehicle is located in a parking lot area is provided. The method includes: obtaining a first status parameter; performing parking lot marker detection when the first status parameter is less than or equal to a first threshold; and when a parking lot marker is detected, determining that the vehicle is located in the parking lot area.

With reference to the fifth aspect, in some implementations of the fifth aspect, the first status parameter may include at least one of a distance between the vehicle and an entrance of a parking lot, a vehicle speed, and signal quality of a GNSS signal.

For example, the parking lot marker may be an object that does not move in the parking lot, like a parking lot barrier gate, a parking lot toll booth, a parking space, a parking lot guidance sign, or a parking lot indication sign.

In this embodiment of this application, when the first status parameter is less than or equal to the first threshold, parking lot marker detection is performed, and then whether the vehicle is located in the parking lot area is determined accordingly. This can reduce dependence on the sensor to capture the environment data, and reduce working time of the sensor, to reduce power consumption of the sensor. Correspondingly, power consumption of the sensor is reduced, so that fuel consumption of a conventional fuel vehicle or the like can be reduced to some extent, and an endurance mileage of an electric vehicle or the like can be increased to some extent.

According to a sixth aspect, a sensor startup method is provided. The method may include: obtaining a voice instruction or user operation information; and detecting the parking voice instruction based on the voice instruction, and starting one or more sensing sensors when the parking voice instruction is detected; or detecting a first operation based on the user operation information, and starting one or more sensors when the first operation is detected.

For example, the one or more sensors may be one or more types of sensors. This is not limited in embodiments of this application. Further, data captured by the one or more sensors may be used for a function related to a parking scenario. For example, after it is detected that a user taps an "Assisted parking" virtual button on a central display screen, one or more cameras on a vehicle, for example, a camera of an around view monitor system, may be started, and the camera is controlled to capture data, to obtain environment data. In this way, a parking area, a first parking space, and/or the like in which the vehicle is located are/is recognized. Further, a radar may be started, to control, based on the data captured by the plurality of sensors, the vehicle to travel into the first parking space.

In this embodiment of this application, because a parking-related function may be related to use of a sensor, the sensor is started when it is determined that the user has a parking intention, and the sensor may be triggered only in a parking phase. This can reduce overheads of the sensor, and avoid interference to the function caused by data captured by the sensor in a non-parking phase.

According to a seventh aspect, a method for recognizing a sign of a parking space is provided. The method may include: obtaining a first parking space image; and determining a sign of a first parking space based on the first parking space image.

For example, the first parking space image may include at least one parking space including the first parking space. For example, images of the parking space at a plurality of moments may be obtained, and the images at the plurality of moments may include the first parking space. For example, a video image captured by a camera sensor within first duration may be obtained, and the video may include the images of the parking space at the plurality of moments. This can avoid a recognition error caused by an incomplete sign in a single image, and improve accuracy of the recognized sign. It should be understood that the foregoing description of the first parking space image is merely an example for ease of description. This is not limited in embodiments of this application.

With reference to the seventh aspect, in some implementations of the seventh aspect, the method further includes: obtaining parking space indication information, where the parking space indication information may indicate an area in which the first parking space is located; and determining the sign of the first parking space based on the parking space indication information and the first parking space image.

With reference to the seventh aspect, in some implementations of the seventh aspect, the method further includes: determining a first proportion based on the first parking space image, where the first proportion indicates a proportion of the first parking space in the first parking space image; and the determining a sign of a first parking space based on the first parking space image includes: determining the sign of the first parking space based on the first parking space image and the first proportion.

With reference to the seventh aspect, in some implementations of the seventh aspect, the determining a sign of a first parking space based on the first parking space image includes: determining one or more parking space information texts based on the first parking space image; and determining the sign of the first parking space based on confidence of at least one of the one or more parking space information texts.

With reference to the seventh aspect, in some implementations of the seventh aspect, a vehicle includes a vehicle-mounted display apparatus. The method further includes: controlling the vehicle-mounted display apparatus to display the first parking space image.

With reference to the seventh aspect, in some implementations of the seventh aspect, the method further includes: sending a first message after the sign of the first parking space is determined, where the first message indicates the first parking space.

In this embodiment of this application, the sign of the first parking space may be determined based on the first parking space image. This helps a user learn of the sign of the parking space without taking a photo of the parking space by using a terminal device like a mobile phone, so that the user learns of a location of the vehicle based on the information. This helps the user search for the vehicle.

According to an eighth aspect, an interaction method for indicating a parking location is provided. The method may include: obtaining vehicle location information, where the vehicle location information may indicate a first parking space and/or a parking area; and displaying a first interface, where the first interface may indicate the parking area and/or the first parking space.

For example, the vehicle location information may indicate the first parking space and/or the parking area. For example, a terminal device like a mobile phone may obtain a first message indicating the first parking space, and may obtain a second message indicating the parking area. The obtained vehicle location information may also indicate both the first parking space and the parking area. In other words, the first message and the second message may be a same message. Alternatively, an image of an ambient environment of a vehicle may be obtained, and the image of the ambient environment is presented, so that a user may learn of an area in which the vehicle is located. It should be understood that the foregoing manners of indicating the first parking space and/or the parking area are merely examples for ease of description. This is not limited in embodiments of this application.

In this embodiment of this application, after obtaining the vehicle location information, the terminal device displays, on the first interface, content related to the first parking space and/or the parking area, so that the user can learn of the first parking space and/or the parking area. This helps the user search for the vehicle, and can improve user experience.

According to a ninth aspect, an apparatus for determining that a vehicle is located in a parking lot area is provided. The apparatus may include: an obtaining module, configured to obtain a first status parameter; and a processing module, configured to perform parking lot marker detection when the first status parameter is less than or equal to a first threshold; and further configured to: when a parking lot marker is detected, determine that the vehicle is located in the parking lot area.

For example, the obtaining module may be further configured to obtain data captured by a sensing sensor, where the data may be used for parking lot marker detection.

With reference to the ninth aspect, in some implementations of the ninth aspect, the first status parameter may include at least one of a distance between the vehicle and an entrance of a parking lot, a vehicle speed, and signal quality of a GNSS signal.

According to a tenth aspect, a sensor startup apparatus is provided. The apparatus may include: an obtaining module, configured to obtain a voice instruction or user operation information; and a processing module, configured to: detect a parking voice instruction based on the voice instruction, and start one or more sensing sensors when the parking voice instruction is detected; or detect a first operation based on the user operation information, where the first operation indicates that a user has a parking intention, and start one or more sensing sensors when the first operation is detected.

With reference to the tenth aspect, in some implementations of the tenth aspect, the obtaining module may be further configured to obtain data captured by the one or more sensing sensors. The processing module may be further configured to determine, based on the data captured by the sensing sensors, a parking environment of a vehicle.

For example, a sign of a first parking space and/or a parking area in which the vehicle is located may be determined based on the data captured by the sensors.

According to an eleventh aspect, an apparatus for recognizing a sign of a parking space is provided. The apparatus may include: an obtaining module, configured to obtain a first parking space image; and a processing module, configured to determine a sign of a first parking space based on the first parking space image.

With reference to the eleventh aspect, in some implementations of the eleventh aspect, the obtaining module may be further configured to obtain parking space indication information, where the parking space indication information may indicate an area in which the first parking space is located. The processing module may be specifically configured to determine the sign of the first parking space based on the parking space indication information and the first parking space image.

With reference to the eleventh aspect, in some implementations of the eleventh aspect, the processing module may be further configured to determine a first proportion based on the first parking space image, where the first proportion may indicate a proportion of the first parking space in the first parking space image. The processing module 3120 may be specifically configured to determine the sign of the first parking space based on the first parking space image and the first proportion.

With reference to the eleventh aspect, in some implementations of the eleventh aspect, the processing module may be specifically configured to: determine one or more parking space information texts based on the first parking space image; and determine the sign of the first parking space based on confidence of the parking space information text.

With reference to the eleventh aspect, in some implementations of the eleventh aspect, the vehicle may include a vehicle-mounted display apparatus, and the processing module may be further configured to control the vehicle-mounted display apparatus to display the first parking space image.

With reference to the eleventh aspect, in some implementations of the eleventh aspect, the apparatus may further include a sending module. The sending module may be configured to send a first message, where the first message may indicate the first parking space.

In some possible implementations, the apparatus in any one of the second aspect, the fourth aspect, and the ninth aspect to the eleventh aspect, and the possible implementations of any one of the second aspect, the fourth aspect, and the ninth aspect to the eleventh aspect may be a vehicle-mounted chip, a vehicle-mounted apparatus (for example, an in-vehicle infotainment or an on-board computer), or a vehicle. The vehicle in embodiments of this application may be understood as a transportation means, and the solutions provided in embodiments of this application may alternatively be applied to another transportation means or apparatus.

According to a twelfth aspect, an interaction apparatus for indicating a parking location is provided. The apparatus may include: an obtaining module, configured to obtain vehicle location information; and a display module, configured to display a first interface, where the first interface may indicate a parking area and/or a parking area.

With reference to the twelfth aspect, in some implementations of the twelfth aspect, the interaction apparatus may be one or more of apparatuses such as a computer, a smartphone, a tablet computer, a personal digital assistant (personal digital assistant, PDA), a wearable device, a smart speaker, and a television.

According to a thirteenth aspect, an apparatus is provided. The apparatus may include a processor and a memory. The memory is configured to store program instructions. The processor is configured to invoke the program instructions to perform the method according to any one of the first aspect, the third aspect, and the fifth aspect to the eighth aspect, and the possible implementations of the first aspect, the third aspect, and the fifth aspect to the eighth aspect.

According to a fourteenth aspect, a computer-readable medium is provided. The computer-readable medium stores program code to be executed by a device, and the program code is used to perform the method according to any one of the first aspect, the third aspect, and the fifth aspect to the eighth aspect, and the possible implementations of the first aspect, the third aspect, and the fifth aspect to the eighth aspect.

According to a fifteenth aspect, a computer program product including instructions is provided. When the computer program product runs on a computer, the computer is enabled to perform the method according to any one of the first aspect, the third aspect, and the fifth aspect to the eighth aspect, and the possible implementations of the first aspect, the third aspect, and the fifth aspect to the eighth aspect.

According to a sixteenth aspect, a vehicle is provided. The vehicle includes the apparatus according to any one of the second aspect, the fourth aspect, the ninth aspect to the eleventh aspect, and the thirteenth aspect, and the possible implementations of the second aspect, the fourth aspect, the ninth aspect to the eleventh aspect, and the thirteenth aspect.

According to a seventeenth aspect, a system is provided. The system includes a vehicle and an electronic device. The vehicle may include the apparatus according to any one of the second aspect, the fourth aspect, the ninth aspect to the eleventh aspect, and the thirteenth aspect, and the possible implementations of the second aspect, the fourth aspect, the ninth aspect to the eleventh aspect, and the thirteenth aspect. The vehicle is configured to send a first prompt message, where the first prompt message includes parking location information. The electronic device is configured to: receive the first prompt message; and control, based on the first prompt message, display of a parking location of the vehicle.

With reference to the seventeenth aspect, in some implementations of the seventeenth aspect, the electronic device may be further configured to send parking location request information, where the parking location request information is used to request the parking location information. The vehicle may be further configured to receive the parking location request information. The vehicle may be specifically configured to send the first prompt message based on the parking location request information.

An embodiment of this application provides a parking interaction method. When traveling to different locations, a vehicle obtains information about an area based on the area in which the vehicle is currently located, to determine parking location information of the vehicle, for example, parking space information, floor information, and zone information. According to the foregoing method, vehicle search experience of a user can be improved, and a user can learn of a parking location of the vehicle without taking a photo of a parking area by using a terminal device. Effective vehicle search information can be fed back to the user based on floor and area division of a parking lot, to help improve vehicle search efficiency of the user. Information about a second area can be obtained based on a parking intention of the user, so that overheads used by the vehicle to obtain the information about the second area can be reduced, and invalid information in obtained data can be reduced. This improves accuracy of the obtained information about the second area. When it is detected that the vehicle enters a parking state, the information about the second area can be obtained in advance or can start to be obtained, so that impact of a vehicle pose on obtaining the information about the second area can be avoided, and accuracy of the obtained information about the second area can be improved. Parking environment information in a parking process is obtained, so that impact of the vehicle pose on obtaining the information about the second area can be reduced. Information exchange is performed between the vehicle and a terminal, so that the parking location of the vehicle can be provided for the user in time. This facilitates a subsequent vehicle search operation, and improves vehicle search experience. When the vehicle completes parking, a message indicating the parking location may be automatically sent. This can reduce a request operation of the user for the parking location, and improve user experience. The parking location of the vehicle can be indicated based on a request of the user for the parking location, to implement interaction with the user. The parking location of the vehicle can be sent based on identity information of a requester, so that access of an unauthorized user can be avoided, and the parking location information that can be obtained by the requester can be determined based on permission and the request of the requester. This helps ensure security of the vehicle. The information about the area can be determined based on images of the area at a plurality of moments, so that default of the information about the area caused by an image at a single moment can be avoided, and integrity of the determined information about the area can be improved. Incomplete signs can be concatenated and fused, so that misjudgment of the information about the area caused by the incomplete signs can be avoided. This can improve integrity of the information about the area. Information about a first area can be obtained based on a marker in the first area, so that a recognition range of the information about the first area can be reduced. This can reduce interference from invalid information, and improve accuracy of the obtained information about the first area. The information about the first area can be obtained based on confidence of marker information, so that accuracy of the determined information about the first area can be improved. A vehicle-mounted display apparatus can be controlled to display the information about the first area and/or the information about the second area, so that a location of the vehicle is provided for the user in time, and the user can determine the location of the vehicle in time. A parking floor on which the vehicle is located in the parking lot can be determined based on pitch angle information of the vehicle, so that resource consumption of sensors such as a radar and a camera in a process of determining the parking location can be reduced. Information about the parking floor can be determined by using a passage guidance sign, so that difficulty in recognizing a sign of the parking floor can be reduced, impact of a parking lot building structure and the like on recognizing the parking floor can be avoided, and accuracy of the determined parking floor can be improved.

### BRIEF DESCRIPTION OF DRAWINGS

FIG. 1 is a functional block diagram of a vehicle according to an embodiment of this application;
FIG. 2 is a diagram of a vehicle sensor and an arrangement location according to an embodiment of this application;
FIG. 3 is a diagram of a scenario in which a vehicle enters a parking lot according to an embodiment of this application;
FIG. 4 is a diagram of a vehicle parking scenario according to an embodiment of this application;
FIG. 5 is a diagram of a vehicle parking scenario according to an embodiment of this application;
FIG. 6 is a diagram of an image of a sign of a parking space according to an embodiment of this application;
FIG. 7 is a diagram of a location relationship between a parking space and a sign of the parking space according to an embodiment of this application;
FIG. 8 is a diagram of another vehicle parking scenario according to an embodiment of this application;
FIG. 9 is a diagram of a column according to an embodiment of this application;
FIG. 10 is a schematic flowchart of a method for determining that a vehicle is located in a parking lot area according to an embodiment of this application;
FIG. 11 is a schematic flowchart of a sensor startup method according to an embodiment of this application;
FIG. 12 is a schematic flowchart of a method for recognizing a sign of a parking space according to an embodiment of this application;
FIG. 13 is a diagram of an image of a parking space according to an embodiment of this application;
FIG. 14 is a diagram of an interaction interface according to an embodiment of this application;
FIG. 15 shows a method for recognizing a parking area according to an embodiment of this application;
FIG. 16 is a diagram of another interaction interface according to an embodiment of this application;
FIG. 17 is a schematic flowchart of an interaction method for indicating a parking location according to an embodiment of this application;
FIG. 18 is a diagram of an interaction interface according to an embodiment of this application;
FIG. 19(a) to FIG. 19(c) show a group of graphical user interfaces according to an embodiment of this application;
FIG. 20(a) and FIG. 20(b) show another group of graphical user interfaces according to an embodiment of this application;
FIG. 21 is a schematic flowchart of recognizing a parking area according to an embodiment of this application;
FIG. 22 shows a method for recognizing a parking area according to an embodiment of this application;
FIG. 23 is a schematic flowchart of a method for recognizing a sign of a parking space according to an embodiment of this application;
FIG. 24 is a schematic flowchart of a method for recognizing a parking area according to an embodiment of this application;
FIG. 25 is a schematic flowchart of a method for recognizing a sign of a parking space according to an embodiment of this application;
FIG. 26 is a schematic flowchart of a method for recognizing a sign of a parking space and a parking area according to an embodiment of this application;
FIG. 27 is a schematic flowchart of a method for recognizing a sign of a parking space according to an embodiment of this application;
FIG. 28 is a diagram of a method for recognizing a parking area according to an embodiment of this application;
FIG. 29 is a schematic flowchart of an intelligent vehicle search interaction method according to an embodiment of this application;
FIG. 30 is a schematic flowchart of a method for recognizing a parking area according to an embodiment of this application;
FIG. 31 is a schematic flowchart of a parking interaction method according to an embodiment of this application;
FIG. 32 is a diagram of a structure of an apparatus for determining that a vehicle is located in a parking lot area according to an embodiment of this application;
FIG. 33 is a diagram of a structure of a sensor startup apparatus according to an embodiment of this application;
FIG. 34 is a diagram of a structure of an apparatus for recognizing a sign of a parking space according to an embodiment of this application;
FIG. 35 is a diagram of a structure of an apparatus for recognizing a parking area according to an embodiment of this application;
FIG. 36 is a diagram of a structure of an interaction apparatus for indicating a parking location according to an embodiment of this application;
FIG. 37 is a diagram of a structure of another apparatus for recognizing a parking area according to an embodiment of this application;
FIG. 38 is a diagram of a structure of a parking interaction apparatus according to an embodiment of this application;
FIG. 39 is a diagram of an example structure of an apparatus according to an embodiment of this application; and
FIG. 40 is a diagram of a system according to an embodiment of this application.

### DESCRIPTION OF EMBODIMENTS

The following describes technical solutions of embodiments in this application with reference to accompanying drawings.

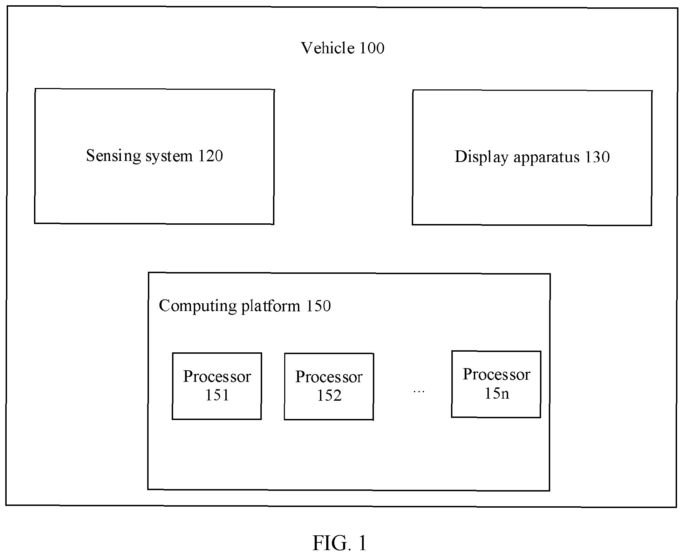

For example, FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global navigation satellite system, for example, one or more of a GPS, a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement a corresponding function.

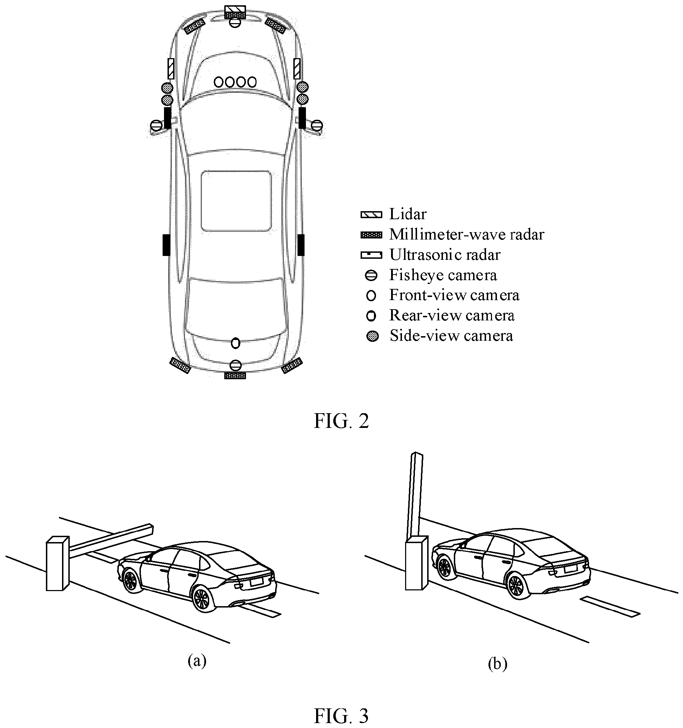

For example, FIG. 2 is a diagram of a vehicle sensor and an arrangement location according to an embodiment of this application.

For example, the vehicle may include a plurality of sensors such as a radar sensor and a camera sensor. The radar sensor may be a lidar, a millimeter-wave radar, an ultrasonic radar, or the like. The camera sensor may be a front-view camera, a rear-view camera, a side-view camera, a fisheye camera, or the like. FIG. 2 shows some common sensor types and mounting locations of the sensors. However, types, quantities, and locations of the vehicle sensors are not limited in embodiments of this application.

The lidar (light detection and ranging, Lidar) is a radar that performs detection by using a laser beam. Due to advantages of high coherence, directivity, and monochromaticity of a laser, the lidar can implement a long-distance and high-precision ranging function. The lidar may extend a single-point ranging result to two-dimensional ranging result in a scanning manner or multielement array detection manner, to form a distance image, so that the lidar is configured to recognize an accurate location and a shape of an object. For example, as shown in FIG. 2, the vehicle may include three lidars that respectively face a forward direction, a left direction, and a right direction.

The millimeter-wave radar is a radar that performs detection by using a millimeter wave. Compared with optical beams such as infrared and laser beams, a millimeter wave has a strong capability of penetrating fog, smoke, and dust. Therefore, the millimeter-wave radar has an all-weather feature. In addition, a short wavelength is easy to obtain features such as a detail feature and clear contour imaging of a target, and can be used for target classification and recognition. The millimeter-wave radar may be configured to recognize a distance and a speed of an object. For example, as shown in FIG. 2, the vehicle may include six millimeter-wave radars, that is, one millimeter-wave radar facing a forward direction, one millimeter-wave radar facing a backward direction, and four millimeter-wave radars facing a lateral direction. The ultrasonic radar is a radar that performs detection by using an ultrasonic wave. An ultrasonic ranging sensor has a great advantage in short-distance measurement. For example, as shown in FIG. 2, the vehicle may include a plurality of ultrasonic radars.

For example, the vehicle may be provided with one or more types of cameras such as a long-focus camera, a wide-angle camera, a monocular camera, a binocular camera, a fisheye camera, and a linear camera. For example, as shown in FIG. 2, the front-view camera may include a long-focus camera, a wide-angle camera, a monocular camera, a binocular camera, a fisheye camera, a linear camera, or the like.

It should be understood that the foregoing description of types, quantities, and arrangement locations of the sensors is merely an example for ease of description. This is not limited in embodiments of this application.

For example, FIG. 3 is a diagram of a scenario in which a vehicle enters a parking lot according to an embodiment of this application. An entrance of the parking lot may include a barrier gate, and the barrier gate may control road accessibility. For example, as shown in (a) in FIG. 3, when the barrier gate is in a closed state, a road is closed, the vehicle may fail to pass normally, and the vehicle may decelerate or stop in front of the barrier gate until the barrier gate is opened. When the barrier gate is in an open state, as shown in (b) in FIG. 3, the vehicle may normally pass through the road controlled by the barrier gate, for example, enter a place like a parking lot. It should be understood that the foregoing description of the barrier gate is merely an example for ease of description. It should be understood that the barrier gate may alternatively be in another form other than that shown in FIG. 3. This is not limited in embodiments of this application.

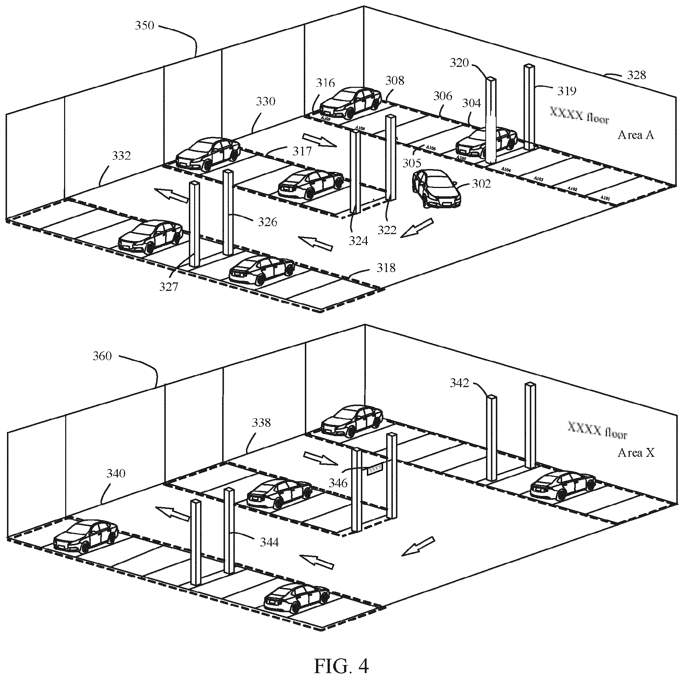

For ease of explanation and description, for example, FIG. 4 is a diagram of a vehicle parking scenario according to an embodiment of this application. As shown in FIG. 4, the parking lot may include a plurality of floors. For example, a floor 350 and a floor 360 may be any two of the plurality of floors in the parking lot. One floor may include a plurality of parking spaces, and one or more of the parking spaces are occupied, for example, a parking space 308. An idle parking space may be used for parking another vehicle. For example, a to-be-parked vehicle 302 may travel and stop in a parking space 304, a parking space 306, or the like. A parking space may be marked with a sign. For example, a sign 305 may be a sign of the parking space 304, in other words, the sign of the parking space 304 may be "A106". One floor may include a plurality of areas used for parking. For example, the floor 350 may include an area 316, an area 317, an area 318, and the like. The plurality of areas may belong to a same parking area. For example, the area 316 to the area 318 may belong to an area indicated by a sign "Area A" of the parking area, or may belong to a plurality of parking areas. For example, the area 316 may belong to an area indicated by a sign "Area A" of the parking area, and the area 317 may belong to an area indicated by a sign "Area B" of the parking area. One floor may include a plurality of markers, for example, columns 319, 320, 322, 324, 326, 327, 342, 344, and the like may be columns between floors. The column may include floor information and/or a sign of a parking area. For example, the column 319 may be marked with the sign "Area A" of the parking area, the column 344 may be marked with "Area E", "Basement level 1", and the like. The parking lot may further include another sign. For example, an arrow shown in FIG. 4 may indicate a traveling direction. For another example, as shown in FIG. 4, the parking lot may include a signboard 346. The signboard 346 may be in a hanging state, and the signboard 346 may be marked with a sign (for example, a parking zone sign, a floor sign, or a fire sign). A floor may include an enclosed or semi-enclosed inner wall, and the inner wall may also include a floor sign, a sign of a parking area, and/or the like, for example, an inner wall 328. It should be understood that the foregoing description of the vehicle parking scenario is merely an example for ease of description. For example, the parking lot may include more or fewer floors, for example, an indoor parking lot including only the floor 350, or an outdoor parking lot.

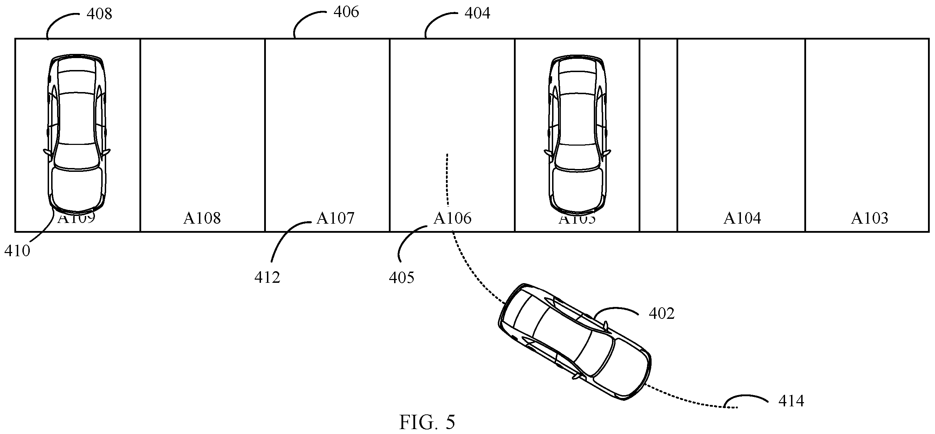

For ease of explanation and description, for example, FIG. 5 is a diagram of a vehicle parking scenario according to an embodiment of this application. As shown in FIG. 5, the scenario may include a plurality of parking spaces. One or more of the parking spaces are occupied, for example, a parking space 408. An idle parking space may be used for parking another vehicle, for example, a parking space 404 and a parking space 406. The parking space may be marked with a sign, for example, a sign 412 may be a sign of the parking space 406, in other words, the sign of the parking space 406 may be "A107". A sign of another parking space is similar. As shown in FIG. 4, a dashed line 414 may be a traveling track of a vehicle 402, or may be a planned parking route, or may be a combination of a traveling track and a planned parking route. The vehicle 402 may finally stop in the parking space 404 based on the track. When a vehicle stops in a parking space, for example, a vehicle 410 stops in the parking space 408. Due to a space limitation, a length and a width of the parking space may be close to a length and a width of the vehicle. Therefore, even if the vehicle has a plurality of sensors such as cameras that can capture an ambient environment, because mounting locations and/or sensing ranges of the sensors are limited, as shown in FIG. 5, the vehicle 410 that has stopped in the parking space 408 may fail to capture an image of the parking space 408, and may fail to obtain a sign "A106" of the parking space. If the vehicle needs to obtain the sign of the parking space by using a sensor on the vehicle, the vehicle may need to be located outside the parking space. For example, when the vehicle is partially or completely located outside the parking space 404 in a parking process of the vehicle 402, the vehicle 402 may capture an image of the parking space by using a camera sensor on the vehicle 402, and obtain a sign "A106" of the parking space.

It should be understood that the foregoing description of the sign of the parking space is merely an example for ease of description. A sign of a parking space may alternatively be in another form. For example, the sign may be in a form of pure digit (for example, "0347"), or may be a combination of a letter, a symbol, and a digit (for example, "A-232"). It should be understood that a form of the sign of the parking space is not limited in embodiments of this application.

In some possible scenarios, the parking scenario shown in FIG. 4 may be combined with the parking scenario shown in FIG. 5. For example, FIG. 5 may be a top view of a partial area on the floor 350 in the parking lot shown in FIG. 4. Correspondingly, the vehicle 402 in FIG. 5 may be the vehicle 302 in FIG. 4, and the parking space 404 in FIG. 5 may be the parking space 304 in FIG. 4.

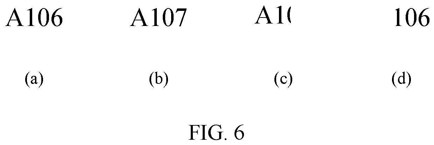

For ease of explanation and description, for example, FIG. 6 is a diagram of an image of a sign of a parking space according to this embodiment of this application. The following describes FIG. 6 with reference to FIG. 5. For example, an image of an ambient environment that is captured by a camera sensor on a vehicle depends on a location of the vehicle, and (a), (b), (c), and (d) in FIG. 6 each may be a part that includes a parking space sign in a parking space image captured by a camera sensor on the vehicle at a moment in a process of parking the vehicle 402. (a) in FIG. 6 may include the parking space sign "A106" of the parking space 404, (b) in FIG. 6 may include the parking space sign "A107" of the parking space 406, and (c) and (d) in FIG. 6 each may include a part of the parking space sign "A106" of the parking space 404. For example, the obtained sign of the parking space may indicate a target parking space. For example, when the sign of the parking space shown in (a) in FIG. 5 is obtained based on a camera on the vehicle, because the vehicle 402 finally stops in the parking space 404, it may be learned that the vehicle finally stops in the parking space indicated by "A106". In other words, the sign is consistent with the parking space in which the vehicle is located. For another example, when the parking space sign "A107" shown in (b) in FIG. 5 is obtained, although the sign does not correctly indicate the parking space 404 in which the vehicle is located, the parking space 406 indicated by "A107" is adjacent to the parking space 404 in which the vehicle is located, to some extent, the sign may also indicate the parking space in which the vehicle is located, and there is no large deviation when a user searches for a vehicle based on the sign "A107". For another example, the sign of the parking space in which the vehicle is located may fail to be learned of based on only (c) or (d) in FIG. 5, and the sign of the parking space may be learned of in another manner. For example, the sign of the parking space in which the vehicle is located may be estimated based on a sign of another parking space in a captured image according to a specified rule of the sign of the parking space; or the sign of the parking space in which the vehicle is located may be obtained by supplementing the sign of the parking space based on a plurality of images. It should be understood that the foregoing description of the sign of the parking space is merely example description. This is not limited in embodiments of this application.

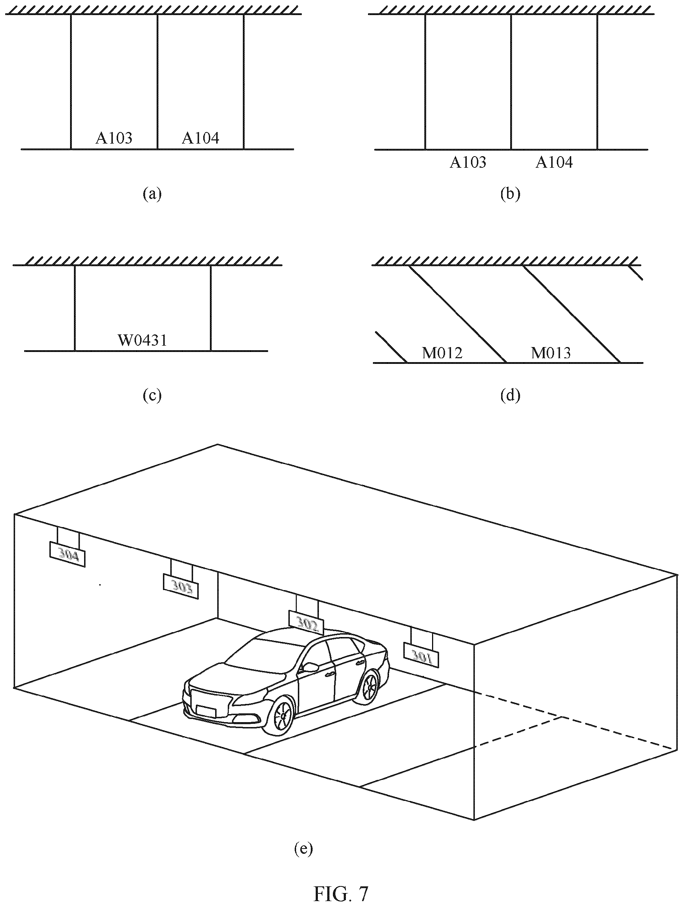

For example, FIG. 7 is a diagram of a location relationship between a parking space and a sign of the parking space according to an embodiment of this application. (a), (b), and (e) in FIG. 7 are perpendicular parking spaces, (c) in FIG. 6 is a parallel parking space, and (d) in FIG. 6 is an angle parking space.

For example, a sign of a parking space may be located within an area included in the parking space, or may be located outside an area included in the parking space, or may be located above an area included in the parking space. For example, as shown in (a), (c), and (d) in FIG. 7, a sign of a parking space may be located within an area included in the parking space. As shown in (b) in FIG. 7, a sign of a parking space may be located outside an area included in the parking space. As shown in (e) in FIG. 7, a sign of a parking space may alternatively be located above an area included in the parking space. In other words, the sign may indicate, in a three-dimensional space marking manner, the area in which the parking space is located, or the like. It should be understood that the foregoing description of the location relationship between the parking space and the sign of the parking space is merely an example for ease of description. This is not limited in embodiments of this application.

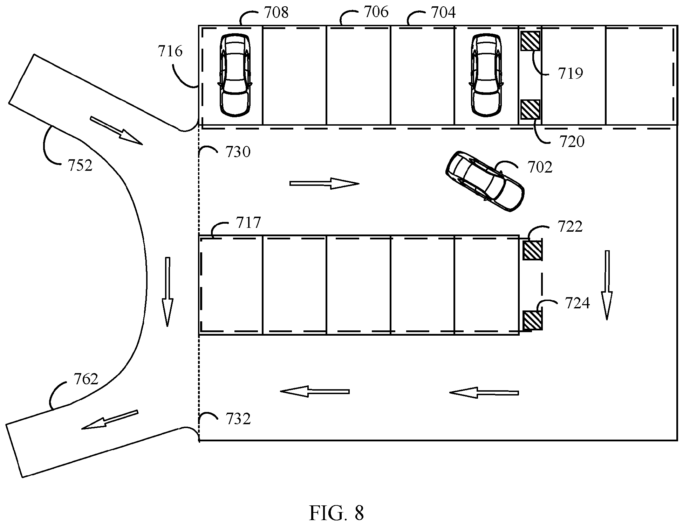

For ease of understanding and description, for example, FIG. 8 is a diagram of another vehicle parking scenario according to an embodiment of this application. An arrow may be a vehicle traveling direction indicated by a parking lot. A vehicle 702 is a vehicle that is to be parked or is being parked. The parking lot may include a plurality of parking zones, for example, an area 716 and an area 717 that are surrounded by dashed lines. The area 716 may include a plurality of parking spaces such as a parking space 704 and a parking space 706. The parking space 704 may be a parking space (not shown in FIG. 7) in which the vehicle is finally parked, and the parking space 706 is an idle parking space adjacent to the parking space 704. The area 717 may also include a plurality of parking spaces. Obstacles 719 and 720 may be columns. The columns may include a sign of a parking area in which the area 716 is located. Obstacles 722 and 724 may also be columns, and the columns 722 and 724 may include a sign of a parking zone in which the area 717 is located. The area 716 and the area 717 may belong to a same parking zone, that is, may belong to a parking zone indicated by a sign of the same parking zone. For example, both the area 716 and the area 717 belong to a parking area "Area H", and the columns 720 and 722 may include the sign "Area H". Alternatively, the area 716 and the area 717 may belong to different parking zones, and the different parking zones may be distinguished by using signs of different parking areas. For example, the area 716 may belong to a parking area "Area H", and the area 717 may belong to a parking area "Area G". In this scenario, an inner wall (not shown in FIG. 8) of the parking lot may be included. A sign of a parking area may also be marked on the inner wall, for example, a sign of a parking area like "Area A" may be marked on the inner wall. A parking space in FIG. 8 may be marked with a number of the parking space, for example, a number of the parking space 704 may be "A104" (not shown in FIG. 8). A dashed line 730 may be an area entrance, and a dashed line 732 may be an area exit. The entrance 730 may be connected to a road 752, and the exit 732 may be connected to a road 762. The roads 752 and 762 may be roads on a same plane as the parking area, or may be ramps. For example, the road may belong to an inter-floor passage, and the vehicle may travel onto another floor through the road.

In some possible scenarios, FIG. 3, FIG. 4, and FIG. 5 may be combined with the scenario shown in FIG. 8. For example, FIG. 8 may be a top view of a partial area on the floor 350 in the parking lot shown in FIG. 4, and the vehicle 702 in FIG. 8 may be the vehicle 402 in FIG. 4. Parking spaces 704, 706, and 708 in FIG. 8 may respectively correspond to the parking spaces 304, 306, and 308 in FIG. 4, or may correspond to the parking spaces 404, 406, and 408 in FIG. 6. The area entrance and the area exit in FIG. 8 may alternatively be the entrance and an exit of the parking lot that are shown in FIG. 3 and that are connected to a road on which the entrance and the exit of the parking lot are located.

It should be understood that the foregoing description of the parking scenario is merely an example for ease of description. This is not limited in embodiments of this application.

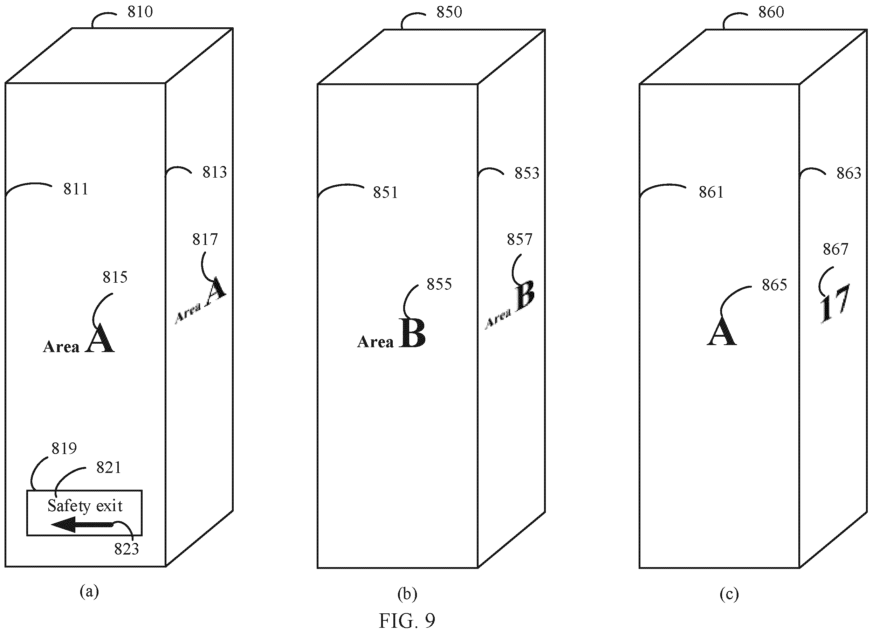

For example, for ease of explanation and description, FIG. 9 is a diagram of a column according to an embodiment of this application. (a) in FIG. 9 shows a column 810. The column 810 may include a sign of a parking area. A plane 811 includes a sign 815, and a plane 813 includes a sign 817. The sign 815 and/or the sign 817 may indicate the parking area. For example, a column 850 may be the column 720 in FIG. 8, and the sign 815 and/or the sign 817 may be a sign of a parking area to which the area 716 belongs. Similarly, (b) in FIG. 8 shows the column 850. For example, the column may be the column 722 or 724 in FIG. 8, and a sign 855 and/or a sign 857 of the column may be a sign to which an area 718 belongs.

For example, the column may alternatively have another sign. For example, as shown in (a) in FIG. 8, a safety exit indication apparatus 819 may be mounted on a plane 811 of the column 850. The apparatus 819 may include a sign 821 indicating a safety exit and a sign 823 indicating a moving direction.

For example, a parking area may include a plurality of levels, and a plurality of areas at a same level may be distinguished by using signs. For example, the column 860 shown in (c) in FIG. 9 may include a sign 865 "A" and a sign 867 "17", and the column may be the column 720 in FIG. 8. A parking area indicated by the sign 867 is a part of a parking area indicated by the sign 865. For example, the parking area indicated by the sign 865 is a parking area including the area 716 and the area 718. In other words, the area 716 and the area 718 may be at a same level. A sign of the area 716 may be "17" or "A17", and a sign of the area 718 may be "18" or "A18". A sign of a parking area in which the parking space 704 is located may be "A", "17", or "A17". The sign 867 may alternatively be located on a same plane as the sign 865, or the like.

It should be understood that the foregoing description of the sign of the parking area is merely an example. This is not limited in embodiments of this application.

It should be understood that the foregoing description of the column is merely an example for ease of description. The column may alternatively be in another shape, for example, in a cylindrical shape. It should be understood that this is not limited in embodiments of this application.

As described above, after a vehicle currently travels into a parking lot like a large parking lot, because terrain and an environment of the parking lot are complex, and GPS signal strength of some parking lots is weak, a location of the vehicle cannot be accurately located. In this case, the user usually needs to record the location of the vehicle by manually taking a photo. As a result, user experience is poor. However, some functions related to a parking scenario, for example, searching for an idle parking space and assisted parking, usually need to be triggered by the user manually or by using a voice, and a related requirement in the scenario cannot be directly provided for the user, resulting in poor user experience. Further, when autonomous driving is performed, or the user remotely operates a vehicle, if the functions related to the parking scenario are still triggered by the user manually or by using a voice, user experience is further reduced. An embodiment of this application provides a method for determining that a vehicle is located in a parking lot area, to determine, based on a status parameter of the vehicle and a detection result of a parking lot marker, whether the vehicle is located in the parking lot area. This helps intelligently trigger a function related to a parking scenario, and helps improve user experience.

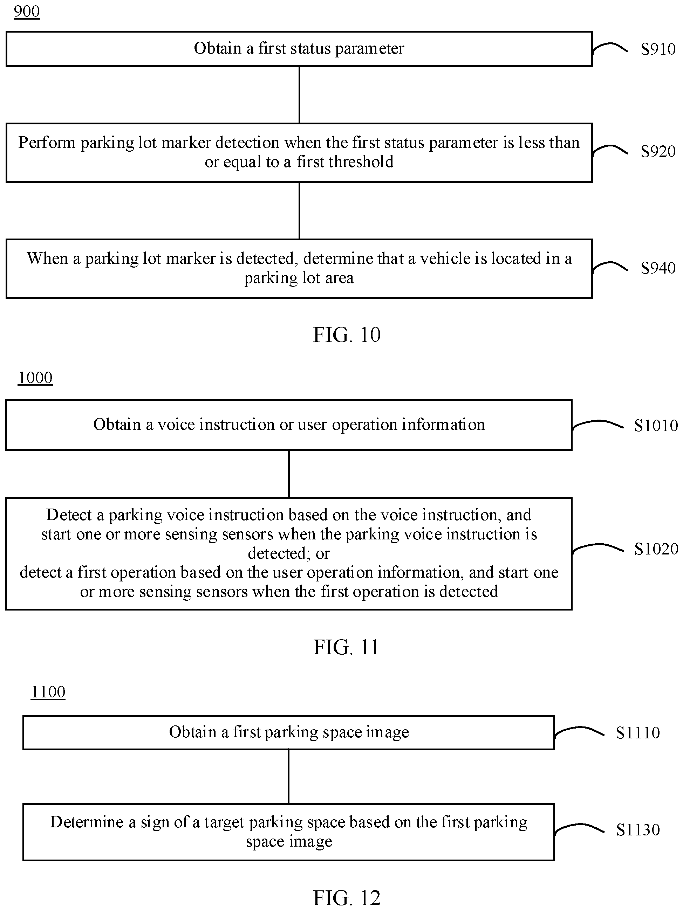

For example, FIG. 10 is a schematic flowchart of a method for determining that a vehicle is located in a parking lot area according to an embodiment of this application. The method 900 may include some or all of the following steps.

S910: Obtain a first status parameter.

For example, the first status parameter may include at least one of signal quality of a GNSS signal, a vehicle speed, and a distance between a vehicle and an entrance of a parking lot.

For example, the first status parameter may include the signal quality of the GNSS signal. For example, in a process of entering an indoor parking lot like a basement parking lot or a multistory garage, because an external environment blocks the GNSS signal, signal strength of the GNSS signal in this scenario may be poor, and vehicle positioning may not be implemented based on the GNSS signal with poor signal quality, or there is a large error in vehicle positioning. Even if a terminal device (for example, a mobile phone or a tablet computer) used by a user or a vehicle driven by a user can perform navigation by using map software, because a location of the terminal device or the vehicle cannot be determined based on the GNSS signal, whether the vehicle is to travel into the parking lot may not be determined based on map information. In this case, based on the signal strength of the GNSS signal, for example, when the signal strength of the GNSS signal is less than or equal to -90 dBm, a sensor like a radar or a camera may be started to capture ambient environment data, to determine a scenario in which the vehicle is located. This can avoid whole-process turn-on of the sensor like the radar and the camera on the vehicle, so that overheads of the sensor can be reduced. For another example, only when a quantity of satellites above a field of view of an antenna of the vehicle is greater than or equal to a threshold (for example, 5), the GNSS satellites can provide an effective signal for the vehicle. Because the external environment blocks the GNSS signal, a quantity of satellites above the current antenna may be less than the threshold. In this case, the sensor like the radar or the camera may be started to capture the ambient environment data based on the quantity of satellites above the current field of view, to determine the scenario in which the vehicle is located.

For example, the first status parameter may include the vehicle speed. For example, in a process of entering an indoor building like a basement parking lot or a multistory garage, because a driving environment in this scenario is complex, the vehicle may travel at a low vehicle speed. In this case, when it is determined that the vehicle travels at the low speed, the sensor may be started to capture data.

For example, the first status parameter may include the distance between the vehicle and the entrance of the parking lot. For example, the distance between the vehicle and the entrance of the parking lot may be determined based on map information and a location of the vehicle. For example, in a process in which the user navigates to the parking lot by using the map software, the distance between the vehicle and the entrance of the parking lot may be determined based on the map information and the location of the vehicle. When the distance between the vehicle and the entrance of the parking lot is less than or equal to a preset distance, the sensor may be controlled to be started to capture ambient environment data.

For example, the first status parameter may be a combination of the signal quality of the GNSS signal, the vehicle speed, and the distance between the vehicle and the entrance of the parking lot. For example, an occasion for triggering the sensor to capture data may be determined based on the signal quality of the GNSS signal and the distance between the vehicle and the entrance of the parking lot. For example, in a process in which the vehicle travels into the basement parking lot, it may be determined, at a moment 1 based on a map, that the distance between the vehicle and the entrance of the parking lot is less than or equal to a preset distance (for example, 30 meters), and that the signal strength of the obtained GNSS signal is greater than a preset threshold. The signal strength of the obtained GNSS signal changes as the vehicle travels. At a moment 2, the distance between the vehicle and the entrance of the parking lot is still less than or equal to the preset distance, but the signal strength of the GNSS signal is less than or equal to the preset threshold. The moment 2 is later than the moment 1. In this case, the sensor may be triggered at the moment 2 to capture data. For another example, in a process in which the vehicle travels into the basement parking lot, the vehicle may need to pass through a barrier gate to enter the parking lot. For example, as shown in FIG. 3, the vehicle speed of the vehicle is less than or equal to a preset threshold at a moment 3. In this case, the sensor is triggered based on the signal strength of the GNSS signal, the vehicle speed, and a first distance to capture data. This can prevent the sensor from being started too early, so that overheads of the sensor can be reduced. It should be understood that the foregoing description of triggering, based on the first status parameter, the sensor to capture the ambient environment data is merely an example for ease of description. This is not limited in embodiments of this application.

S920: Perform parking lot marker detection when the first status parameter is less than or equal to a first threshold.

For example, parking lot marker detection may be performed based on data captured by a sensing sensor. The sensing sensor may include a radar sensor and/or a camera sensor. Correspondingly, the ambient environment data may include data captured by the radar sensor and/or an image captured by a camera. For example, the sensing sensor may include a radar, for example, a lidar. When the signal quality of the GNSS signal of the vehicle is less than or equal to the first threshold, the radar may be started to capture data, and then whether the vehicle is in the scenario of entering the parking lot may be determined based on the data captured by the lidar. The sensing sensor may be a camera sensor, for example, a fisheye camera, a front-view camera, or a side-view camera. When the signal quality of the GNSS signal is less than a signal quality threshold, and the distance between the vehicle and the entrance of the parking lot is less than or equal to the preset distance, the camera sensor may be triggered to capture data, and then whether the vehicle is in the scenario of entering the parking lot may be determined based on the data captured by the camera. When it is determined that the first status parameter is less than or equal to the first threshold, if the sensing sensor is already in an on state, data captured by the sensing sensor after the moment may be obtained, and then parking lot marker detection is performed. After processing (for example, filtering or feature extraction) is performed on the data captured by the sensing sensor, parking lot marker detection may be performed. It should be understood that the foregoing description of the sensing sensor is merely an example for ease of description. This is not limited in embodiments of this application.

For example, when the first status parameter is less than or equal to the first threshold, the sensing sensor may be started, and the data captured by the sensing sensor is obtained. Starting the sensing sensor may be controlling the sensing sensor to be started and capture the ambient environment data, or may be sending a message to another control apparatus or sensing sensor. The message may indicate the sensing sensor to start. When the sensing sensor is already in an on state, the message may indicate to keep the sensor in the on state. For example, when the vehicle performs the method, and determines that the first status parameter is less than or equal to the first threshold, the vehicle may control the sensing sensor on the vehicle to be started, for example, start the front-view camera shown in FIG. 2, to obtain the ambient environment data captured by the sensing sensor. For another example, when an apparatus like a chip, an in-vehicle infotainment, or an on-board computer performs the method, the chip may send a message to a sensor or a sensor control apparatus, where the message may indicate to start one or more sensing sensors.

For example, parking lot marker detection may be performed based on the data captured by the sensing sensor. For example, a parking lot marker may be a parking lot barrier gate, a parking space, a column with a parking area sign, or a parking lot guidance sign. For example, whether there is a parking lot marker may be detected by performing feature extraction or the like on the obtained ambient environment data. It should be understood that a parking lot marker detection method is not limited in embodiments of this application.

S940: When the parking lot marker is detected, determine that the vehicle is located in a parking lot area.

For example, when the ambient environment data includes the parking lot marker, it may be determined that the vehicle is located in the parking lot area. For example, the parking lot marker may be an object, a sign, or the like that does not move in the parking lot, for example, a parking lot barrier gate, a parking space, a parking lot guidance sign, or a parking lot indication sign. For another example, a sensor like a radar or a camera of a vehicle sensing system may be triggered based on the first status parameter. The sensor may capture the ambient environment information. Based on the data captured by the sensor, for example, based on the parking lot barrier gate, the parking space, the parking lot guidance sign, or the like that may be included in the image captured by the camera and based on point cloud data captured by the lidar for barrier gate recognition, corresponding detection may be performed, for example, feature extraction may be performed on the image and the point cloud data, and the marker such as the barrier gate or the parking space may be recognized by using a deep learning network, to determine that the vehicle is located in the parking lot area. For another example, that the vehicle is located in the parking lot area may mean that the vehicle is already located inside the parking lot, or that the vehicle is located at the entrance of the parking lot, and the vehicle may enter the parking lot from the entrance. In other words, the parking lot area may include an area in which the entrance of the parking lot is located. It should be understood that the foregoing description of the parking lot marker and the parking lot area is merely an example for ease of description. This is not limited in embodiments of this application.

For example, after it is determined that the vehicle is located in the parking lot area, a first sensor may be started, and the first sensor is controlled to capture ambient environment data, where the ambient environment data may be used for marker detection in a parking area. For example, after the sensing sensor captures the data, the sensor may be turned off; and after the parking lot marker is detected based on the data captured by the sensing sensor, one or more sensors in the sensing system may be started to obtain the ambient environment data. For example, the ambient environment data may be used for marker detection in the parking area. In this way, sensors in a parking lot environment are automatically started, and the one or more sensors may be controlled to capture data, to provide required data for a corresponding function.

For example, after it is determined that the vehicle is located in the parking lot area, a first function may be controlled to be enabled.

For example, the first function may be applied to a parking scenario. For example, after it is determined, based on data of the camera, that the vehicle travels into a parking lot, a functional module related to the parking scenario may be woken up and triggered, for example, a function of recognizing a parking space may be triggered, to determine an idle parking space in the environment based on the data captured by the sensing sensor, and display the idle parking space on a terminal like a screen in a vehicle cockpit or a mobile phone of a user. For another example, a function of recognizing a parking area and a parking floor may be triggered, to determine the parking area and the parking floor in which the vehicle is parked. For another example, a function of implementing automated parking by enabling an automated parking system may be triggered, to trigger a related function and jump a scenario mode without a need for a user to deliver an instruction. This can improve user experience. For another example, a vehicle location inference function may be enabled, for example, a real-time location of the vehicle may be inferred. For another example, synchronous localization and mapping (simultaneous localization and mapping, SLAM) may be triggered, so that a map of the parking lot may be created, and the created map may be stored in a database. In this way, when the user subsequently parks in the parking lot, automated parking is implemented by invoking the map in the database; or the user may remotely control the vehicle based on the map. For example, the user can remotely control, by recording a traveling track of the vehicle and based on the map, the vehicle outside the parking lot to travel to a vicinity of the user. This can avoid a process of searching for the vehicle by the user, and improve user experience.

For example, controlling enabling of the first function may be directly controlling enabling of the first function. For example, after determining that the vehicle enters the parking lot, a vehicle control apparatus that performs the method may invoke a function related to the parking scenario of the vehicle. Alternatively, controlling enabling of the first function may be controlling enabling of the first function by sending a message to another apparatus. For example, after determining that the vehicle enters the parking lot, an apparatus like a chip or an in-vehicle infotainment that performs the method may send a message to another chip, another apparatus, or the like. The message may indicate to enable the first function.

It should be understood that the foregoing description of the first function is merely an example for ease of description. This is not limited in embodiments of this application.

In this embodiment of this application, when the first status parameter is less than or equal to the first threshold, the ambient environment data is obtained. This can reduce dependence on the sensor to capture the ambient environment data, and reduce working time of the sensor, to reduce power consumption of the sensor. Whether the vehicle is located in the parking lot area may be determined through parking lot marker detection. This helps the vehicle enable a parking-related function without a user operation, to help improve user experience.

As described above, because terrain and environments of some parking lots are complex, in an actual parking scenario, the parking lot may have no idle parking space, a small quantity of idle parking spaces, or the like. In a process in which the vehicle is parked in the parking lot, before the vehicle travels into a parking space, it may take long time to search for the parking space. If some functions, processors, sensors, and the like related to the parking scenario, for example, functions such as recognizing a parking space and recognizing a parking area and a related sensor, may be started immediately after the vehicle enters the parking lot, a large amount of invalid data may be obtained. Capturing and processing of the invalid data may cause high resource overheads, and an invalid result obtained by processing the data may affect normal running of the functions. An embodiment of this application provides a method for obtaining data of a sensor. When it is determined that a user has a parking intention, a sensor related to a parking scenario is started. This can reduce corresponding resource overheads of the sensor, and avoid interference caused by invalid data captured by the sensor to a related function.

For example, FIG. 11 is a schematic flowchart of a sensor startup method according to an embodiment of this application. The method 1000 may include some or all of the following steps.

S1010: Obtain a voice instruction or user operation information.

For example, a user may perform voice interaction with a vehicle, a terminal device, or the like. For example, the user may perform voice interaction with the vehicle, a mobile phone, or the like by using a voice wakeup word, by pressing a physical button, by pressing a virtual button, or the like. After the voice interaction starts, the vehicle or the like may obtain the voice instruction delivered by the user in the voice interaction.

For example, the user may perform an operation on the vehicle, and may obtain the user operation information based on the user operation. For example, when the user rotates a steering wheel, a steering wheel angle may be obtained. When the user steps on a brake pedal, a brake pedal stroke may be obtained. When the user adjusts a gear, gear information may be obtained. When the user performs interaction by using an interaction device like a central display screen, an operation performed by the user by using the interaction device may be obtained. It should be understood that the foregoing manners of obtaining the voice instruction and the user operation information are merely examples. This is not limited in embodiments of this application.

S1020: Detect a parking voice instruction based on the voice instruction, and start one or more sensing sensors when the parking voice instruction is detected; or detect a first operation based on the user operation information, and start one or more sensors when the first operation is detected.

For example, the parking voice instruction may be a voice instruction indicating that the user has a parking intention. For example, in the voice interaction, the user may deliver a voice instruction that may indicate that the user has the parking intention, for example, "I want to park", "Enable automated parking", or "Search for a parking space". Correspondingly, the voice instruction of the user may be captured by a microphone or the like, and then the voice instruction with the parking intention may be recognized by obtaining the voice instruction of the user.

It should be understood that the foregoing description of the parking voice instruction is merely an example. This is not limited in embodiments of this application.

For example, the first operation is detected, and the first operation may indicate that the user has the parking intention. For example, the first operation may be that the user taps a physical or virtual button, a button, or the like that triggers the parking intention. For example, the user may tap an "Automated parking" virtual button on an interaction apparatus like a central display screen, or may press a physical button with an "Automated parking" function in the vehicle cockpit. When the foregoing operation of the user is detected, it may be determined that there is the parking intention. For another example, the user may perform remote parking on a terminal device like a mobile phone, and send a remote parking instruction to the vehicle. Correspondingly, the vehicle may obtain the instruction, and may determine, by using the instruction, that the user has the parking intention. For another example, the user may indicate, on an interaction apparatus like a central display screen, a parking space expected to be parked, and it may be determined, by detecting the information, that the user has the parking intention.

For example, it may be determined, based on an area in which the vehicle is located, that the user has the parking intention. In other words, detection performed on the first operation may be combined with a scenario in which the vehicle is located. For example, after it is determined that the vehicle is located in a parking lot area, the user may operate the vehicle to reversely travel into a parking space. In this case, when it is detected that a gear is adjusted to a reverse gear, it may be determined that the user has the parking intention. For another example, it may be determined, based on a vehicle speed of the vehicle and an operation of the user, that the user has the parking intention. For example, when it is determined that the vehicle travels into a parking lot, and the user controls an acceleration pedal, an acceleration manual tab, a brake pedal, and the like to control a vehicle speed to fall within a parking vehicle speed threshold (for example, 2 km/h), it may be determined, based on a scenario of the parking lot and status information of the vehicle, that the user has the parking intention by detecting an operation of the user.

It should be understood that the foregoing description of the first operation is merely an example for ease of description. This is not limited in embodiments of this application.

For example, after it is determined that the user has the parking intention, the one or more sensing sensors may be started, and the one or more sensing sensors are controlled to capture ambient environment data. The sensor may be a sensor like a camera or a radar, and the ambient environment data may be data captured by the camera and/or the radar.

For example, starting the sensing sensor may be controlling the sensing sensor to be started and capture the ambient environment data. For example, a message may be sent to another control apparatus (for example, a sensor control apparatus) or another sensor. The message may indicate to start the sensor. After the sensor is started, the sensor may capture the ambient environment data.

For example, when the sensor is controlled to be started, if the sensor is already started, controlling the sensor to be started may be controlling the sensor to be in an on state, to obtain data subsequently captured by the sensor.

For example, the sensing sensor may be controlled to capture data. For example, after the sensing sensor is started, the sensing sensor may automatically capture data. When the sensor is in a mode in which no data is captured, for example, a sleep mode or a low power consumption mode, after being started, the sensor may alternatively switch a working mode of the sensor, to control the sensor to capture the data.

It should be understood that the foregoing description of starting the sensor to capture the data is merely an example for ease of description. This is not limited in embodiments of this application.

When the vehicle is located in the parking lot area, there may be a case in which there is no idle parking space or the vehicle needs to search for an idle parking space. In this embodiment of this application, the sensor is started when it is determined that the user has the parking intention, so that working duration of the sensor can be reduced, and overheads of the sensor can be reduced.

Further, data captured by the one or more sensors may be obtained. When data captured by a plurality of sensors is obtained, the plurality of sensors may be sensors of a same type mounted at different locations, or may be sensors of different types mounted at different locations. For example, when it is detected that the gear is adjusted to the reverse gear, data captured by the rear-view camera shown in FIG. 2 may be obtained. When the first operation or a voice instruction like "I want to park" is detected, data captured by a plurality of lidars and/or a plurality of cameras shown in FIG. 2 may be obtained, or data obtained by performing fusion processing on the data captured by the plurality of radars or cameras may be obtained. It should be understood that this is not limited in embodiments of this application.

For example, information about an environment in which the vehicle is located in a parking process may be determined based on the data captured by the sensors. For example, a vehicle, an in-vehicle infotainment system, a processor, a chip, or the like may determine an occupied parking space, an idle parking space and a parking space number of the idle parking space, another vehicle, a parking lot column, a parking lot indication sign, an area sign, other obstacle information, and the like in the parking lot based on environment data captured by a sensor like a camera sensor or a radar. For another example, a vehicle control apparatus, a vehicle-mounted chip, or the like, for example, a cockpit domain controller, may obtain the data captured by the plurality of sensors, to determine the information about the environment in which the vehicle is located in the parking process. The cockpit domain controller may directly obtain, from the sensors, the data captured by the sensors, or may obtain the data captured by the sensors by using another apparatus, for example, may obtain the data captured by the sensors by using an automated parking assist (automated parking assist, APA) system. Further, the cockpit domain controller may obtain, from the automated parking assist system, the data captured by the sensors. When the APA system may process the data captured by the sensors, the cockpit domain controller correspondingly obtains the data captured by the sensors, or the cockpit domain controller obtains data obtained by processing the data captured by the sensors by the APA system.

It should be understood that the foregoing method for obtaining the data of the sensor is merely an example for ease of description. This is not limited in embodiments of this application.

In this embodiment of this application, when it is determined that the user has the parking intention, the ambient environment data captured by the sensor is obtained, so that overheads used for processing the ambient environment data can be reduced. Further, when it is determined that the user has the parking intention, the sensor is started, so that the sensor can be started without a need for the user to manually start the sensor. This can reduce overheads of the sensor, and can also improve user experience.

As described above, after the vehicle currently travels into the parking lot like a large parking lot, because terrain and an environment of the parking lot are complex, and GPS signal strength of some parking lots is weak, a location of the vehicle cannot be accurately located. In this case, the user usually needs to record the location of the vehicle by manually taking a photo. As a result, user experience is poor. An embodiment of this application provides a method for recognizing a sign of a parking space, to recognize the parking space in which a vehicle is located. This helps a user learn of the sign of the parking space without taking a photo of the parking space by using a terminal device like a mobile phone, so that the user learns of a location of the vehicle by using the sign. This helps the user search for the vehicle.

For example, FIG. 12 is a schematic flowchart of a method for recognizing a sign of a parking space according to an embodiment of this application. The method 1100 includes some or all of the following steps.

S1110: Obtain a first parking space image.

For example, the first parking space image may include at least one parking space including a target parking space. For example, as shown in FIG. 5, due to a limitation of a factor like a mounting location of a sensor, the vehicle 410 that has been parked in a parking space may fail to obtain, by using a camera on the vehicle 410, an image of the parking space 408 in which the vehicle 410 is located. Therefore, in a parking process of the vehicle 402, when the vehicle is partially or completely located outside the parking space, a camera captures an image of the parking space. For example, a camera sensor on the vehicle may capture an image of the parking space 404 of the vehicle and an image of the sign "A106" of the parking space. The image may further include a part or all of another parking space adjacent to the parking space 404. In other words, the first parking space image may include a part or all of the at least one parking space.

For example, the first parking space image may be images of the at least one parking space at a plurality of moments. For example, capturing of an image of an ambient environment by a camera on a vehicle depends on a location of the vehicle. As shown in FIG. 5, in a process in which the vehicle 402 travels from a current location to the parking space 404, the vehicle 402 may not obtain, through recognition based on an image captured by the camera at a moment in the middle, information related to the parking space. For example, an image that is of a number of a parking space and that is captured by the camera may be characters shown in (b), (c), and (d) in FIG. 5. Although the character "A107" in (b) in FIG. 6 is not the number "A106" of the target parking space 404 of the vehicle, because the number of the parking space obtained based on the character may still fuzzily indicate a parking location of the vehicle 402, the information may also indicate the parking space of the vehicle to some extent. For example, the user may learn of, based on the information and a parking space query system of the parking lot, an area in which the vehicle is located. The information may not cause excessive misleading to the user. However, because a complete character is not included in (c) and (d) in FIG. 6, the character cannot indicate the parking space of the vehicle, but the number of the target parking space may be determined based on a plurality of images captured by the camera within first duration. For example, (c) and (d) in FIG. 6 show characters of numbers of parking spaces in two consecutive images captured by the camera, and the number "A106" of the target parking space may be recognized according to a continuous optical character recognition (optical character recognition, OCR) fusion recognition method. That is, based on the plurality of images captured by the camera sensor within the first duration, information that cannot be obtained from a single image may be obtained by fusing the plurality of images. This can improve accuracy of recognizing parking space information. The first duration may be any duration. This is not limited in embodiments of this application.

For example, the target parking space may be determined based on parking space indication information, and the parking space indication information may indicate an area in which the target parking space is located. For example, as shown in FIG. 5, before the vehicle 402 travels into a parking space, the user may indicate a parking space of the vehicle. For example, the user may specify, by using an interaction apparatus in a cockpit like a vehicle-mounted display or a terminal device like a mobile phone, the parking space into which the vehicle is to travel, or the vehicle may recognize a surrounding idle parking space, and determine the parking space of the vehicle according to a preset rule. For example, the vehicle may enable functions such as automated parking and assisted parking, and may select a parking space with a shortest traveling distance between a current location to the idle parking space as the target parking space, or select an idle parking space with highest parking probability as the target parking space based on a surrounding obstacle, to obtain the parking space indication information. For another example, after determining, based on the parking space indication information, the area in which the target parking space is located, the vehicle may trigger, to work, only at least one camera responsible for capturing an image of the area in which the parking space is located (for example, trigger the rear-view camera in FIG. 2), to obtain the first parking space image. This can reduce overheads of the sensor required in a process of obtaining the image. For another example, when using functions such as automated parking and assisted parking, the vehicle may use, based on the parking space indication information, an image captured when a parking space is recognized, for example, may perform segmentation processing on the image, to obtain an image including only the parking space. This can prevent the image of the parking space from being captured again, to reduce sensor overheads. For another example, the vehicle may obtain an image captured by an around view monitor system, and determine a part of the target parking space in the image based on selection of the user for the parking space. For another example, the vehicle may estimate a traveling route of the vehicle based on an image, for example, a steering wheel angle, captured by an around view monitor system, to determine a part of the target parking space in the image. It should be understood that the foregoing description of the parking space indication information is merely an example for ease of description. This is not limited in embodiments of this application.

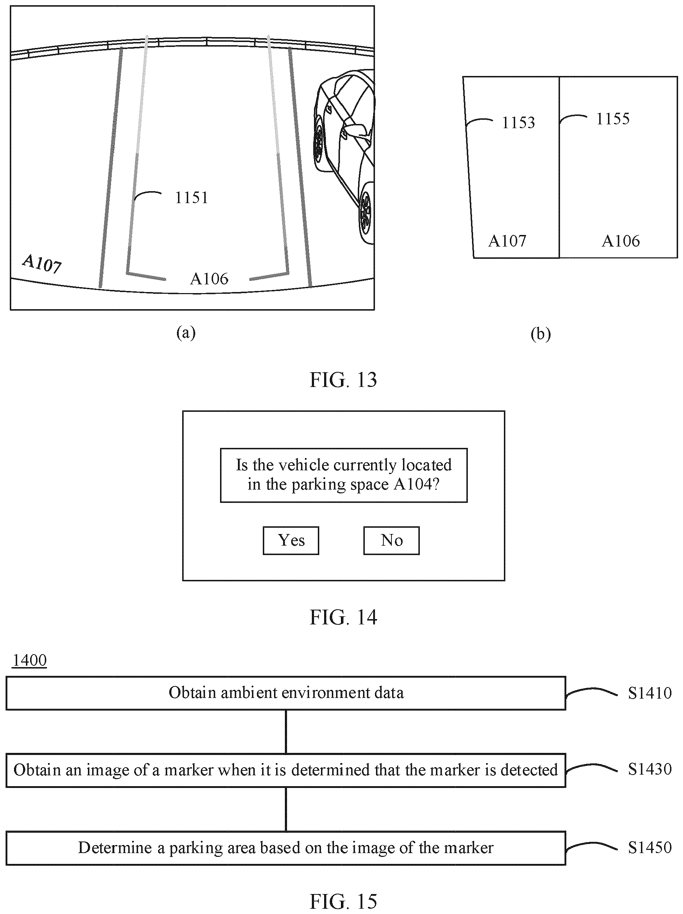

For ease of explanation and description, FIG. 13 is a diagram of an image of a parking space according to this embodiment of this application. (a) in FIG. 13 may be an image captured by a vehicle-mounted camera when the vehicle 402 in FIG. 5 travels into the parking space 404. The image may be displayed on a vehicle-mounted display apparatus (for example, a central display screen). A display interface may further include a mark 1151, where the mark may be used to highlight the target parking space 404 in the image. A user may learn, by using the mark, that the vehicle is to travel into the parking space. (b) in FIG. 13 may be a diagram of an idle parking space determined based on the image in (a) in FIG. 13. An area 1153 may indicate a part of the parking space 406, and an area 1155 may indicate an entire area of the parking space 404.

For example, the target parking space may be determined based on proportions of a plurality of parking spaces in the first parking space image. For example, when capturing an image of a parking space by using a rear-view camera, a front-view camera, or the like, the vehicle may determine proportions of the plurality of parking spaces in the image based on the captured image. For example, the vehicle may determine sizes or proportions of the area 1153 and the area 1155 in (b) in FIG. 13 in the captured image, to determine a parking space of the vehicle, and accordingly determine an image of the target parking space. For another example, when an image captured by a camera (for example, a fisheye camera) is greatly distorted, distortion correction may be performed on the image, and then proportions of the plurality of parking spaces in a corrected image are determined.

S1130: Determine a sign of the target parking space based on the first parking space image.

For example, the sign of the parking space may be determined based on the first parking space image. For example, a word included in the image may be recognized. For example, an OCR technology is used to recognize the word in the image, to obtain the sign of the parking space. The sign may be a combination of a digit and a letter, for example, "A106" shown in (a) in FIG. 5; or may be only a digit, for example, "0247"; or may be only a letter; or may be a combination of a color, a digit, and a letter; or the like. For brevity, examples are not described one by one herein again.

For example, the first parking space image may be appropriately processed in a process of determining the sign of the parking space. For example, to reduce overheads used for data processing, data captured by a sensor may be processed. For example, word detection may be performed on the image. If a word is detected, an area in which the word is located may be cropped to obtain an image of the word area, and then image processing may be performed on the image with a small size. This helps reduce overheads used for data processing. For another example, when a plurality of images may be obtained, word parts in the plurality of images may be extracted, and corresponding matching is performed, to determine the sign of the parking space. This can improve accuracy of the determined sign.

For example, one or more texts may be determined based on the first parking space image. For ease of explanation and description, the text may also be referred to as a parking space information text. For example, as shown in FIG. 5, in a process in which the vehicle 402 travels from a current location to the expected parking space 404 of the vehicle 402, in addition to the sign of the parking space, data captured by the camera on the vehicle 402 may further include other word content, for example, may include "Dedicated parking space", "Fire parking space", "Do not occupy", a license plate number (for example, "Jing A 00001 ") of a vehicle in an occupied parking space, and the like. When a corresponding text is obtained by recognizing a parking space image captured by a camera sensor, a plurality of texts may be obtained, and the sign of the parking space may be determined from the plurality of texts.

For example, the sign of the target parking space may be determined based on confidence of the one or more parking space information texts.

For example, the confidence of the parking space information texts may be determined based on a traveling track of the vehicle. For example, as shown in FIG. 5, in a process in which the vehicle 402 travels from the current location to the target parking space 404, images captured by the camera on the vehicle 402 at a plurality of moments may include a plurality of texts. For example, images that are at a plurality of moments and that include characters shown in (a) and (b) in FIG. 6 may be obtained, and coordinates of the plurality of texts at the plurality of moments may be determined based on a preset coordinate system. In this way, tracks corresponding to the plurality of texts may be determined, and confidence of the texts may be determined based on the traveling track and/or a planned track of the vehicle. For example, a track corresponding to a text in (a) in FIG. 6 may match a traveling track of the vehicle 402, but a degree of matching between a track corresponding to a text in (b) in FIG. 6 and the traveling track of the vehicle 402 is low. In this case, it may be determined that confidence of the text in (a) in FIG. 6 is higher than that of the text in (b) in FIG. 6. In this way, the text "A106" in (a) in FIG. 6 may be determined as the sign of the target parking space. This can improve accuracy of determining the sign of the target parking space.

For example, the confidence of the parking space information texts may be determined according to a confidence rule. For example, it may be considered that a text including only words (for example, "Fire hydrant" or "Safety exit") is an inappropriate text. In this case, screening may be performed on obtained words, so that accuracy of the obtained sign of the target parking space can be improved. For another example, according to an obtained confidence priority table, confidence analysis may be performed on words recognized from the parking space image. For example, Table 1 is an example table of a confidence priority of a sign of a parking space according to this embodiment of this application. Confidence sorting may be performed on the parking space information texts according to Table 1, and the sign of the target parking space is determined based on confidence. This improves accuracy of the determined sign of the target parking space. It should be understood that the foregoing confidence rule may be preconfigured, or may be obtained in another manner. This is not limited in embodiments of this application.

It should be understood that the foregoing description of the confidence is merely an example, and this is not limited in embodiments of this application. For example, confidence of a text may be determined based on a length, semantics, and the like of the text.

**Table 1**

| Text format | Example | Confidence priority |
|---|---|---|
| Letter+Digit | A136, B127 | 1 |
| Digit | 273, 0032 | 2 |
| Letter+Symbol+Digit | A-142, XG-6302 | 3 |
| Digit+Symbol+Digit | 7-173 | 4 |
| Word+Digit | Shared parking space 03 | 5 |
| Letter | AAAA | 6 |
| Word | Personal parking space, Fire passage | 7 |
| Symbol | →, -, ←,%, or the like | 8 |

For example, the vehicle-mounted display apparatus may be controlled to display an image of the target parking space. The vehicle-mounted display apparatus may be a physical display like a central display screen, or may be a virtual display like a heads-up display (heads-up display, HUD). For example, the user may indicate the target parking space on an apparatus like a central display screen. Correspondingly, the image of the target parking space may be displayed on the central display screen. The image may include a part or all of the target parking space, for example, include only a part of the sign of the target parking space. For another example, when the vehicle is parked in a manner like automated parking or assisted parking, the target parking space may be displayed on an apparatus like a central display screen. For example, a sign may be added to an interface to highlight the target parking space, as shown in (a) in FIG. 13. For another example, FIG. 14 is a diagram of an interaction interface according to this embodiment of this application. After the sign of the target parking space is determined, an apparatus like a chip or an in-vehicle infotainment that performs the method may send, to another apparatus, a message indicating the sign of the target parking space. In this way, an interface shown in FIG. 14 may be displayed on the vehicle-mounted display apparatus like a central display screen, and the user may further feed back the prompt, for example, close the message reminder (not shown in FIG. 14), or tap a "Yes" control. It should be understood that the foregoing manner of displaying the target parking space is merely an example for ease of description. This is not limited in embodiments of this application.

For example, a first message may be sent after the sign of the target parking space is determined, where the first message may indicate the target parking space. For example, after the first message is sent, the user can learn of the target parking space on a terminal device like a mobile phone. For example, the first message may be sent when it is detected that the user adjusts a gear to a parking gear, pulls up a handbrake, determines the sign of the parking space on the interaction interface, leaves the vehicle, turns off the vehicle, or the like. For example, the first message may be directly sent to a terminal device connected to the vehicle through Bluetooth, or may be sent to a terminal device through a network device or the like. For another example, the first message may be sent to a server through a network, and the server sends the message to a terminal device that logs in to/is associated with a same account as the vehicle, so that the user can learn of the target parking space by using a terminal device like a mobile phone, and then the user can learn of the target parking space without taking a photo of the parking space by using a terminal device like a mobile phone or a tablet computer. This improves user experience. For another example, after the first message is received, a terminal device like a mobile phone may display information shown in FIG. 14, and the user may make a response to the information. For example, when the user gives a positive acknowledgement, the sign of the target parking space may be stored in the mobile phone or a corresponding server. Alternatively, when the user gives a negative acknowledgement, the terminal device like the mobile phone may obtain the image of the target parking space, and prompt the user of the target parking space by using the image of the target parking space. It should be understood that the foregoing description of the first message is merely an example. This is not limited in embodiments of this application.

In this embodiment of this application, the sign of the target parking space may be determined based on the image of the target parking space. This helps the user learn of the sign of the parking space without taking a photo of the parking space by using the terminal device like the mobile phone, so that the user learns of the location of the vehicle based on the information. This helps the user search for the vehicle.

As described above, after a vehicle travels into a parking lot like a large parking lot, because terrain and an environment of the parking lot are complex, if a parking area is directly indicated and recognized based on an image captured by the vehicle in the parking lot, the image may include various movable objects such as another vehicle that is temporarily parked. Some objects and locations of the objects in the scenario may change over time. This is not conducive for the user to directly determine the parking area based on the image. In addition, in an actual scenario, a plurality of objects and locations in the parking lot may have various signs, after an environment image of the parking lot is captured, a plurality of types of texts related to the signs may be obtained by recognizing the image, for example, a text related to a floor sign, like "Basement level 1", and a sign irrelevant to the parking area, like "Safety exit", "No smoking", or "Exit". Although the plurality of signs may be obtained by obtaining the environment image of the parking lot, high operation overheads may be required to screen and obtain a sign of the parking area from the environment image of the parking lot. In addition, because there is much information or many signs irrelevant to the parking area, accuracy of recognizing the parking area may be reduced. An embodiment of this application provides a method for recognizing a parking area. Marker detection in the parking area is performed, and the parking area is determined based on an image of a marker when the marker in the parking area is detected. This can reduce overheads used for determining a sign of the parking area, and also improve accuracy of the determined sign of the parking area. In addition, when the sign of the parking area cannot be obtained, information about the parking area in which the vehicle is located may be prompted based on the marker. This also helps a user learn of the parking area in which the vehicle is located without taking a photo of the parking area by using a terminal device like a mobile phone, to help the user search for the vehicle.

For example, FIG. 15 shows a method for recognizing a parking area according to an embodiment of this application. The method 1400 may include some or all of the following steps.

S1410: Obtain ambient environment data.

For example, the ambient environment data may include data captured by a sensing sensor like a radar and/or a camera, for example, may include point cloud data captured by the radar, or may include image data captured by the camera. The ambient environment data may also include data captured by a radar sensor and a camera sensor. For example, the data separately captured by the camera sensor and the radar sensor may be fused and then analyzed. The ambient environment data may be used to detect a marker in a parking area. It should be understood that this is not limited in embodiments of this application.

For example, the ambient environment data may be used to detect the marker in the parking area, and the marker in the parking area may include an object that does not move in the parking area. For example, as shown in FIG. 8, the vehicle 702 may detect, based on data captured by a sensor on the vehicle 702, whether there is a marker in the parking area around the vehicle 702, for example, the column 720, the column 722, the column 724, or an inner wall 728 of the parking lot shown in FIG. 8.

In some possible implementations, the marker in the parking area is a column. For example, as shown in FIG. 4, relatively speaking, distribution density of the column in the parking lot is higher than that of the inner wall. Parking areas may be more precisely distinguished based on the column, and a more accurate parking area may be determined based on the column.

S 1430: Obtain an image of the marker when it is determined that the marker is detected.

For example, when it is determined that the marker is detected, the image of the marker that is captured by the sensing sensor may be obtained. For example, whether there is the marker in the parking area in an ambient environment may be detected based on the data captured by a radar sensor. When an apparatus like a chip or an in-vehicle infotainment or a vehicle detects that there is the marker, the camera sensor may be controlled to capture the image of the marker. For example, a plurality of cameras may be started in a parking process to capture images of the marker at a plurality of angles, so that more details of the marker can be obtained based on the plurality of images. The image may include another object. Alternatively, a camera sensor corresponding to an area in which the marker is located may be started, so that power consumption of the sensor used when the image of the marker is obtained can be reduced. For another example, an image of an ambient environment may be captured by using a camera, and the marker may be detected based on the image. When the marker is detected, a part that includes the marker in the image may be processed. For example, a column area in the image is cropped, to obtain an image of the column. Alternatively, the camera or another camera sensor may be controlled to capture the image of the marker. For example, the image of the marker may be captured again when image quality cannot meet a preset requirement. It should be understood that the foregoing methods for obtaining the image of the marker are merely examples. This is not limited in embodiments of this application.

In some possible implementations, when the marker is successfully detected, a vehicle-mounted display apparatus may be controlled to display the image of the marker. For example, when marker detection is performed in the parking area by using the image, and the marker is detected based on the image, the image of the marker may be displayed on the vehicle-mounted display apparatus. Further, the marker may be highlighted by using a line frame or the like on an interface displayed by the display.

S1450: Determine the parking area based on the image of the marker.

For example, different parking areas may be distinguished by using different signs, to facilitate management.

For example, a sign of the parking area may be determined based on the image of the marker, and the sign of the parking area may indicate the parking area. For example, for the marker in the parking area shown in (b) in FIG. 9, after the image of the marker is obtained, a word in the image may be recognized, for example, the word in the image is recognized by using an OCR technology or another technology, to obtain the sign of the parking area. The sign may be a combination of a letter and a word, for example, an area B; or may be only a letter, for example, "B"; or may be represented in another manner, for example, a combination of a letter, a word, and a digit. It should be understood that the foregoing description of the sign of the parking area is merely an example. This is not limited in embodiments of this application.

For example, when a sign of a target parking space includes an area keyword, the sign of the parking area may be determined based on the sign of the target parking space. For example, as shown in FIG. 8, images of the column 720, the column 722, and the column 724 may be obtained. For example, the column 720 may include a sign of a parking area to which the area 716 belongs. For example, the column 720 may be shown in (a) in FIG. 8. The column 722 may include a sign of a parking area to which the area 718 belongs. For example, the column 722 may be shown in (b) in FIG. 8, the target parking space may be the parking space 704, and the sign of the target parking space may be "A106". Because the sign of the target parking space includes an area keyword "A", the sign "Area A" of the area 716 in which the vehicle is located may be determined based on the images of the plurality of columns and the area keyword. For another example, the area keyword may be a common letter, digit, or the like included in both the sign of the target parking space and the sign of the parking area.

For example, when there are a plurality of markers in the parking area, the marker in the parking area may be determined based on a distance between the target parking space and each of the plurality of markers, to determine the sign of the parking area. For example, as shown in FIG. 8, when the column 720 is shown in (a) in FIG. 9, and the column 722 is shown in (b) in FIG. 9, the distance between the target parking space and each of the plurality of markers may be determined based on data captured by a camera and/or a radar. For example, a distance between the column 720 and the parking space 704 is less than a distance between the column 722 and the parking space 704. In this case, it may be determined that the marker in the parking area in which the target parking space is located is the column 720, and then it may be determined that the sign of the parking area in which the vehicle is located is "Area A".

For example, one or more texts may be determined based on the image of the marker. For ease of explanation and description, the text may be referred to as marker information or a marker information text. For example, the marker may be shown in (a) in FIG. 9. A plurality of texts such as "Area A", "Safety exit", and "←" may be obtained based on the image of the marker, and the sign of the parking area may be determined based on the plurality of texts, for example, rationality verification is performed on the plurality of texts. It should be understood that the foregoing description of the marker information text is merely an example. This is not limited in embodiments of this application.

For example, the sign of the parking area may be determined based on confidence of the one or more marker information texts.

For example, confidence of the marker information texts may be determined according to a confidence rule. For example, whether the text includes a preset keyword, for example, "Area" or "Region" may be recognized. For example, the marker in the parking area may be shown in (a) in FIG. 9, and a plurality of texts such as "Area A", "Safety exit", and "←" may be obtained based on the image of the marker, where "Area A" includes a keyword "Area", so that "Area A" may be determined as the sign of the parking area. For another example, according to an obtained confidence priority table, confidence analysis may be performed on words recognized from the image of the marker. For example, Table 2 is an example table of a confidence priority of a sign of a parking area according to this embodiment of this application. Confidence sorting may be performed on the marker information texts according to Table 2, to determine the sign of the parking area. It should be understood that the foregoing description of the confidence is merely an example for ease of description. This is not limited in embodiments of this application.

It should be understood that the foregoing description of the confidence is merely an example. This is not limited in embodiments of this application.

For example, the sign of the parking area may be determined based on images of the marker in the parking area at a plurality of moments. For example, due to a limitation of a factor like a shooting angle of a camera, the obtained image of the marker may include only a partial area of the marker, and then a complete sign of the parking area may not be obtained. In this case, images of the column 720 at a plurality of moments may be obtained. For example, the sign of the parking area may be obtained according to a fusion recognition algorithm. This improves accuracy of determining the parking area.

**Table 2**

| Text format | Example | Confidence priority |
|---|---|---|
| Letter+Word | Area A | 1 |
| Letter | A | 2 |
| Letter+Symbol+Digit | A-140 to A-169, P1-J-H3, or the like | 3 |
| Text+Digit | Area 1 | 4 |
| Word | Personal parking space, Fire passage | 5 |
| Symbol | →, -, ←,%, or the like | 6 |

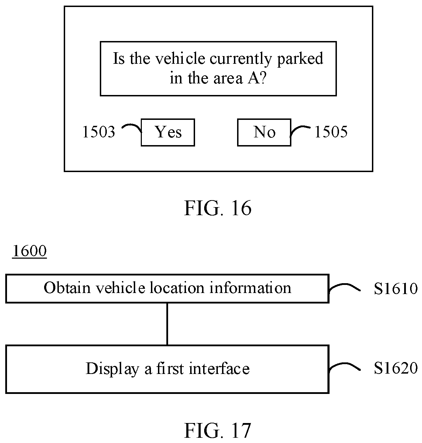

For example, a second message may be sent after the parking area is determined, where the second message may indicate the parking area. For example, after the parking area is determined, for example, when a user adjusts a gear to a parking gear, pulls up a handbrake, determines the parking area on the interaction interface, leaves the vehicle, turns off the vehicle, or the like, the second message is sent. After the second message is sent, a network device or another device may prompt the user with the parking area, so that a terminal device like a mobile phone can learn of the parking area to remind the user. In this way, the user can learn of the parking area without taking a photo of the parking area by using the terminal device like the mobile phone. This can improve user experience. For another example, after the parking area is determined, the vehicle may send a message to a cloud server through a vehicle-mounted communication apparatus, to indicate the parking area, so that a terminal device like a mobile phone may learn of the parking area from the cloud server; or the vehicle may send, through Wi-Fi, Bluetooth, or the like, a message to a terminal device like a mobile phone associated with the vehicle, so that the terminal device can learn of the parking area. For another example, FIG. 16 is a diagram of another interaction interface according to this embodiment of this application. After receiving the second message, a terminal device like a mobile phone may display an interface shown in FIG. 16 on an interface of the terminal device, and the user may further feed back the message, for example, tap a negative acknowledgement control 1505, a positive acknowledgement control 1503, or the like. When obtaining a positive acknowledgement, the mobile phone may store the sign of the parking area locally or in a server. Alternatively, when obtaining a negative acknowledgement, the mobile phone may obtain an image of an ambient environment of the vehicle, an image of the marker in the parking area, and the like, to prompt the user in an image manner. It should be understood that the foregoing description of the second message is merely an example. This is not limited in embodiments of this application.

For example, the vehicle-mounted display apparatus may be controlled to display the sign of the parking area. For example, after the parking area is determined, the interface shown in FIG. 16 may be displayed on a central display screen of the vehicle, and feedback from the user may be further received by using an interaction device. For example, the user may disable a message reminder on the central display screen, or give a positive acknowledge to display information. For another example, after the sign of the parking area is determined, an image of the marker in the parking area may be displayed on the vehicle-mounted display apparatus like a central display screen. The image may include a sign of the marker. For example, an image of a partial area of a marker 810 in (a) in FIG. 9 may be displayed, and the area includes a sign 815.

In this embodiment of this application, when the marker in the parking area is detected, the parking area is determined by obtaining the image of the marker in the parking area. This can improve accuracy of determining the sign of the parking area, and reduce resource overheads used for determining the parking area. Alternatively, when the sign of the parking area cannot be recognized, the parking area may be determined by using the marker. This also helps the user learn of the parking area in which the vehicle is located without taking an image of the parking area by using the terminal device like the mobile phone, to help the user search for the vehicle.

As described above, after the vehicle currently travels into the parking lot like a large parking lot, because terrain and an environment of the parking lot are complex, and GPS signal strength of some parking lots is weak, a location of the vehicle cannot be accurately located. In this case, the user usually needs to record the location of the vehicle by manually taking an image. As a result, user experience is poor. An embodiment of this application provides an interaction method and apparatus for indicating a parking location, and a terminal device. Vehicle location information is obtained, and then a parking location of a vehicle is indicated on an interface. This helps a user learn of a parking space and/or a parking area in which the vehicle is located without taking an image of the parking space by using a terminal device like a mobile phone, so that user experience is improved.

For example, FIG. 17 is a schematic flowchart of an interaction method for indicating a parking location according to an embodiment of this application. The method includes the following steps.

S1610: Obtain vehicle location information.

For example, the vehicle location information may indicate a location of a vehicle. For example, a terminal device like a mobile phone may obtain, from the vehicle, a network device, or the like, a first message indicating a target parking space. For another example, a terminal device like a mobile phone may obtain a second message indicating a parking area (or referred to as a parking zone). For another example, the obtained vehicle location information may indicate both a target parking space and a parking area. In other words, the first message and the second message may be a same message. For another example, a first prompt message may be received, and the first prompt message may include parking location information of the vehicle, so that the parking location information can be obtained. For another example, a terminal device like a mobile phone may obtain an image of an ambient environment of the vehicle, and present the image of the ambient environment, so that a user can learn of an area in which the vehicle is located. It should be understood that the foregoing description of the vehicle location information is merely an example. This is not limited in embodiments of this application.

For example, the terminal device may be associated with the vehicle. For example, the terminal device like the mobile phone may be directly connected to the vehicle in a wired or wireless manner. For example, the mobile phone may be connected to the vehicle through Bluetooth or in another manner. For another example, the mobile phone may be a terminal device that logs in to and is associated with a same account as the vehicle. It should be understood that the foregoing manner is merely an example for ease of description. This is not limited in embodiments of this application.

S1620: Display a first interface, where the first interface may be used to display a parking location of the vehicle.

For example, after the vehicle location information is obtained, the first interface may be correspondingly displayed on a display associated with the terminal device. The first interface may indicate the parking area and/or the target parking space.

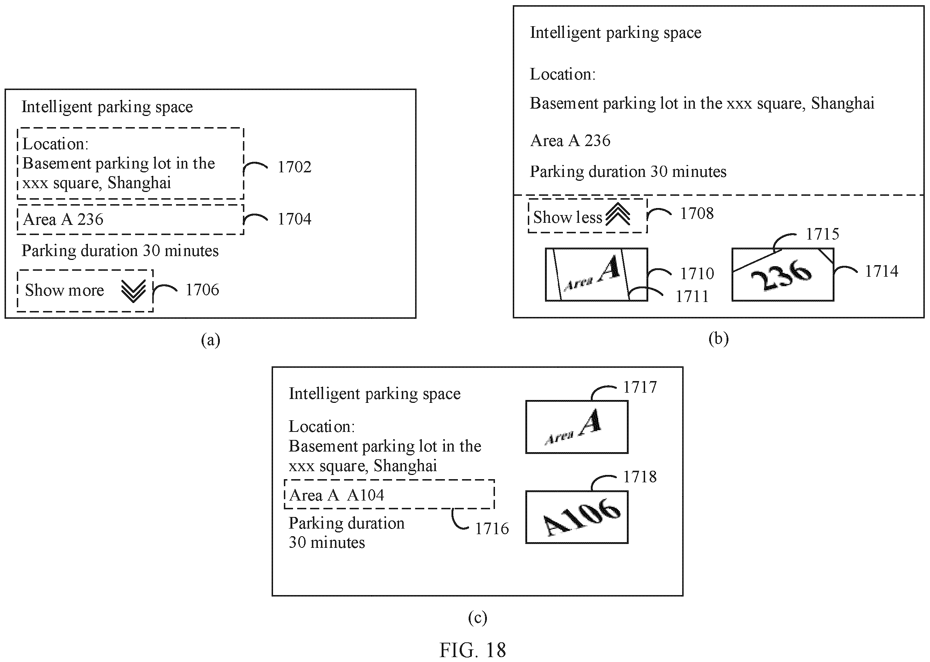

For ease of explanation and description, for example, FIG. 18 is a diagram of an interaction interface according to this embodiment of this application. The interface may be an interface displayed by a terminal device like a mobile phone or a tablet computer on a display associated with the terminal device.

Refer to an interface shown in (a) in FIG. 18, after the mobile phone obtains the vehicle location information, for example, the parking area in which the vehicle is located is "Area A", and the target parking space is "236", the mobile phone may display the interface shown in (a) in FIG. 18. An area 1704 on the interface may include a sign "Area A" of the parking area and a sign "236" of the target parking space. The interface may further include location information of a parking lot in which the vehicle is located. For example, an address of the parking lot is displayed in an area 1702 on the interface. The interface may further include another control, for example, a control 1706. The user may tap the control to obtain other information related to the parking area and/or the target parking space. For example, when detecting that the user taps the control 1706, the mobile phone displays an interface shown in (b) in FIG. 18.

Refer to the interface shown in (b) in FIG. 18. In response to detecting that the user taps the control 1706 in (a) in FIG. 18, the mobile phone may display an image 1710 of a marker in the parking area on the interface, and the marker 1711 in the image 1710 may be a column in (a) in FIG. 9. In other words, the image may display at least a partial area of the marker in the parking area, for example, an area indicating the sign of the parking area. An image 1714 of the target parking space may be further displayed on the interface. A parking space 1715 in the image 1714 may be the parking space 704 in FIG. 7. In other words, the image may display at least a partial area of the target parking space, for example, an area indicating the sign of the target parking space. The interface may further include another control, for example, a control 1708. When detecting that the user taps the control 1708, the mobile phone may display the interface shown in (a) in FIG. 18.

Refer to an interface shown in (c) in FIG. 18. The interface may display both the sign of the target parking space and the sign of the parking area, for example, content shown in an area 1716, and may also display an image of the target parking space and an image of a marker in the parking area, for example, an image 1717 and an image 1718.

It should be understood that the foregoing description of the first interface is merely an example for ease of description. This is not limited in embodiments of this application.

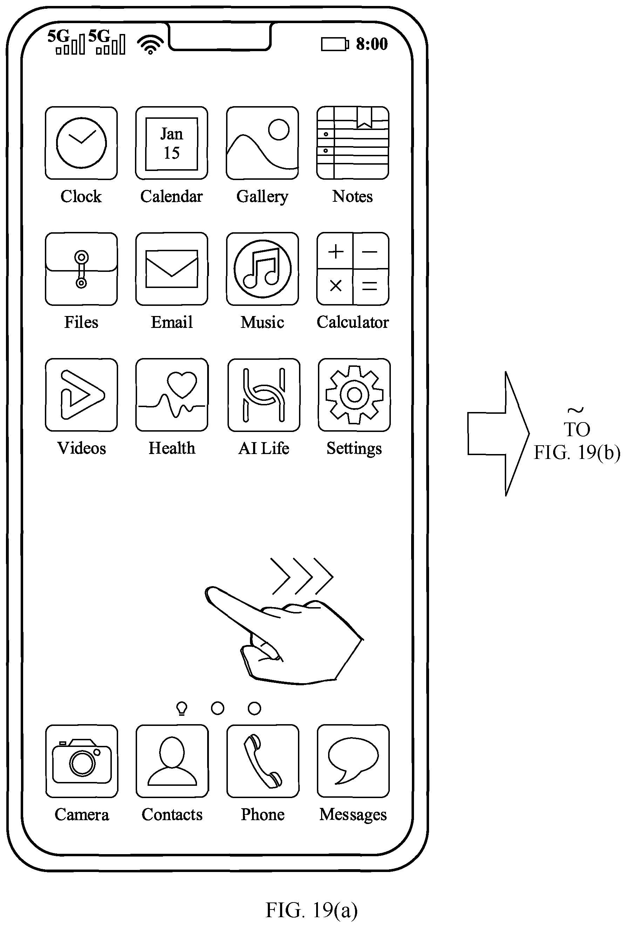

For example, FIG. 19(a) to FIG. 19(c) show a group of graphical user interfaces (graphical user interfaces, GUIs) according to an embodiment of this application.

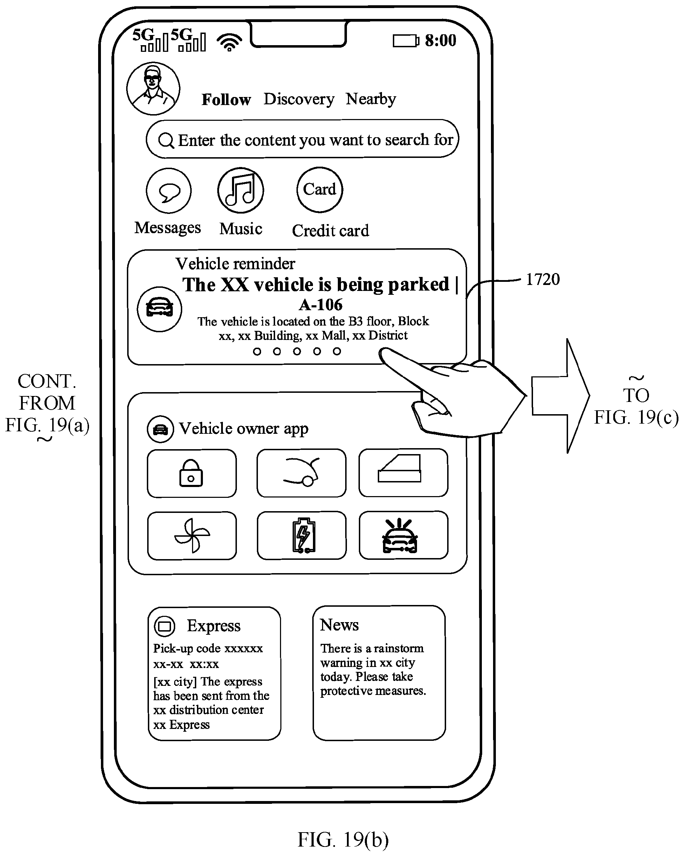

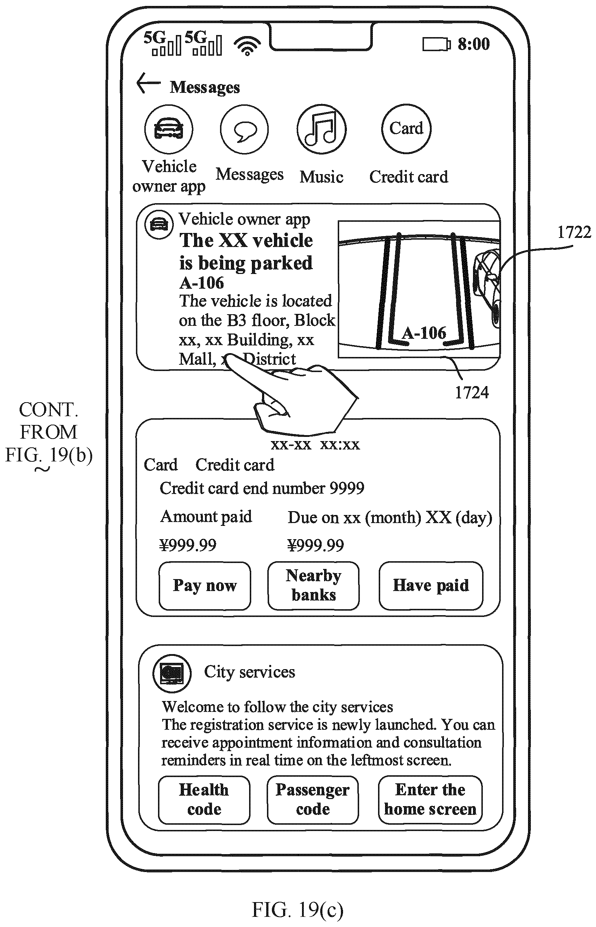

When a user searches for a vehicle by using an electronic device, the user may slide leftward on a home screen page of the electronic device shown in FIG. 19(a), and the electronic device displays a leftmost screen shown in FIG. 19(b) in response to a leftward sliding operation of the user. The electronic device may display a service account 1720 on the leftmost screen interface. The service account 1720 displays a geographical location for parking the vehicle, for example, "The vehicle is located on the B3 floor, Block xx, xx Building, xx Mall, xx District", and a parking space number of the parking space for parking the vehicle, for example, "A-106". "A" may indicate a parking zone, and "106" may indicate a specific number of the parking space. Alternatively, the service account 1720 may display a type or a name of the parked vehicle, for example, "The XX vehicle is being parked". Further, in response to an operation of tapping the service account 1720 by the user, the electronic device may display, on a service widget 1722 shown in FIG. 19(c), the geographical location for parking the vehicle, the parking space number of the parking space for parking the vehicle, and a parking space image 1724 including the parking space number. In this way, the user can more intuitively learn of related information of the parking space number at the parking location of the vehicle.

In some possible implementations, when detecting an operation of viewing leftmost screen information by the user, the electronic device queries a vehicle owner app about whether the parking location information is stored. If the parking location information is stored, the electronic device determines a parking location of the vehicle based on the parking location information, and displays the parking location on the leftmost screen, for example, one or more of the geographical location for parking the vehicle, the parking space number at the parking location of the vehicle, and the parking space image.

It should be understood that, in this embodiment of this application, the leftmost screen is an interface displayed after a rightward sliding operation of the user on a home screen (for example, a home screen of the mobile phone shown in FIG. 19(a)) of the mobile phone is detected. The home screen of the mobile phone shown in FIG. 19(a) may be the second home screen page on the home screen of the mobile phone, and the leftmost screen may be the first home screen page on the home screen of the mobile phone, as shown in FIG. 19(b). The leftmost screen may provide the user with services such as search, application suggestions, a quick service, a missed call notification widget, and AI Tips. The leftmost screen may display some applications (applications, APPs) frequently used by the user.

For example, when selecting the vehicle by using an electronic device like a mobile phone, the user may alternatively display a notification widget on a drop-down notification panel interface of the electronic device like the mobile phone. For example, the notification widget may display the geographical location for parking the vehicle, for example, "The vehicle is located on the B3 floor, Block xx, xx Building, xx Mall, xx District", and information about the parking space for parking the vehicle, for example, "A-106". For another example, the notification widget may display the geographical location for parking the vehicle, a sign of the parking space for parking the vehicle, and the parking space image including the sign of the parking space. In this way, the user can more intuitively learn of the parking location information of the vehicle.

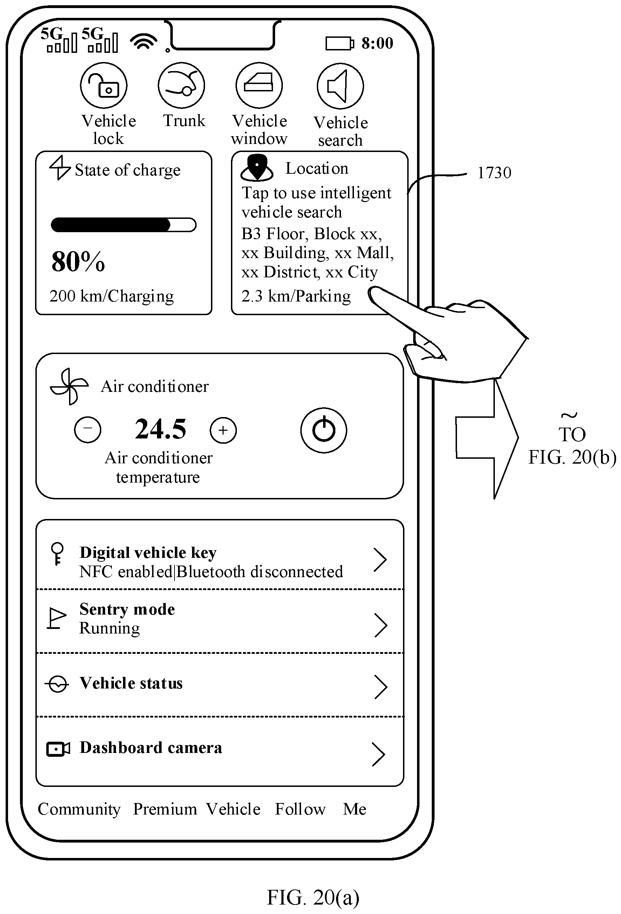

In some possible implementations, the user may enter a home screen of the vehicle owner app by tapping the service widget 1720, sliding down the notification widget on the notification panel interface, or tapping an icon of the vehicle owner app. In response to an operation of the user, the electronic device like the mobile phone may display the home screen page of the vehicle owner app shown in FIG. 20(a). The home screen page of the vehicle owner app may include a location information box 1730. The location information box 1730 may include the address of the parking location of the vehicle, for example, "B3 Floor, Block xx, xx Building, xx Mall, xx District, xx City..."; information about a distance between the vehicle and the electronic device, for example, "2.3 km"; information about a current status of the vehicle, for example, "Parking"; and prompt information "Tap to use intelligent vehicle search".

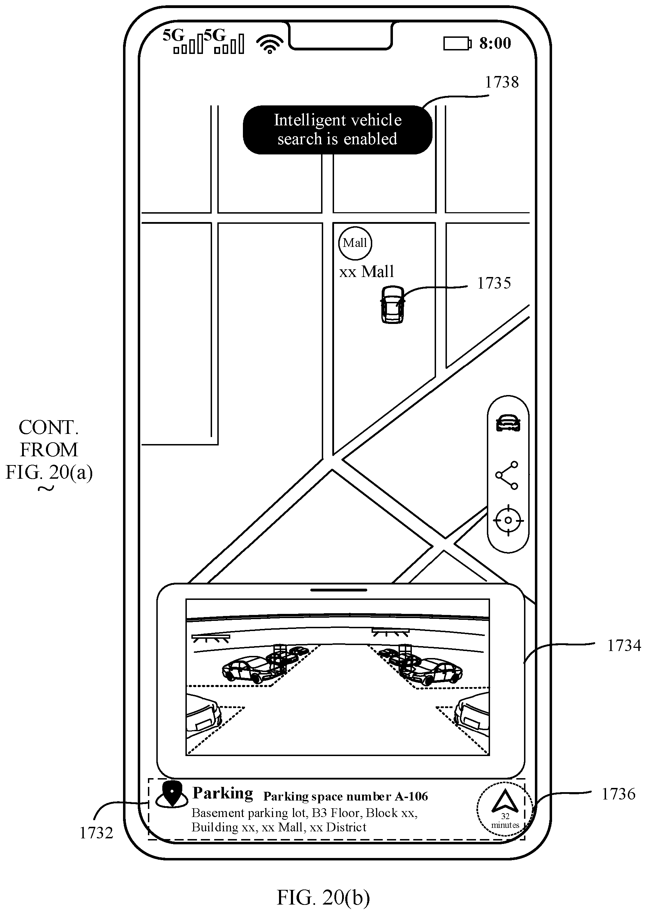

Further, after the user taps the location information box 1730, the electronic device displays, in response to the tap operation of the user, an intelligent vehicle search interface shown in FIG. 20(b). The intelligent vehicle search interface may display a navigation information box 1732, and the navigation information box 1732 includes information 1736 about time required for the electronic device to navigate to a location of the vehicle. The intelligent vehicle search interface may further display a vehicle parking location image box 1734, a map including the geographical location for parking the vehicle, and a location 1735 of the vehicle on the map. In some possible implementations, in response to the operation of tapping the location information box 1730 by the user, when displaying the intelligent vehicle search interface, the electronic device may further display a vehicle search animation effect of "Intelligent vehicle search is enabled" shown in 1738 in (b) in FIG. 8.

For example, the electronic device may alternatively be a terminal device like a smartwatch or a tablet computer. A form of the terminal device is not limited in embodiments of this application.

In this embodiment of this application, after obtaining the vehicle location information, the terminal device displays the parking location of the vehicle on the first interface, so that the user can learn of the parking location of the vehicle. This helps the user search for the vehicle, and can improve user experience.

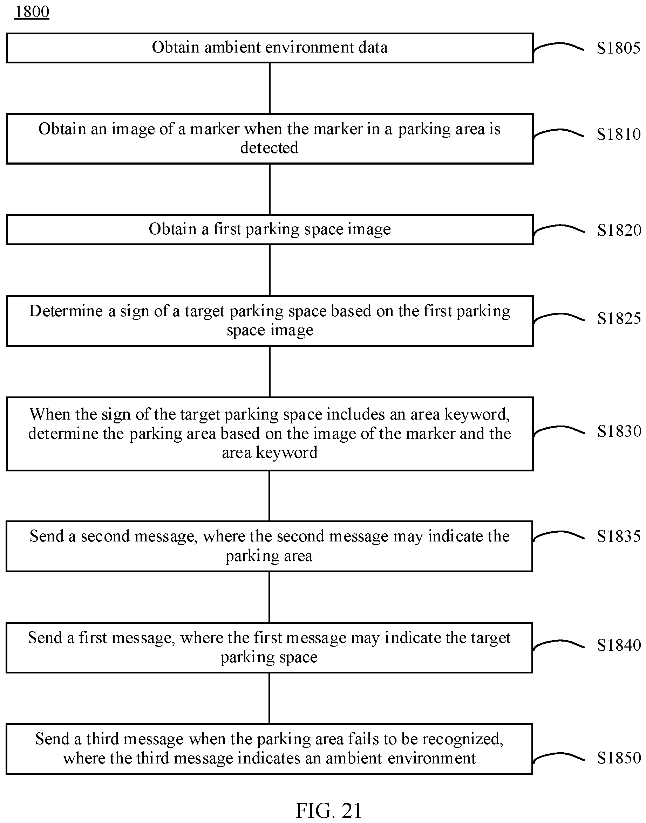

It should be understood that the methods 900, 1000, 1100, 1400, and 1600 may be combined with each other. This is not limited in embodiments of this application. For example, refer to FIG. 21 to FIG. 29. FIG. 21 is an example flowchart of recognizing a parking area according to an embodiment of this application. A method 1800 may include some or all of the following steps.

S1805: Obtain ambient environment data.

For example, the ambient environment data may be used for marker detection in a parking area. The ambient environment data may be data captured by one or more sensors. For example, the ambient environment data may be data captured by one or more cameras and/or one or more radar sensors. This is not limited in embodiments of this application.

S1810: Obtain an image of the marker when the marker in the parking area is detected.

For example, the marker in the parking area may be a column or the like. For description of the marker in the parking area, refer to step S1410 and the like.

S1820: Obtain a first parking space image.

For example, images of one or more parking spaces including a target parking space may be obtained, and the target parking space may be determined based on a parking space indication message. It should be understood that, for description of obtaining the first parking space image, refer to step S1110 and the like.

For example, step of obtaining the ambient environment data and step of obtaining the first parking space image may be performed simultaneously. In other words, step S1820 and some or all of step S1805 and step S1810 may be performed simultaneously. Alternatively, step S1820 may be performed first. Alternatively, some or all of step S1805 and step S1810 may be performed first. This is not limited in embodiments of this application.

S1825: Determine a sign of the target parking space based on the first parking space image.

For example, the sign of the target parking space may be determined based on the first parking space image. It should be understood that for description of determining the sign of the target parking space, refer to step S1130.

For example, whether the sign includes an area keyword may be determined based on the sign of the target parking space. For example, it may be considered that a sign "013" does not include an area keyword, and it may be considered that an area keyword of a sign "A106" is "A". For another example, a sign of a parking area in which a parking space whose sign is "H-0367" is located is "P1-H", and it may be considered that an area keyword is "H". For another example, the sign of the target parking space is, for example, "C0237", and when there are a plurality of marker information texts (for example, texts "C17", "D17", and "C18"), the sign of the target parking space may be matched with the marker information texts. For example, "C0237" may be matched with "C17" and "C18", and it may be determined that an area keyword is "C". Further, a sign of the parking area may be determined. For example, the sign of the parking area may be determined based on a distance between the vehicle in a parking pose and the marker in which the sign is located.

S1830: When the sign of the target parking space includes the area keyword, determine the parking area based on the image of the marker and the area keyword.

For example, a plurality of parking areas may be distinguished based on signs of the parking areas. For example, when a plurality of markers are detected, images of the plurality of markers may be obtained, and the plurality of markers may indicate the plurality of parking areas. A first marker may be determined based on a distance between the target parking space and each of the plurality of markers, and the first marker may be a marker with a shortest distance from the target parking space in the plurality of markers. The sign of the parking area may be determined based on an image of the marker.

For example, the sign of the parking area may be determined based on the image of the marker, and then the parking area is determined based on the sign of the parking area. It should be understood that, for a manner of determining the parking area, refer to step S145.

For example, when the sign of the target parking space includes the area keyword, the parking area may be determined based on the area keyword. For example, when a plurality of texts, such as "P1", "P1-H", "P1-G", and "Safety exit", are determined based on images of a plurality of markers, although the parking area may be determined by performing screening on the plurality of texts based on confidence of the plurality of texts, because a confidence evaluation rule may not be applicable to all parking lots, or confidence levels of the plurality of texts may be the same, for example, "P1-H" and "P1-G", the sign of the accurate parking area may not be determined. In this case, the parking area may be determined based on the area keyword. For example, the sign of the target parking space is "H-013". Because the sign of the target parking space and the text "P1-H" have a same area keyword "H", it may be determined that the parking area is "P1-H". It should be understood that the foregoing description of determining the parking area is merely an example for ease of description. This is not limited in embodiments of this application.

In this embodiment of this application, the area keyword is determined by using the sign of the target parking space, the sign of the parking area is determined based on the area keyword and the image of the marker in the parking area, and then the parking area is recognized based on the sign of the parking area, so that accuracy of recognizing the parking area can be improved.

It should be understood that the foregoing method for determining the parking area is merely an example for ease of description. This is not limited in embodiments of this application.

Optionally, in S1835, a second message is sent, where the second message may indicate the parking area.

For example, the second message may indicate the parking area by using a sign indicating the parking area, or may indicate the parking area by using the marker indicating the parking area, for example, by sending the image of the marker in the parking area. It should be understood that this is not limited in embodiments of this application.

Correspondingly, a terminal device may obtain the second message, and may display a first interface based on the second message, so that a user can learn of a parking location of the vehicle based on the interface.

Optionally, in S1840, a first message is sent, where the first message may indicate the target parking space.

For example, the first message may indicate the target parking space by using the sign indicating the target parking space, or may indicate the target parking space by using the image indicating the target parking space. It should be understood that this is not limited in embodiments of this application.

Correspondingly, the terminal device may obtain the first message, and may display a first interface based on the first message, so that the user can learn of, based on the interface, the parking space in which the vehicle is located.

It should be understood that step S1835 may be performed first, or step S1840 may be performed first, or step S1835 and step S1840 may be performed simultaneously. This is not limited in embodiments of this application.

Optionally, in S1850, a third message may be sent when the parking area fails to be recognized, where the third message indicates an ambient environment.

For example, when the parking area fails to be recognized, the third message indicating the ambient environment may be sent. For example, for some parking lots, there may be no division of a plurality of parking areas, and only a sign of a parking space may be marked in an area in which the parking space is located. Therefore, the vehicle may not learn of, based on an image of a marker captured by a sensor on the vehicle, the parking area in which the vehicle is located. In this case, the third message may be sent to indicate the ambient environment data of the vehicle. For example, an image captured by an around view monitor (around view monitor, AVM) system, a digital video recorder (digital video recorder, DVR), or the like may be sent to the terminal device like a mobile phone, to help the user search for the vehicle.

In this embodiment of this application, the parking area is determined based on the area keyword and the image of the marker in the parking area, so that accuracy of the determined parking area can be improved. Further, the first message may be sent to indicate the target parking space, and the second message may be sent to indicate the parking area, so that the user can learn of the parking area and/or a target area in which the vehicle is located without taking an image of the parking area and/or the target area. This improves user experience.

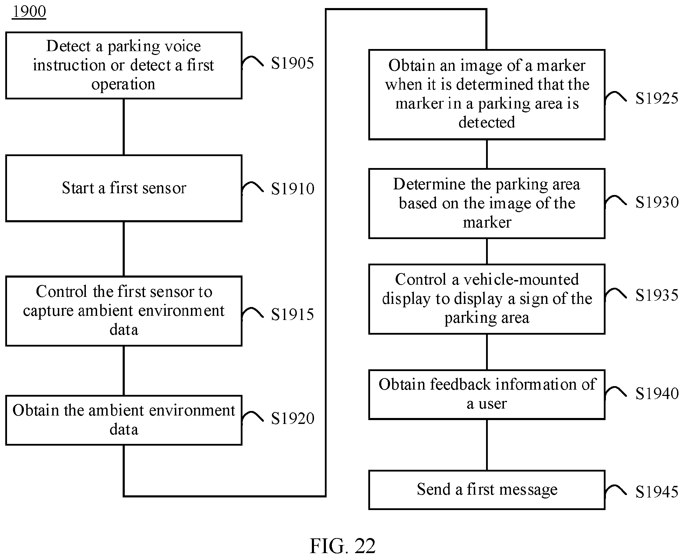

For example, FIG. 22 is a schematic flowchart of a method for recognizing a parking area according to an embodiment of this application. The method 1900 may include some or all of the following steps.

S1905: Detect a parking voice instruction or detect a first operation.

For example, the parking voice instruction may be a voice instruction indicating that a user has a parking intention, and the first operation may indicate that the user has the parking intention. For example, the first operation may be that the user taps an "Automated parking" virtual button on a central display screen of a vehicle. It should be understood that, for description of the first operation, refer to step S1020 and the like.

For example, the parking voice instruction may be detected based on an obtained voice instruction, and the first operation may be detected based on obtained user operation information.

S1910: Start a first sensor when the first operation is detected, or start a first sensor based on the parking voice instruction.

For example, the first sensor is started when the first operation is detected, or the first sensor is started based on the parking voice instruction. In other words, the first sensor is started when it is determined that the user has the parking intention.

For example, step S1905 and step S1910 may correspond to step S1010 and step S1020. For brevity, details are not described herein again.

In this embodiment of this application, the first sensor is started when it is determined that the user has the parking intention, so that time spent on data capture by the sensor can be reduced, overheads of the sensor can be reduced, and a service life of the sensor can be prolonged.

S1915: Control the first sensor to capture ambient environment data.

For example, after the first sensor is started, the sensor captures the ambient environment data, and the ambient environment data may be used for marker detection in a parking area. The first sensor may include one or more sensors of a same type or different types. For example, after the voice instruction is obtained, the plurality of side-view cameras and lidars shown in FIG. 2 may be started, and the ambient environment data may be captured after the sensor is started. For another example, when it is detected that the user adjusts a gear to a reverse gear, the rear-view camera shown in FIG. 2 may be started.

For example, starting the first sensor and controlling the first sensor to capture the ambient environment data may be directly controlling the first sensor to start and capture the ambient environment data, or may be sending a message to another control apparatus (for example, a sensor control apparatus) or another sensor. The message may indicate the sensor to capture the ambient environment data.

S1920: Obtain the ambient environment data.

S1925: Obtain an image of a marker when the marker in the parking area is detected.

For example, step S1920 and step S1925 may correspond to step S1410 and step S1430. For brevity, details are not described herein again.

S1930: Determine the parking area based on the image of the marker in the parking area.

For example, a sign of the parking area may be determined based on the image of the marker, and an area indicated by the sign of the parking area may be the parking area.

For example, for a method for determining the parking area, refer to step S1450 and the like.

Optionally, in S1935, a vehicle-mounted display apparatus is controlled to display the sign of the parking area.

For example, after the sign of the parking area is determined, the sign of the parking area may be displayed on the vehicle-mounted display apparatus. For example, "The vehicle is currently located in the area A in the parking lot. Please confirm." may be displayed on the central display screen. It should be understood that the foregoing example is merely used for description, and this is not limited in embodiments of this application.

Optionally, in S1940, feedback information of the user is obtained.

For example, the feedback information of the user may be obtained by detecting an operation of the user. For example, the interface shown in FIG. 16 may be displayed on the central display screen. When it is detected that the user taps the control 1503, it may be determined that feedback of the user is a positive acknowledgement; or when it is detected that the user taps the control 1505, it may be determined that feedback of the user is a negative acknowledgement.

Optionally, in S1945, a first message is sent.

For example, when it is determined that the feedback information of the user is the positive acknowledgement, the first message may be sent, and the sign of the parking area may be learned of by using the message, so that the user can learn of, by using a terminal device like a mobile phone, the parking area in which the vehicle is located.

For example, when it is determined that the range information of the user is the negative acknowledgement, the first message may be sent, and the image of the marker in the parking area may be obtained by using the message, so that the parking area in which the vehicle is located can be learned of based on the image of the marker.

It should be understood that the foregoing description of the first message is merely an example for ease of description. This is not limited in embodiments of this application.

In this embodiment of this application, when it is determined that the user has the parking intention, the first sensor is started, and marker detection is performed in the parking area based on the ambient environment data captured by the sensor. When the marker is detected, the parking area may be determined based on the image of the marker. This can reduce overheads of the sensor used in a process of recognizing the parking area.

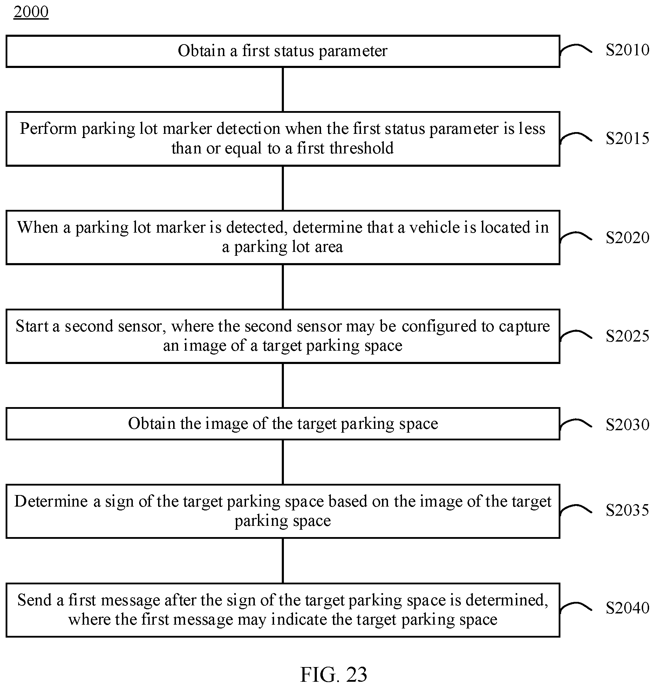

For example, FIG. 23 is a schematic flowchart of a method for recognizing a sign of a parking space according to an embodiment of this application. The method 2000 may include some or all of the following steps.

S2010: Obtain a first status parameter.

For example, for description of the first status parameter, refer to step S910 and the like.

S2015: Perform parking lot marker detection when the first status parameter is less than or equal to a first threshold.

For example, for description of the first threshold and a parking lot marker, refer to step S920 and the like.

S2020: When the parking lot marker is detected, determine that a vehicle is located in a parking lot area.

For example, when the parking lot marker is detected, it may be determined that the vehicle is located in the parking lot area. Further, a function related to a parking scenario may be controlled to be enabled. For brevity, details are not described herein again.

Further, after it is determined that the vehicle is located in the parking lot area, a parking-related function may be enabled, and a corresponding sensor may be started. The parking-related function is automatically triggered, so that user experience can be improved.

S2025: Start a second sensor.

For example, after it is determined that the vehicle is located in the parking lot area, a sensing sensor may be started. In other words, the sensor may be controlled to capture data, and the sensor may be configured to capture images of parking spaces including a target parking space. For ease of explanation and description, the sensor may be referred to as the second sensor. The second sensor may be the same as a first sensor, or may be different from a first sensor. When the second sensor is the same as the first sensor, the second sensor may be one or more camera sensors. To be specific, the data captured by the sensor may be used for marker detection in a parking area, and may also be used to obtain an image of the target parking space. For example, when a camera of an AVM system is controlled to capture data, the marker in the parking area may be detected based on an image captured by the AVM system, and the target parking space may be determined based on parking space indication information and the image captured by the AVM system; and a first parking space image may be obtained by controlling a rear-view camera or the like to capture an image.

S2030: Obtain the image of the target parking space.

For example, the image of the target parking space may be obtained based on the data captured by the second sensor.

For example, for description of the first parking space image, refer to step S1110 and the like.

S2035: Determine a sign of the target parking space based on the image of the target parking space.

For example, step S2030 and step S2040 may correspond to step S1110 and step S1130. For brevity, details are not described herein again.

Optionally, in S2040, a first message may be sent after the sign of the target parking space is determined, where the first message may indicate the target parking space.

In this embodiment of this application, when a user may remotely deliver an automated parking instruction by using a mobile phone, the second sensor may be triggered by determining that the vehicle is located in an area in which a parking lot is located, to capture the image of the target parking space, and then the sign of the target parking space is obtained based on the image of the target parking space. Further, the mobile phone may obtain the first message, so that the user learns of the target parking space in which the vehicle is located. This helps the user search for the vehicle, and can improve user experience of remote vehicle parking.

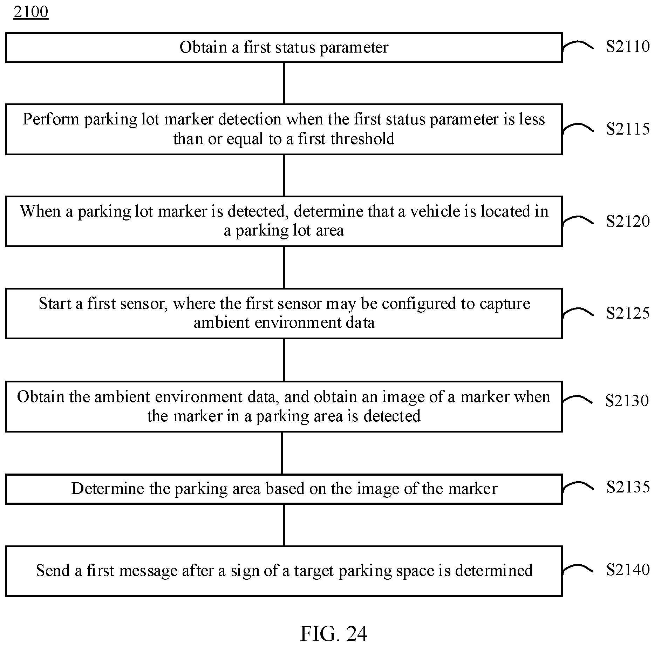

For example, FIG. 24 is a schematic flowchart of a method for recognizing a parking area according to an embodiment of this application. The method 2100 may include some or all of the following steps.

S2110: Obtain a first status parameter.

For example, for description of the first status parameter, refer to step S910 and the like.

S2115: Perform parking lot marker detection when the first status parameter is less than or equal to a first threshold.

For example, for description of the first threshold and a parking lot marker, refer to step S920 and the like.

S2120: When the parking lot marker is detected, determine that a vehicle is located in a parking lot area.

For example, when the parking lot marker is detected, it may be determined that the vehicle is located in the parking lot area. Further, a function related to a parking scenario may be controlled to be enabled.

S2125: Start a first sensor.

For example, the first sensor may be configured to capture ambient environment data, and the ambient environment data may be used for marker detection in a parking area. Correspondingly, the sensor may capture the ambient environment data after the first sensor is started.

For example, for description of the first sensor, refer to step S1915 and the like.

S2130: Obtain the ambient environment data, and obtain an image of the marker when the marker in the parking area is detected.

S2135: Determine the parking area based on the image of the marker.

It should be understood that step S2130 and step S2135 may correspond to step S1430 and step S1450.

Optionally, in S2140, a second message may be sent after the parking area is determined, where the second message may indicate the parking area.

In this embodiment of this application, when the vehicle is autonomously driving or is not controlled by a user, for example, when the user may remotely deliver an automated parking instruction by using a mobile phone, the first sensor may be triggered by determining that the vehicle is located in an area in which a parking lot is located, to capture the ambient environment data and perform marker detection in the parking area. The parking area may be determined by obtaining the image of the marker in the parking area. Further, the mobile phone may obtain the second message, so that the user learns of the parking area in which the vehicle is located. This helps the user search for the vehicle, and can improve user experience of remote vehicle parking.

For example, the method 2100 may be combined with the method 1800, so that accuracy of the recognized target area can be improved.

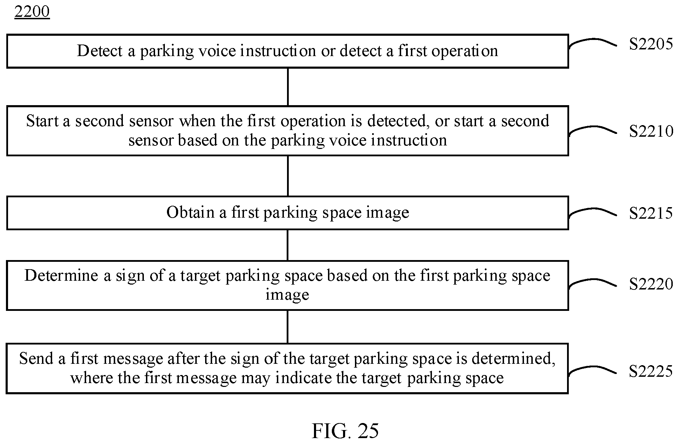

For example, FIG. 25 is a schematic flowchart of a method for recognizing a sign of a parking space according to an embodiment of this application.

S2205: Detect a parking voice instruction or detect a first operation.

For example, the parking voice instruction may be a voice instruction indicating that a user has a parking intention, and the first operation may indicate that the user has the parking intention.

It should be understood that, for description of the parking voice instruction and the first operation, refer to step S1010 and the like.

S2210: Start a second sensor when the first operation is detected, or start a second sensor based on the parking voice instruction.

For example, the second sensor may be configured to capture an image of a target parking space.

For example, for description of the second sensor, refer to step S2025 and the like.

For example, step S2205 and step S2210 may correspond to step S1010 and step S1020. For brevity, details are not described herein again.

S2215: Obtain a first parking space image.

For example, data captured by the second sensor may be obtained, and an image of at least one parking space including the target parking space, namely, the first parking space image, may be obtained based on the data.

S2220: Determine a sign of the target parking space based on the first parking space image.

Optionally, in S2225, a first message may be sent after the sign of the target parking space is determined, where the first message may indicate the target parking space.

For example, step S2215 and step S2220 may correspond to step S1110 and step S1130.

In this embodiment of this application, when it is determined that the user has the parking intention, the second sensor is started, and the sign of the parking space is determined based on the image of the target parking space that is captured by the sensor, so that overheads of the sensor used in a process of recognizing the sign of the target parking space can be reduced. In addition, the corresponding sensor is started based on the parking intention of the user, so that interference caused by invalid data to recognition of the sign of the parking space can be reduced, and accuracy of the determined sign of the parking space can be improved.

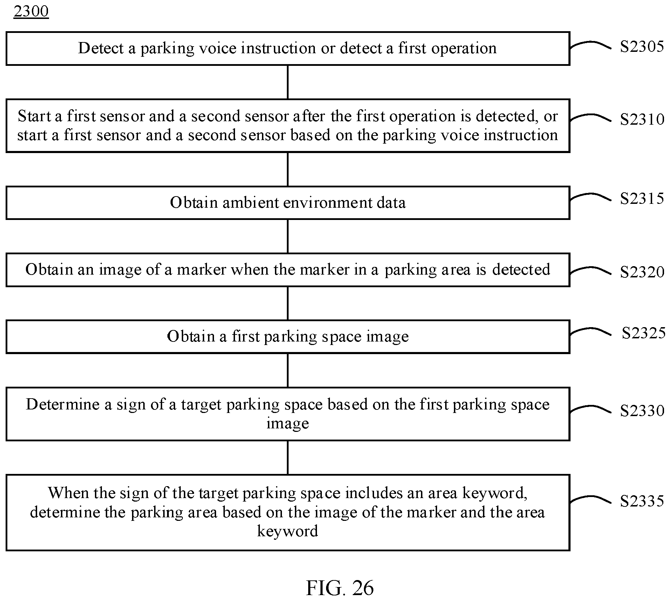

For example, FIG. 26 is a schematic flowchart of a method for recognizing a sign of a parking space and a parking area according to an embodiment of this application. The method 2300 may include some or all of the following steps.

S2305: Detect a parking voice instruction or detect a first operation.

For example, the first operation may be detected with reference to the method 900. For example, after it is determined that a vehicle is located in a parking lot area, when it is detected that a user adjusts a gear to a reverse gear, it may be determined that the user has a parking intention. For another example, after it is determined that a vehicle is located in a parking lot area, when it is detected that a user controls, by using an accelerator pedal or a brake pedal, a vehicle speed to fall within a vehicle speed threshold (for example, 2 km/h), it may be determined that the user has a parking intention.

For example, for description of the parking voice instruction and the first operation, refer to step S1010 and the like.

S2310: Start a first sensor and a second sensor after the first operation is detected, or start a first sensor and a second sensor based on the parking voice instruction.

For example, the first sensor may capture ambient environment data after the first sensor is started.

For example, the second sensor may capture an image of a target parking space after the second sensor is started.

For example, step S2305 and step S2310 may correspond to step S1010 and step S1020.

S2315: Obtain the ambient environment data.

For example, the ambient environment data may be used for marker detection in a parking area.

S2320: Obtain an image of the marker when the marker in the parking area is detected.

For example, step S2315 and step S2320 may correspond to step S1410 and step S1430.

S2325: Obtain a first parking space image.

For example, the first parking space image may be obtained. Further, the target parking space may be determined based on a parking space indication message.

For example, step of obtaining the ambient environment data and step of obtaining the image of the target parking space may be performed simultaneously. In other words, step S2320 and some or all of step S2305 and step S2310 may be performed simultaneously. Alternatively, step S2320 may be performed first. Alternatively, some or all of step S2305 and step S2310 may be performed first. This is not limited in embodiments of this application.

S2330: Determine a sign of the target parking space based on the image of the target parking space.

For example, the sign of the target parking space may be determined based on the image of the target parking space. For example, for description of determining the sign of the target parking space, refer to step S1130.

For example, whether the sign includes an area keyword may be determined based on the sign of the target parking space.

For example, step S2325 and step S2330 may correspond to step S1110 and step S1130. For brevity, details are not described herein again.

S2335: When the sign of the target parking space includes the area keyword, determine the parking area based on the image of the marker and the area keyword.

For example, for a manner of determining the parking area, refer to step S1450, step S1830, and the like.

Optionally, in S2340, a first message and/or a second message are/is sent.

It should be understood that the foregoing method for determining the parking area is merely an example for ease of description. This is not limited in embodiments of this application.

In this embodiment of this application, when it is determined that the user has the parking intention, data used to determine the target parking space and the parking area may be obtained by starting the first sensor and the second sensor. This can improve accuracy of recognizing the parking area, and can reduce overheads of the sensor used in a process of recognizing the parking area.

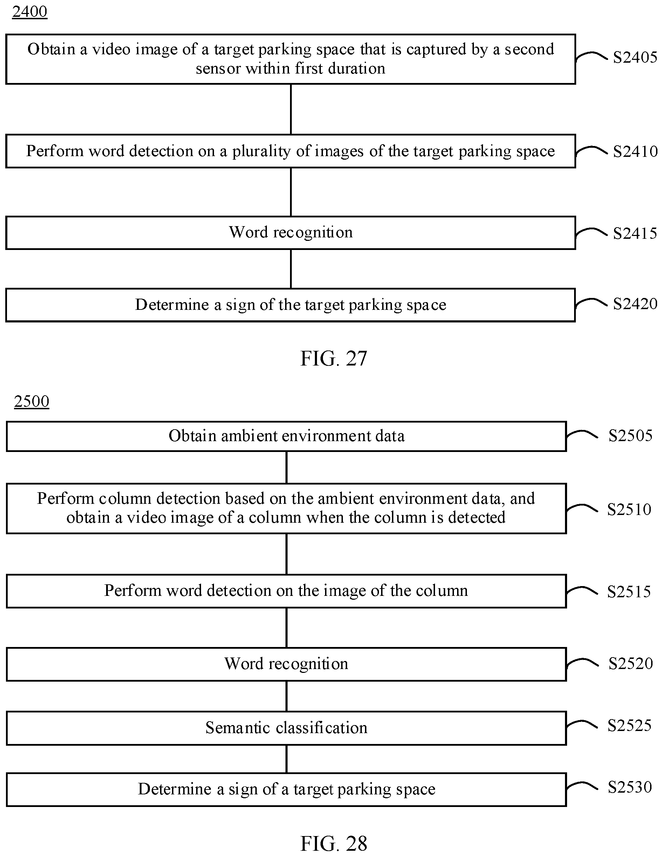

For example, FIG. 27 is a schematic flowchart of a method for recognizing a sign of a parking space according to an embodiment of this application. The method 2400 may include some or all of the following steps.

S2405: Obtain a video image of a target parking space that is captured by a second sensor within first duration.

For example, the video image of the target parking space may include images of the plurality of target parking spaces, and may be consecutive frames of images captured by a second camera within the first duration. The first duration may be any duration. For example, a video of the target parking space that is captured by a camera sensor within specific duration (for example, 5 seconds) may be obtained. The video may include a plurality of consecutive frames of images, and the video may also include a parking space other than the target parking space. It should be understood that this is not limited in embodiments of this application.

For example, the vehicle is partially or completely located outside the target parking space within the first duration.

S2410: Perform word detection on the images of the plurality of target parking spaces.

For example, word detection may be performed on the images of the plurality of target parking spaces. For example, word detection may be performed on the plurality of images. For an image in which a word is detected, a part including the word in the image may be cropped, to avoid interference caused by another part of the image to data processing, and save processing resources required in a word recognition process.

S2415: Word recognition.

For example, after word detection is performed on the images of the plurality of target parking spaces, word recognition may be performed on the image including the word, and then one or more texts are obtained. For example, in a process in which a vehicle travels into the target parking space, in addition to the target parking space, the images captured by the camera on the vehicle may further include another parking space, and the target parking space may include other information in addition to the sign of the target parking space, for example, an arrow indicating a traveling direction, a parking space type "Temporary parking space", and the like. In this way, word recognition is performed on the images, and then the one or more texts may be obtained. For a word recognition method, refer to a related technology. For brevity, details are not described herein again. It should be understood that the foregoing description of the word recognition is merely an example. This is not limited in embodiments of this application.

S2420: Determine a sign of the target parking space.

For example, the sign of the target parking space may be determined based on a word recognition result. For example, tracks corresponding to an obtained plurality of words may be determined based on the plurality of images, and information about, a sign of, and the like of a parking space other than the target parking space may be screened out based on the track of the vehicle. Further, the sign of the target parking space may be determined based on confidence of the plurality of texts. For another example, characters recognized based on the plurality of images may be associated, to compensate for impact of an incomplete character in a single image on sign recognition. For example, impact of the images shown in (c) and (d) in FIG. 6 on recognition of the sign of the parking space may be reduced. It should be understood that the foregoing method for determining the sign of the target parking space is merely an example for ease of description. This is not limited in embodiments of this application.

For example, for a method for determining the target parking space, refer to step S1130 and the like.

For example, the method 2400 may be combined with the method 1100 and the like. Details are not described herein again.

In this embodiment of this application, consecutive video images are obtained, and the sign of the target parking space is recognized based on the video images. This can compensate for impact of an incomplete word in a single image on sign recognition, and text information of another parking space can be screened out based on the video images and the tracks of the vehicle, so that accuracy of recognizing the sign of the target parking space can be improved.

For example, FIG. 28 is a diagram of a method for recognizing a parking area according to an embodiment of this application. The method 2500 may include some or all of the following steps.

S2505: Obtain ambient environment data.

For example, the ambient environment data may be used for column detection.

S2510: Perform column detection based on the ambient environment data, and obtain a video image of a column when the column is detected.

For example, column detection may be performed based on data captured by a radar, or column detection may be performed based on data captured by a camera. For example, column detection may be performed based on an image captured by an AVM system, to obtain the video image of the column, that is, the video image of the column may be determined from the obtained image.

For example, the video image may include a plurality of images captured by the camera within specific duration.

S2515: Perform word detection on the image of the column.

S2520: Word recognition.

For example, after word detection is performed on one or more images of the column, word recognition may be performed on an image including the word, and then one or more texts are obtained.

Optionally, in S2525, semantic classification is performed.

For example, semantic classification may be performed on the one or more texts. For example, it may be considered that a pure-word text (for example, "Safety exit") is invalid information, and it may be considered that a text (for example, "←") including only a symbol is invalid information. It should be understood that this is not limited in embodiments of this application.

S2530: Determine a parking area.

For example, a sign of the parking area may be determined based on a text obtained by performing the semantic classification, and then the parking area is determined.

For example, the sign of the parking area may be determined based on an appearance frequency of the text in the video image.

For example, the sign of the parking area may be determined based on time at which the text appears in the video image. For example, in a process in which a vehicle travels into a target parking space, a parking area indicated by a column around the target parking space is more likely to be a parking area in which the target parking space is located. Therefore, for the text obtained in the parking process, if a moment at which the text appears in a video is closer to a moment at which the vehicle travels into the target parking space and the vehicle is parked, confidence of the text that may be used as the sign of the parking area is higher. It should be understood that the foregoing method is merely an example, and this is not limited in embodiments of this application.

For example, for a method for determining the sign of the parking area based on the text, refer to step S1450 and the like.

It should be understood that the method S2500 may be combined with the method 1400 and the like.

In this embodiment of this application, consecutive videos of the column is obtained, so that impact of an incomplete word in a single image on sign recognition can be compensated for. In addition, a sign of another parking area may be screened out based on a moment at which the sign appears in the video image, so that accuracy of the recognized parking area can be improved.

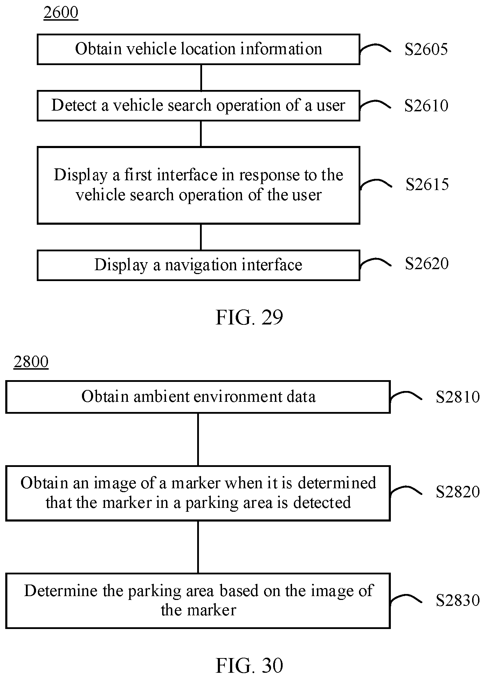

For example, FIG. 29 is a schematic flowchart of an intelligent vehicle search interaction method according to an embodiment of this application. The method 2600 may include some or all of the following steps.

S2605: Obtain vehicle location information.

For example, the vehicle location information may indicate a target parking space and/or a parking area.

S2610: Detect a vehicle search operation of a user.

For example, the vehicle search operation of the user may be a vehicle search operation performed by the user by tapping a physical or virtual button, or may be a vehicle search indication delivered through voice interaction. For example, the user may tap a vehicle search virtual button on a screen of a mobile phone, or may perform voice interaction with a mobile phone, and voice instructions for vehicle search such as "I want to search for a vehicle" and "Where my vehicle is parked" that are delivered by the user in the voice interaction may be detected. It should be understood that the foregoing method is merely an example, and this is not limited in embodiments of this application.

S2615: Display a first interface in response to the vehicle search operation of the user, where the first interface may be used to display a parking location of a vehicle.

For example, when the vehicle search operation of the user is detected, the first interface may be displayed on a screen associated with a terminal device. For example, when the vehicle search operation of the user is detected, the interface shown in (a) in FIG. 18 may be displayed on the screen of the mobile phone, to indicate the parking space and the parking area in which the vehicle is located.

S2620: Display a navigation interface.

For example, the navigation interface may be displayed when a navigation request of the user is detected. For example, when the navigation request of the user is detected, for example, when it is detected that the user taps a "Navigate" button on the screen of the mobile phone, the terminal device like the mobile phone may display the navigation interface. The navigation interface may indicate a planned route from a current location of the user to a parking lot in which the vehicle is located.

For example, a location of the parking area and/or the parking space in which the vehicle is located on a map may be determined based on the vehicle location information and the map. Further, a planned route from the current location of the user to the parking area and/or the parking space in which the vehicle is located may be determined based on the vehicle location information and the map, and the route is displayed on the navigation interface. It should be understood that the foregoing description of the navigation interface is merely an example. This is not limited in embodiments of this application.

For example, when detecting that the terminal device is located in a first range, the vehicle may send a reminder. For example, for the mobile phone that has a Bluetooth connection record with the vehicle, when the user holds the mobile phone and approaches the vehicle, the vehicle may detect the mobile phone within the first range through Bluetooth low energy. After detecting the mobile phone, the vehicle may send the reminder through lighting or tooting. This helps the user search for the vehicle. It should be understood that the foregoing manner of detecting the terminal device is merely an example for ease of description. This is not limited in embodiments of this application.

It should be understood that the method 2600 may be combined with the method 1600 and the like.

In this embodiment of this application, the vehicle location information is obtained, and the navigation route to the parking space and/or the target parking space in which the vehicle is located may be displayed based on the map, so that vehicle search experience of the user is improved.

For example, FIG. 30 is a schematic flowchart of a method for recognizing a parking area according to an embodiment of this application. The method 2800 may include some or all of the following steps.

S2810: Obtain ambient environment data, where the ambient environment data may be used for marker detection in a parking area.

For example, the parking area may include one or more parking spaces. For example, the parking area may be the area 716 shown in FIG. 8.

S2820: Obtain an image of the marker when the parking lot marker is detected.

It should be understood that, for description of the marker in the parking area, refer to step S1410 and the like.

S2830: Determine the parking area based on the image of the marker.

In some possible implementations, the parking area includes a target parking space, and the target parking space is a parking space in which a vehicle is located when the vehicle is in a parking pose. The method may further include: obtaining a first parking space image; determining a sign of the target parking space based on the first parking space image, where the sign of the target parking space includes an area keyword; and the determining the parking area based on the image of the marker may include: determining the parking area based on the image of the marker and the area keyword.

For example, for description of the area keyword, refer to step S1450, step S1830, and the like.

In some possible implementations, the method may further include: obtaining parking space indication information, where the parking space indication information may indicate an area in which the target parking space is located; and the determining a sign of the target parking space based on the first parking space image may include: determining the sign of the target parking space based on the parking space information and the first parking space image.

For example, for description of the parking space indication information, refer to step S1110 and the like.

In some possible implementations, the method may further include: determining a first proportion based on the first parking space image, where the first proportion may indicate a proportion of the target parking space in the first parking space image; and the determining a sign of the target parking space based on the first parking space image may include: determining the sign of the target parking space based on the first parking space image and the first proportion.

For example, for a method for determining the sign of the target parking space, refer to the method 1100 and the like.

In some possible implementations, the method may further include: determining one or more parking space information texts based on the first parking space image; and determining the sign of the target parking space based on confidence of at least one parking space information text in the one or more pieces of parking space information.

For example, for description of the parking space information text and the confidence, refer to step S1130 and the like.

In some possible implementations, the vehicle includes a vehicle-mounted display apparatus. The method may further include: controlling the vehicle-mounted display apparatus to display an image of the target parking space.

For example, the vehicle-mounted display apparatus may be a physical display like a central display screen, or may be a HUD, or the like.

For example, after the sign of the target parking space is determined, the vehicle-mounted display apparatus may be controlled to display the sign of the target parking space.

In some possible implementations, the method may further include: sending a first message after the sign of the target parking space is determined, where the first message may indicate the target parking space.

Correspondingly, a terminal device may obtain the first message. For example, the terminal device like a mobile phone may obtain the first message from the vehicle, a network device, or the like, so that the sign, the image, or the like of the parking space in which the vehicle is located may be displayed on an interface of the terminal device, to remind a user.

In some possible implementations, the determining the parking area based on the image of the marker may include: determining one or more pieces of marker information based on the image of the marker; and determining a sign of the parking area based on the one or more pieces of marker information, where an area indicated by the sign of the parking area is the parking area.

For example, for description of a method for determining the parking area, refer to step S1130 and the like.

In some possible implementations, the method may further include: sending a second message after the parking area is determined, where the second message may indicate the parking area.

For example, for description of the second message, refer to step S1450 and the like.

In some possible implementations, before the obtaining ambient environment data, the method may further include: obtaining a voice instruction or user operation information; detecting a parking voice instruction based on the voice instruction, where the parking voice instruction indicates that the user has a parking intention, and starting a first sensor when the parking voice instruction is detected; or detecting a first operation based on the user operation information, where the first operation may indicate that the user has a parking intention, and starting a first sensor when the first operation information is detected; and controlling the first sensor to capture the ambient environment data.

For example, for description of the parking voice instruction, the first operation, and the like, refer to step S1010 and the like.

In some possible implementations, before the obtaining ambient environment data, the method may further include: starting a first sensor when it is determined that the vehicle is located in a parking lot area; and controlling the first sensor to capture the ambient environment data.

For example, for description of the first sensor, refer to step S940, step S1915, and the like.

In some possible implementations, the method may further include: when a first status parameter is less than or equal to a first threshold, performing parking lot marker detection; and when a parking lot marker is detected, determining that the vehicle is located in the parking lot area.

For example, for description of the first status parameter, the first threshold, and the like, refer to step S910 and the like.

In some possible implementations, the marker in the parking area is a column.

For example, for description of the marker in the parking area, refer to step S1450 and the like.

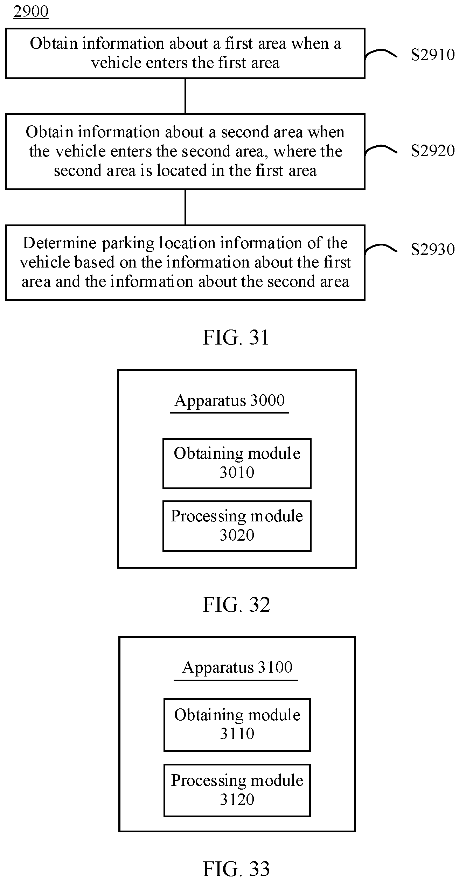

For example, FIG. 31 is a schematic flowchart of a parking interaction method according to an embodiment of this application. The method 2900 may include the following steps.

S2910: Obtain information about a first area when a vehicle enters the first area.

For example, the first area may be a parking zone in a parking lot, for example, may be the parking area, like "Area A", "A-17", or "Area XX", mentioned in the method 1400 and the like; or the like.

For example, the first area may be a parking floor in the parking lot. For example, after the vehicle enters the parking lot, for example, may record a pitch angle of the vehicle in real time, the vehicle may determine the parking floor on which the vehicle is located. For another example, the parking floor on which the vehicle is located may be determined based on a first intersection between an inter-floor passage and a floor through which the vehicle passes. For example, the first intersection through which the vehicle passes in an uphill phase is denoted as +1, and the first intersection through which the vehicle passes in a downhill phase is denoted as -1. For another example, when the vehicle is located in an inter-floor passage, the vehicle may control a camera sensor to capture an image of the passage, and determine a passage guidance sign (for example, "To the basement level 1" or ">>>Basement level 2>>") based on the image of the passage, to determine the floor onto which the vehicle is to travel.

For example, the information about the first area may be environment information of the first area. For example, image information of the first area is captured based on a vehicle-mounted sensor on the vehicle, and the image information may be image information of the first area through which the vehicle passes in a traveling process. For another example, the information about the first area may be information, like a sign of the first area, that is determined based on an image of the first area, for example, a sign of a parking zone like "Area A", "A-17", or "Area XX".

S2920: Obtain information about a second area when the vehicle enters the second area, where the second area is located in the first area.

For example, the second area may also include a parking space, for example, "A106" or "A104".

For example, when a same parking floor includes a plurality of parking zones, the second area may also include the parking zones, for example, the parking area "Area A" or "Area H-17".

For example, for an indoor parking lot, when the parking space has no sign, the first area may be the parking floor, and the second area may be the parking zones.

S2930: Determine parking location information of the vehicle based on the information about the first area and the information about the second area.

For example, the first area is the parking floor (for example, the basement level 1), the second area is the parking space (for example, A106). In this case, the parking location information may be "A106 on the basement level 1", "Basement level 1-A106", "Parking space A106 on the basement level 1", "B1-A106", or the like. It should be understood that the foregoing description of the parking location information is merely an example for ease of description. This is not limited in embodiments of this application.

For example, after the vehicle enters the parking lot, until the vehicle completes parking in the parking space, in other words, in a process from entering the parking lot to search for a parking space by the vehicle to completing parking by the vehicle, the vehicle may pass through one or more parking floors and/or one or more parking zones. In this process, the vehicle may obtain, based on a location of the vehicle, information about a parking floor on which and/or a parking zone in which the vehicle is located.

In some possible implementations, the first area is the parking floor and/or the parking zone in the parking lot in which the vehicle is located, the second area may include the parking space for parking the vehicle, and the parking location information may include information about the parking space for parking the vehicle, and information about the parking floor and/or information about the parking zone.

In some possible implementations, the obtaining information about a second area when the vehicle enters the second area may include: obtaining a first instruction, where the first instruction indicates that a user of the vehicle has a parking intention; and obtaining the information about the second area based on the first instruction.

For example, the first instruction may be one or more of instructions such as a voice instruction, a touch instruction, a button instruction, and a gesture instruction. For example, the first instruction may be a voice instruction indicating the parking intention, for example, "I want to park", "Automated parking", or "Drive into a parking space". In other words, the first instruction may be the parking voice instruction in the method 1000. Alternatively, the first instruction may be an instruction triggered by the user by using a physical or virtual button, a button, or the like that triggers the parking intention. For example, the user may tap an "Automated parking" virtual button on an interaction apparatus like a central display screen, or may press a physical button with an "Automated parking" function in a vehicle cockpit. The user may perform remote parking on a terminal device like a mobile phone, and send a remote parking instruction to the vehicle. Correspondingly, for description of the parking voice instruction, the physical or virtual button that triggers the parking intention, and the button, refer to step S1020 and the like. For another example, a gesture with the parking intention may alternatively be defined. The information about the second area may be obtained after a gesture instruction of the user is detected.

For example, the information about the second area may be obtained after it is detected that the vehicle enters a parking state. For example, when the vehicle is located in the parking lot, if it is detected that gear information of the vehicle is a reverse gear, it may be considered that the vehicle enters the parking state. For another example, when the vehicle is located in the parking lot, if it is detected that there is an acting force on a brake pedal or an accelerator pedal and a vehicle speed is controlled within a preset vehicle speed (for example, 3 km/h), it may be considered that the vehicle enters the parking state. For another example, the vehicle may have functions such as automated parking and assisted parking, to help the user perform parking. When it is detected that the user enables the functions such as automated parking and assisted parking, it may be determined that the vehicle enters the parking state. For another example, whether the vehicle enters the parking state may be determined based on a control signal of the vehicle, for example, a CAN signal or an Ethernet signal.

For example, parking environment information may be obtained in a process from entering the parking state by the vehicle to completing parking by the vehicle, and the information about the second area is obtained based on the parking environment information. For example, when the vehicle is partially or completely located in the parking space, information like an image and a sign of the parking space may not be obtained due to a mounting location of a camera or even after an angle of a camera is adjusted. In this case, in a process from detecting that the vehicle is in the parking state to completing parking by the vehicle, ambient environment information in the parking process is obtained, so that impact of a vehicle pose on obtaining the information about the second area can be reduced.

In some possible implementations, a first prompt message may be sent. The first prompt message may indicate a parking location.

For example, the first prompt message may be sent when it is determined that the vehicle completes parking. For example, when it is detected that the user adjusts a gear to a parking gear, pulls up a handbrake, determines the parking location information of the vehicle on an interaction interface, leaves the vehicle, turns off the vehicle, or the like, it may be determined that parking is completed, and then the first prompt message may be sent.

For example, parking location request information may be received, and the first prompt message may be sent based on the parking location request information. For example, the terminal device like the mobile phone may send the parking location request information in response to an operation of the user. For another example, a server may trigger the parking location request information to obtain the parking location information of the vehicle. After obtaining the parking location information, the server may store the parking location information in a cloud.

Further, the parking location request information may include identity information of a requester, and the first prompt message may be sent based on the identity information of the requester. For example, when it is determined, based on the identity information, that the requester is an unauthorized user, the first prompt message may not be sent. When it is determined that the requester is an authorized user, for example, the requester is a vehicle owner or a family member of a vehicle owner, the first prompt message may include, for example, a sign of a parking space, a sign of a parking zone, information about a parking floor, an image of the parking zone, an image of the parking space, and the like. When the requester is a temporarily authorized user, the first prompt message may include, for example, a sign of a parking space, a sign of a parking zone, and information about a parking floor. In other words, content of the first prompt message may be determined based on permission of the requester. The request message may also include a request requirement of the requester, and the content of the first prompt message may be determined based on the request requirement of the requester.

In some possible implementations, the method may further include: obtaining image information of the second area at a plurality of moments; determining a plurality of pieces of sign information based on the image information of the second area at the plurality of moments; and obtaining a sign of the second area based on the plurality of pieces of sign information.

For example, a sign of the parking space and a sign of the parking zone may be determined based on images of the parking space and the parking zone at the plurality of moments. For example, the plurality of pieces of sign information may be determined based on an image of a parking space, and the sign of the parking space may be determined based on confidence of the sign information. For another example, the plurality of pieces of sign information may include an incomplete sign (for example, as shown in (c) and (d) in FIG. 6). A plurality of incomplete signs may be concatenated and fused to obtain the sign of the parking space. For another example, marker detection may be performed in the parking zone, marker information may be determined based on an image of a marker, and information like the sign of the parking zone is determined based on the marker information. For description of determining the sign of the parking space and the sign of the parking zone, refer to the method 1100, the method 1400, and the like.

For example, the vehicle may include a vehicle-mounted display apparatus. When the information about the first area is obtained, the vehicle-mounted display apparatus is controlled to display the information about the first area; and/or when the information about the second area is obtained, the vehicle-mounted display apparatus is controlled to display the information about the second area. For example, in a moving process of the vehicle, the vehicle-mounted display apparatus like a central display screen may be controlled based on a location of the vehicle to display a sign of a floor on which the vehicle is located, a sign of a parking zone in which the vehicle is located, an image including the sign of the parking zone, an image of a marker including the sign of the parking zone, a sign of a target parking space, an image of the target parking space, and the like. For another example, as the vehicle moves, when the vehicle travels onto a new floor and in a new parking zone, and information about the new floor and the new parking zone is obtained, an interface displayed on the vehicle-mounted display apparatus may be updated accordingly. For another example, when the displayed marker in the parking zone includes the sign of the parking zone, the sign of the parking zone may be highlighted by using a line frame or the like on the display interface.

For example, pitch angle information of the vehicle may be obtained, and the information about the parking floor is determined based on the pitch angle information of the vehicle. For example, after the vehicle enters the parking lot, a vehicle pose change, for example, the pitch angle information of the vehicle, may be obtained. When an absolute value of a pitch angle of the vehicle is greater than or equal to a preset threshold (for example, 18 degrees or 15 degrees), it may be considered that the vehicle is located in the inter-floor passage. When the pitch angle is a positive value, it may be considered that the vehicle travels uphill. When the pitch angle information is a negative value, it may be considered that the vehicle travels downhill. In this way, a change of a floor on which the vehicle is located may be determined based on the pitch angle information of the vehicle, and then a floor location at which the vehicle is located is determined. When the vehicle enters the parking state, the floor location at which the vehicle is currently located may be determined as the parking floor, and then information about the parking floor is determined accordingly. For another example, when it may be determined, based on the pitch angle information of the vehicle, that the vehicle is located in the inter-floor passage, a sensor like a camera may be triggered to capture ambient environment data, to recognize an entrance and an exit of the inter-floor passage, an intersection between the inter-floor passage and a floor connected to the inter-floor passage, and the like. In this case, when the vehicle continuously passes through a plurality of connected inter-floor passages, a quantity of passed inter-floor passages can also be accurately obtained, and then a floor location at which the vehicle is currently located may be determined accordingly.

For example, the inter-floor passage may be connected to floors in the parking lot, and a sign may be hung or posted in the inter-floor passage. In this case, a floor onto which the vehicle is to travel may be determined based on the sign. For example, when it is determined that the vehicle is located in the inter-floor passage, an image of the inter-floor passage may be obtained, and one or more pieces of sign information may be obtained based on the image, for example, "<<<To the basement level 1<<<", "<<<xxx floor<<<", "←XXX floor", "<<<", or "←". A passage guidance sign indicating information about an adjacent floor may be determined based on the sign information, for example, "<<<To the basement level 1<<<", "<<<xxx floor<<<", and "←XXX floor" that are described above. "To the basement level 1" and "Floor xxx" may indicate the information about the adjacent floor, and "<" and "←" may indicate a location relationship between a floor and the inter-floor passage. In this way, information about the floor onto which the vehicle is to travel may be determined based on the passage guidance sign.

It should be understood that the methods described in FIG. 21 to FIG. 31 are merely examples for describing a manner of combining the methods 900, 1000, 1100, 1400, and 1600. The foregoing methods may alternatively be combined in another manner. For brevity, details are not described herein again.

It should be understood that the method 900 to the method 2900 may be combined with each other. This is not limited in embodiments of this application.

An embodiment of this application further provides an apparatus configured to implement any one of the foregoing methods. For example, the apparatus is provided and includes units configured to implement steps performed by a chip, a vehicle, an in-vehicle infotainment system, and the like in any one of the foregoing methods. For example, FIG. 32 is a diagram of a structure of an apparatus for determining that a vehicle is located in a parking lot area according to an embodiment of this application. The apparatus 3000 may include an obtaining module 3010 and a processing module 3020.

The obtaining module 3010 is configured to obtain a first status parameter.

For example, the first status parameter may include at least one of signal quality of a GNSS signal, a vehicle speed, and a distance between a vehicle and an entrance of a parking lot, and may also include another parameter, for example, longitude and latitude information.

For example, for description of the first status parameter, refer to the method 900 and the like.

For example, the obtaining module 3010 may be further configured to obtain data captured by a sensing sensor, where the data may be used for parking lot marker detection. For example, the data captured by the sensing sensor may be obtained from the sensing sensor or another apparatus, or may be data captured by a plurality of sensors by performing filtering, fusion, feature extraction, or the like.

The processing module 3020 is configured to perform parking lot marker detection when the first status parameter is less than or equal to a first threshold; and is further configured to: when a parking lot marker is detected, determine that the vehicle is located in a parking lot area.

For example, the corresponding first threshold may be determined based on the first status parameter. For example, when the first status parameter includes signal quality of a GNSS signal, the first threshold may include a threshold related to the signal quality of the GNSS signal.

For example, the processing module 3020 may perform parking lot marker detection based on the data captured by the sensing sensor. For example, the parking lot marker may be an object that does not move in the parking lot area. For example, the parking lot marker is a parking lot barrier gate, a parking space, and a guidance sign of a parking lot.

For example, for description of detecting the parking lot marker, refer to step S920 and step S940, and the like.

It should be understood that the apparatus shown in FIG. 32 may be configured to implement the method 900.

For example, FIG. 33 is a diagram of a structure of a sensor startup apparatus according to an embodiment of this application. The apparatus 3100 may include an obtaining module 3110 and a processing module 3120.

The obtaining module 3110 may be configured to obtain a voice instruction or user operation information.

The processing module 3120 may be configured to: detect a parking voice instruction based on the voice instruction, and start one or more sensing sensors when the parking voice instruction is detected; or detect a first operation based on the user operation information, where the first operation indicates that a user has a parking intention, and start one or more sensing sensors when the first operation is detected.

For example, for description of the parking voice instruction and the first operation, refer to step S1010 and the like.

The obtaining module 3110 may be further configured to obtain data captured by the one or more sensing sensors.

The processing module 3120 may be further configured to determine, based on the data captured by the sensing sensors, an environment in which a vehicle is located in a parking environment.

For example, when the data includes an image of at least one parking space including a target parking space, the processing module 3120 may determine a sign of the target parking space based on the image. When the data includes an image of a marker in a parking area, the processing module 2031 may determine the parking area based on the image, for example, determine a sign of the parking area.

It should be understood that the apparatus 3100 may be configured to implement the method 1000.

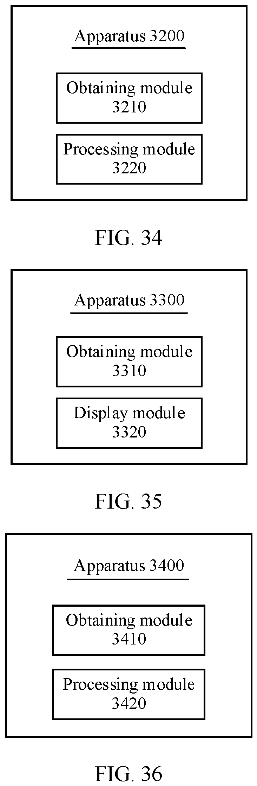

For example, FIG. 34 is a diagram of a structure of an apparatus for recognizing a sign of a parking space according to an embodiment of this application. The apparatus 3200 may include an obtaining module 3210 and a processing module 3220.

The obtaining module 3210 may be configured to obtain a first parking space image. The processing module 3220 may be configured to determine a sign of a target parking space based on the first parking space image.

For example, the first parking space image may include at least one parking space including the target parking space.

In some possible implementations, the obtaining module 3210 may be further configured to obtain parking space indication information, where the parking space indication information may indicate an area in which the target parking space is located. The processing module 3220 may be specifically configured to determine the sign of the target parking space based on the parking space indication information and the first parking space image. For example, when the image includes a plurality of parking spaces including the target parking space, the target parking space in the image may be determined based on the parking space indication information, and then the sign of the target parking space is determined.

In some possible implementations, the processing module 3220 may be further configured to determine a first proportion based on the first parking space image, where the first proportion may indicate a proportion of the target parking space in the first parking space image. The processing module 3220 may be specifically configured to determine the sign of the target parking space based on the first parking space image and the first proportion. For example, an image shown in (a) in FIG. 13 may be obtained. Proportions of a plurality of parking spaces in the image are determined, for example, as shown in (b) in FIG. 13, and then it is determined that the target parking space is an area indicated by the mark 1151 in (a) in FIG. 13. In this way, the sign of the target parking space may be determined. For another example, when the image including the plurality of parking spaces is captured by a fisheye camera, because distortion and the like may occur, the first proportion may be determined after distortion correction or another processing is performed on the image, and then the target parking space is determined accordingly. It should be understood that the foregoing method for determining an image of the target parking space is merely an example. This is not limited in embodiments of this application.

For example, the processing module 3220 may be specifically configured to: determine one or more parking space information texts based on the first parking space image; and determine the sign of the target parking space based on confidence of the parking space information text.

For example, the obtaining module 3210 may be configured to obtain images of the target parking space at a plurality of moments, and the processing module 3210 may be configured to determine the sign of the target parking space based on the images of the target parking space at the plurality of moments. For example, in a process of parking a vehicle, a camera sensor may capture a video of the target parking space within first duration. The video may include images at a plurality of moments, and the sign of the target parking space may be determined based on the plurality of images. This can avoid a recognition error caused by an incomplete sign in a single image, and can improve accuracy of the recognized sign. The first duration may be any duration, for example, 5 seconds or 13 seconds. This is not limited in embodiments of this application.

For example, the processing module 3220 may be further configured to control a vehicle-mounted display apparatus to display an image of the target parking space. For example, after the target parking space is determined, the interface shown in (a) in FIG. 13 may be displayed on a display like a central display screen, to indicate the target parking space. For another example, only a part in which the sign of the target parking space is located in the image of the target parking space may be displayed on the vehicle-mounted display apparatus. In other words, only an image of the sign of the target parking space may be displayed. For another example, after the sign of the target parking space is determined, the sign of the target parking space may be displayed on a display like a central display screen, for example, the interface shown in FIG. 14. It should be understood that the foregoing description of displaying the image and/or the sign of the target parking space is merely an example for ease of description. This is not limited in embodiments of this application.

For example, the apparatus 3200 may further include a sending module 3230. The sending module 3230 may be configured to send a first message, where the first message may indicate the target parking space.

It should be understood that the foregoing description of the apparatus for recognizing the sign of the target parking space is merely an example. This is not limited in embodiments of this application.

It should be understood that the apparatus 3200 may be configured to implement the method 1100. For description of the target parking space, the sign of the target parking space, and the like, refer to the method 1100 and the like.

For example, FIG. 35 is a diagram of a structure of an apparatus for recognizing a parking area according to an embodiment of this application. The apparatus 3300 may include an obtaining module 3310 and a processing module 3320.

The obtaining module 3310 may be configured to obtain ambient environment data, where the ambient environment data may be used for marker detection in a parking area; and may be further configured to obtain an image of the marker when a marker is detected.

The processing module 3320 may be configured to determine the parking area based on the image of the marker.

For example, the processing module 3320 may further detect the marker in the parking area based on the ambient environment data.

In some possible implementations, the processing module 3320 may be configured to determine a sign of the parking area based on the image of the marker in the parking area.

For example, the processing module 3320 may be configured to: determine one or more texts based on the image of the marker, and determine the sign of the parking area based on confidence of the text.

It should be understood that, for description of determining the sign of the parking area based on the confidence of the text, refer to step S1450 and the like.

In some possible implementations, the obtaining module 3310 may be further configured to obtain a sign of a target parking space, where the sign of the target parking space may include an area keyword. The processing module 3320 may be configured to determine the parking area based on the area keyword and the image of the marker.

For example, when a plurality of texts may be determined based on the image of the marker, the processing module 3320 may determine the sign of the parking area based on the plurality of texts and the area keyword. For example, for description of the area keyword, refer to step S1450 and the like.

In some possible implementations, after the target parking space is determined, when a plurality of markers in the parking area are detected, the processing module 3320 may determine, based on a distance between each of the plurality of markers and the target parking space, the marker in the parking area to which the target parking space belongs.

For example, the distance between each of the plurality of markers and the target parking space may be an actual distance, or may be a virtual length. For example, the distance between each of the plurality of markers in the parking area and the target parking space in the image may be determined based on an image of an AVM system. For another example, the actual distance between each of the plurality of markers and the target parking space may be determined based on data captured by a radar. It should be understood that the foregoing example is merely used for description, and this is not limited in embodiments of this application.

For example, the obtaining module 3310 may be configured to obtain images of the marker in the parking area at a plurality of moments, and the processing module 3320 may be configured to determine the sign of the parking area based on the images of the marker in the parking area at the plurality of moments. For example, in a process of parking a vehicle, a camera sensor may capture a video image of the marker in the parking area within a period of time, and may determine the sign of the parking area based on the images of the marker in the parking area at the plurality of moments in the video image. This can avoid a recognition error caused by an incomplete sign in a single image, and can improve accuracy of the recognized sign.

For example, the processing module 3320 may be further configured to control a vehicle-mounted display apparatus to display the sign of the parking area, and may also be configured to display the image of the marker in the parking area.

In some possible implementations, the apparatus 3300 may further include a sending module 3330. The sending module 3330 may be configured to send a second message, where the second message may indicate the parking area.

It should be understood that the apparatus 3300 may be configured to implement the method 1400. For the foregoing description of the marker in the parking area and the like, refer to the method 1400 and the like.

For example, FIG. 36 is a diagram of a structure of an interaction apparatus for indicating a parking location according to an embodiment of this application. The apparatus 3400 may include an obtaining module 3410 and a display module 3420.

The obtaining module 3410 may be configured to obtain vehicle location information.

In some possible implementations, the vehicle location information may indicate a target parking space and/or a parking area.

The display module 3420 may be configured to display a first interface, where the first interface may be used to display a parking location of a vehicle.

In some possible implementations, the display module 3420 may be configured to display a sign of the parking area.

In some possible implementations, the display module 3420 may be configured to display a sign of the target parking space.

In some possible implementations, the display module 3420 may be configured to display an image of a marker in the parking area.

In some possible implementations, the display module 3420 may be configured to display an image of the target parking space.

In some possible implementations, the display module 3420 may display a vehicle search navigation route, and the route may indicate a navigation route from a current location of a user to the parking location of the vehicle.

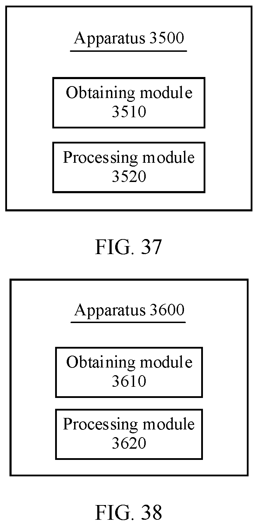

For example, FIG. 37 is a diagram of a structure of another apparatus for recognizing a parking area according to an embodiment of this application. The apparatus 3500 may include an obtaining module 3510 and a processing module 3520. A parking area may include a plurality of parking spaces.

The obtaining module 3510 may be configured to obtain ambient environment data, where the ambient environment data may be used for marker detection in the parking area; and may be further configured to obtain an image of the marker when a marker is detected.

The processing module 3520 may be configured to determine the parking area based on the image of the marker.

For example, the processing module 3520 may further detect the marker in the parking area based on the ambient environment data.

In some possible implementations, the obtaining module 3510 may be further configured to obtain a first parking space image, where the first parking space image includes at least one parking space, and the at least one parking space includes a target parking space. The processing module 3520 may be further configured to determine a sign of the target parking space based on the first parking space image, where the sign of the target parking space includes an area keyword. The processing module 3520 may be specifically configured to determine the parking area based on the image of the marker and the area keyword.

For example, the first parking space image includes the at least one parking space, and may include a part of one or more parking spaces. For example, as shown in (a) in FIG. 13, the image may include three parking spaces. The image includes a partial area of the parking space "A105", also includes a partial area of an occupied parking space, and an entire area of the target parking space "A104". In some cases, the first parking space image may alternatively include only a part of the target parking space.

For example, the first parking space image may include a plurality of parking spaces, and the sign of the parking space may be determined based on the first parking space image. For example, parking space signs "A104" and "A105" may be determined based on the image shown in (a) in FIG. 13. Because the two signs include a same text "A", it may be considered that the area keyword is "A". For another example, after the target parking space is determined, the sign of the target parking space may be determined, for example, "A104". A plurality of texts such as "Area A", "Safety exit", and "←" may be determined based on the image of the marker in the parking area, for example, (a) in FIG. 9. Because the sign "A104" of the target parking space and the text "Area A" have a common keyword "A", it may be determined that a sign of the parking area is "Area A". Correspondingly, the area keyword is "A". For brevity, examples are not described one by one herein again. It should be understood that the foregoing example of the area keyword is merely used for description, and this is not limited in embodiments of this application.

In some possible implementations, the obtaining module 3510 may be further configured to obtain parking space indication information, where the parking space indication information may indicate an area in which the target parking space is located. The processing module 3520 may be specifically configured to determine the sign of the target parking space based on the parking space indication information and the first parking space image.

For example, for description of the parking space indication information, refer to step S1110 and the like.

For example, a part of the first parking space image may be determined based on the parking space indication information and the first parking space image.

In some possible implementations, the processing module 3520 may be further configured to determine a first proportion based on the first parking space image, where the first proportion may indicate a proportion of the target parking space in the first parking space image. The processing module 3520 may be specifically configured to determine the sign of the target parking space based on the first parking space image and the first proportion.

For example, a proportion of the at least one parking space in the image may be determined based on the first parking space image, the target parking space may be determined based on the proportion, and then the sign of the target parking space may be determined. For example, in the image shown in (a) in FIG. 13, proportions of the plurality of parking spaces such as A104 and A105 in the image may be determined. For example, a parking space with a largest proportion may be determined as the target parking space. In this way, when there is no parking space indication information, the target parking space is determined, and then the sign of the target parking space may be determined. For another example, when an image captured by a camera is distorted, distortion correction may be performed on the image, to determine proportions of the plurality of parking spaces, and then determine the sign of the target parking space. It should be understood that the foregoing description of the first proportion is merely an example for ease of description. This is not limited in embodiments of this application.

In some possible implementations, the processing module 3520 may be specifically configured to: determine one or more parking space information texts based on the first parking space image; and determine the sign of the target parking space based on confidence of at least one parking space information text in the one or more pieces of parking space information.

For example, one or more texts may be determined based on the first parking space image, and the texts may be referred to as parking space information texts. The sign of the target parking space may be determined based on confidence of the parking space information texts. For example, in an actual scenario, in addition to the sign of the parking space, the parking space may further include other information, for example, "Dedicated parking space" and "Do not occupy". A plurality of texts may be obtained based on the first parking space image by using an OCR technology, and the sign of the target parking space may be determined based on confidence of the plurality of texts.

For example, for the foregoing description of the confidence, refer to step S1130 and the like.

In some possible implementations, a vehicle includes a vehicle-mounted display apparatus. The processing module 3520 may be further configured to control the vehicle-mounted display apparatus to display an image of the target parking space. For example, a message may be sent to the vehicle-mounted display apparatus to indicate the vehicle-mounted display apparatus to display the image of the target parking space, or a message may be sent to another control apparatus to indicate the another control apparatus to control the vehicle-mounted display apparatus to display the image of the target parking space. For another example, only the image of the target parking space may be displayed, or the plurality of parking spaces including the target parking space in the image may be displayed. Further, for example, the target parking space in the image may be highlighted in a form of a line frame. For another example, the displayed image may include a partial area of the target parking space, for example, an area in which the sign of the target parking space is located. Alternatively, the sign of the target parking space may be displayed in a form of a text. It should be understood that the foregoing manners of displaying the target parking space on the vehicle-mounted display apparatus are merely examples. This is not limited in embodiments of this application.

In some possible implementations, the apparatus further includes a sending module 3530. The sending module 3520 may be configured to send a first message after the sign of the target parking space is determined, where the first message may indicate the target parking space.

For example, for description of the first message, refer to step S1130 and the like.

In some possible implementations, the processing module 3520 is specifically configured to: determine one or more pieces of marker information based on the image of the marker; and determine a sign of the parking area based on the one or more pieces of marker information, where an area indicated by the sign of the parking area is the parking area.

For example, the one or more pieces of marker information may be determined based on the image of the marker in the parking area, and the sign of the parking area may be determined based on the marker information. For example, when a plurality of texts are determined based on the image of the marker in the parking area, the sign of the parking area may be determined based on confidence of the plurality of texts; or the sign of the parking area may be determined based on the plurality of texts and the area keyword in the sign of the target parking space. It should be understood that the foregoing methods for determining the sign of the parking area are merely examples for ease of description. This is not limited in embodiments of this application.

For example, for a method for determining the sign of the parking area, refer to step S1450 and the like.

In some possible implementations, the processing module 3520 may be further configured to control the vehicle-mounted display apparatus to display the sign of the parking area.

For example, the vehicle-mounted display apparatus may be controlled to display the image of the marker in the parking area. The image may include the sign of the parking area. Further, for example, the sign of the parking area may be highlighted in a form of a line frame, a color, or the like. Alternatively, a text of the sign of the parking area may be displayed on the vehicle-mounted display apparatus. It should be understood that the foregoing methods for displaying the sign of the parking area are merely examples. This is not limited in embodiments of this application.

In some possible implementations, the sending module 3520 may be further configured to send a second message after the parking area is determined, where the second message may indicate the parking area.

For example, for description of the second message, refer to step S1450 and the like.

In some possible implementations, before obtaining the ambient environment data, the obtaining module 3510 may be specifically configured to obtain a voice instruction or user operation information. The processing module 3520 may be further configured to: detect a parking voice instruction based on the voice instruction, where the parking voice instruction may indicate that a user has a parking intention, and start a first sensor when the parking voice instruction is detected; or detect a first operation based on the user operation information, where the first operation may indicate that a user has a parking intention, and start a first sensor when the first operation information is detected; and control the first sensor to capture the ambient environment data.

For example, for description of the parking voice instruction and the first operation, refer to step S1010 and the like.

In some possible implementations, before obtaining the ambient environment data, the processing module 3520 may be further configured to: start a first sensor when it is determined that the vehicle is located in a parking lot area; and control the first sensor to capture the ambient environment data.

In some possible implementations, the obtaining module 3510 may be further configured to obtain a first status parameter. The processing module 3520 may be configured to: perform parking lot marker detection when the first status parameter is less than or equal to a first threshold; and when a parking lot marker is detected, determine that the vehicle is located in the parking lot area.

For example, the first status parameter may include at least one of a distance between the vehicle and an entrance of a parking lot, a vehicle speed, and signal quality of a GNSS signal.

For example, for description of the first status parameter, the parking lot marker, and the like, refer to step S910 and the like.

In some possible implementations, the marker in the parking area is a column.

For example, FIG. 38 is a diagram of a structure of a parking interaction apparatus according to an embodiment of this application. The apparatus 3600 may include: an obtaining module 3610, configured to: obtain information about a first area when a vehicle enters the first area; and obtain information about a second area when the vehicle enters the second area, where the second area is located in the first area; and a processing module 3620, configured to determine parking location information of the vehicle based on the information about the first area and the information about the second area.

In some possible implementations, the first area may be a parking floor and/or a parking zone in a parking lot; the second area may include the parking space for parking the vehicle; and the parking location information includes information about the parking space for parking the vehicle, and information about the parking floor and/or information about the parking zone.

It should be understood that, for description of the first area and the second area, refer to the method 2900 and the like.

In some possible implementations, the obtaining module 3610 may be specifically configured to: obtain a first instruction, where the first instruction indicates that a user of the vehicle has a parking intention; and obtain the information about the second area based on the first instruction.

For example, for description of the first instruction, refer to the method 2900 and the like.

For example, the obtaining module 3610 may be specifically configured to obtain the information about the second area when detecting that the vehicle enters a parking state. For example, whether the vehicle enters the parking state may be determined based on a control signal of the vehicle. For example, when it is detected that a gear of the vehicle is adjusted to a reverse gear, it may be determined that the vehicle enters the parking state. For description of the parking state, refer to the method 2900. For brevity, details are not described herein again.

For example, when an operation that the user has the parking intention is detected, it may be determined that the vehicle enters the parking state. For description of the operation that the user has the parking intention, refer to the description of the method 1000 and the like.

In some possible implementations, the obtaining module 3610 may be further configured to obtain parking environment information in a process from entering the parking state by the vehicle to completing parking by the vehicle. The obtaining module 3610 may be specifically configured to obtain the information about the second area based on the parking environment information.

For example, when it is detected that a gear is adjusted to a parking gear, or when it is detected that a parking brake is triggered, or when it is detected that the user determines the parking location information of the vehicle on the interaction interface, or when no user is detected in a cockpit, or when it is detected that the vehicle is powered off or the vehicle is turned off, or the like, it may be determined that a parking process is completed.

For example, for description of obtaining a sign of a parking space, refer to step S1130 and the like. For description of obtaining a sign of the parking zone, refer to step S1450 and the like.

In some possible implementations, the apparatus may further include a sending module 3630, configured to send a first prompt message, where the first prompt message includes the parking location information of the vehicle.

In some possible implementations, the sending module 3630 may be specifically configured to send the first prompt message when detecting that the vehicle completes parking.

In some possible implementations, the apparatus may further include a receiving module 3640, configured to receive parking location request information, where the parking location request information may be used to request the parking location information of the vehicle. The sending module 3630 may be specifically configured to send the first prompt message based on the parking location request information.

For example, the processing module 3620 may be further configured to control, based on the parking location request information, the sending module 3630 to send the first prompt message. For example, the processing module 3630 may determine, based on the parking location request information, to establish a connection to an electronic device that sends the message. For another example, the processing module 3630 may determine, based on the parking location request information, an electronic device that sends the parking location request information. For example, when it is determined that the electronic device that sends the parking location request information is a cloud server, the processing module 3620 may control the sending module 3630 to send the first prompt message. Alternatively, when it is determined that the electronic device that sends the parking location request information is a terminal device like a mobile phone, the processing module 3620 may perform authentication on user identity information of the electronic device, to determine permission information of a requester and the like.

In some possible implementations, the parking location request information carries identity information of the requester, and the sending module 3630 may be specifically configured to send the first prompt message based on the identity information of the requester.

For example, the processing module 3620 may be configured to determine content of the first message based on the identity information of the requester. For example, when it is determined that the requester is an unauthorized user, the sending module may be controlled not to send the first prompt message. For another example, information carried in the first prompt message may be determined based on permission of the requester. For description of the first prompt message, refer to the method 2900 and the like.

In some possible implementations, the obtaining module 3610 may be further configured to obtain image information of the second area at a plurality of moments. The processing module may be further configured to determine a plurality of pieces of sign information based on the image information of the second area at the plurality of moments. The obtaining module 3610 may be specifically configured to obtain a sign of the second area based on the plurality of pieces of sign information, where the information about the second area includes the sign of the second area.

In some possible implementations, the plurality of pieces of sign information may include at least two first incomplete signs, and the first incomplete sign includes a part of the sign of the second area. The obtaining module 3610 may be specifically configured to concatenate and fuse a plurality of first incomplete signs in the at least two first incomplete signs, to obtain the sign of the second area.

For example, the obtaining module 3610 may be specifically configured to obtain the sign of the second area based on confidence of at least one of the plurality of pieces of sign information.

For example, the obtaining module 3610 may be configured to obtain image information of the second area. The processing module 3620 may be configured to: obtain one or more pieces of sign information through recognition based on the image information, perform concatenation and fusion on incomplete sign information, and determine the sign of the second area from the sign information based on confidence of the sign information. For example, for description of determining the sign of the target parking space and the sign of the parking zone based on images of the target parking space and images of the parking zone at the plurality of moments, refer to the method 2400, the method 2500, the method 2900, and the like.

In some possible implementations, the obtaining module 3610 may be further configured to obtain a first trigger condition when the vehicle enters the first area, where the first trigger condition indicates a condition that needs to be met for obtaining the information about the first area. The obtaining module 3610 may be specifically configured to obtain the information about the first area when the first trigger condition is met.

In some possible implementations, the obtaining module 3610 may be further configured to: obtain ambient environment information of the vehicle when it is determined that the vehicle enters the parking lot, where the ambient environment information is used to obtain the information about the first area and/or the information about the second area.

For example, for a method for determining that the vehicle is located in the parking area, refer to the description of the method 900 and the like.

In some possible implementations, the processing module 3620 may be further configured to detect a marker in the first area based on data captured by a sensor on the vehicle. The obtaining module 3610 may be specifically configured to obtain the information about the first area based on the marker in the first area.

For example, when the first area includes the parking zone, the marker in the first area may be a column in the parking lot, an inner wall of the parking lot, or the like. For description of the marker, refer to the method 1400 and the like.

For example, the obtaining module 3610 may be specifically configured to: determine one or more pieces of marker information based on image information of the marker in the first area; and obtain the information about the first area based on confidence of at least one of the one or more pieces of marker information.

For example, the vehicle may include a vehicle-mounted display apparatus. The processing module 3620 may be further configured to: when the information about the first area is obtained, control the vehicle-mounted display apparatus to display the information about the first area; and/or when the information about the second area is obtained, control the vehicle-mounted display apparatus to display the information about the second area. The processing module may directly control the vehicle-mounted display apparatus to display the information about the first area and the information about the second area, or the processing module may send an indication message, and then control display of the vehicle-mounted display apparatus through another control apparatus. This is not limited in this application.

For example, the first area includes the parking floor. The obtaining module 3610 may be further configured to obtain pitch angle information of the vehicle. The obtaining module 3610 may be specifically configured to determine the information about the parking floor based on the pitch angle information of the vehicle.

For example, the first area includes the parking floor, and the parking floor may be connected to an inter-floor passage in the parking lot. The obtaining module 3610 may be further configured to obtain a passage guidance sign when it is determined that the vehicle is located in the inter-floor passage, where the passage guidance sign includes information about a floor connected to the inter-floor passage. The obtaining module may be specifically configured to obtain the information about the parking floor based on the passage guidance sign.

For example, for description of a manner of determining the parking floor, refer to the method 2900 and the like.

For example, when the first area includes the parking floor, a first marker may be an inter-floor passage, and the vehicle may travel from one floor to another floor through the inter-floor passage. Alternatively, a first marker may be an intersection between the inter-floor passage and a floor, and the intersection may be a T-shaped intersection, a crossroad, or the like.

It should be understood that operations/behavior such as obtaining, storing, using, and processing user information in this application are compliant use in compliance with local laws and regulations. For example, operations such as obtaining, storing, using, and processing user information in this patent indicate operations performed when personal consent has been obtained.

It should be understood that division of the units in the foregoing apparatuses is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory inside the apparatus or a memory outside the apparatus. Alternatively, the units in the apparatuses may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units in the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatuses may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units in the apparatuses may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units in the apparatuses. Types of the at least one processor may be different, for example, the at least one processor includes a CPU and an FPGA, a CPU and an artificial intelligence processor, or a CPU and a GPU.

For example, in a specific implementation process, the operations performed by the obtaining module 3610 and the processing module 3620 may be performed by a same processor, or may be performed by different processors, for example, separately performed by a plurality of processors. In an example, one or more processors may be connected to one or more sensors in the sensing system 120 in FIG. 1, and obtain the ambient environment information from the one or more sensors. In another example, one or more processors may determine the information about the first area and the information about the second area based on processed ambient environment information. The processor for determining the information about the first area and the information about the second area and the processor for obtaining the ambient environment information may be a same processor, or may be different processors. The plurality of processors may be connected to each other through an internal circuit, and may transfer a message through the internal circuit. For example, in a specific implementation process, the one or more processors may be a processor disposed in an in-vehicle infotainment, or a processor disposed in another vehicle-mounted terminal. For example, in a specific implementation process, the apparatus 3600 may be a chip disposed in an in-vehicle infotainment or another vehicle-mounted terminal. For example, in a specific implementation process, the apparatus 3600 may be the computing platform 150 shown in FIG. 1 disposed in the vehicle. For brevity, examples are not listed one by one herein again.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, the processing unit may include at least one processor, and the storage unit may be a memory. The memory may be a storage unit (for example, a register or a cache) in a chip, or may be a storage unit (for example, a read-only memory, or a random access memory) located outside a chip in a transportation means.

Optionally, if the apparatus is located in the vehicle, the processing unit may be the processors 151 to 15n shown in FIG. 1.

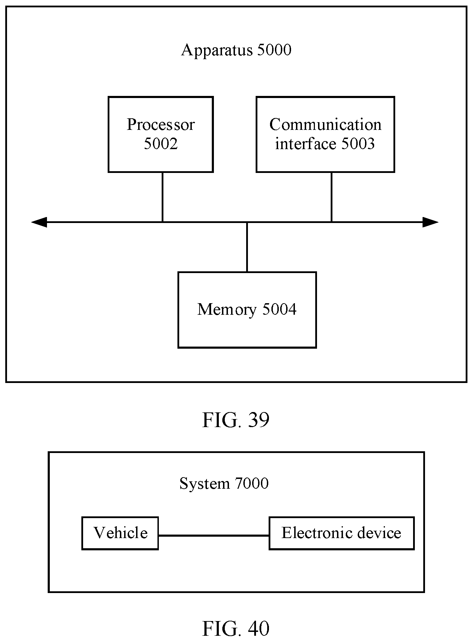

For example, FIG. 39 is a diagram of a structure of an apparatus 5000 according to an embodiment of this application. The apparatus 5000 includes a processor 5002, a communication interface 5003, and a memory 5004. An example of the apparatus 5000 is a chip. Another example of the apparatus 5000 is a computing device.

The processor 5002, the memory 5004, and the communication interface 5003 may communicate with each other through a bus. The memory 5004 stores executable code, and the processor 5002 reads the executable code in the memory 5004 to perform a corresponding method. The memory 5004 may further include a software module required for another running process, for example, an operating system.

For example, the executable code in the memory 5004 is used to implement the methods shown in FIG. 10 to FIG. 31. The processor 5002 reads the executable code in the memory 5004, to perform the methods shown in FIG. 10 to FIG. 31.

The processor 5002 may be a CPU. The memory 5004 may include a volatile memory (volatile memory, VM), for example, a random access memory. The memory 5004 may further include a non-volatile memory (non-volatile memory, NVM), for example, a read-only memory, a flash memory, a hard disk drive (hard disk drive, HDD), or a solid state disk (solid state disk, SSD).

An embodiment of this application further provides a vehicle. The vehicle 6000 may include the apparatus shown in any one of FIG. 32 to FIG. 35 or FIG. 37 to FIG. 39.

For example, FIG. 40 is a diagram of a system 7000 according to an embodiment of this application. As shown in FIG. 40, the system 7000 may include a vehicle 7100 and an electronic device 7200. The vehicle 7100 may include the apparatus shown in any one of FIG. 32 to FIG. 35 or FIG. 37 to FIG. 39, and the electronic device 7200 may be the terminal device like the mobile phone in the foregoing method embodiments. The vehicle 7100 may be configured to send a first prompt message, where the first prompt message may include parking location information of the vehicle. The electronic device 7200 may be configured to: receive the first prompt message, and control display of a parking location of the vehicle based on the first prompt message.

For example, the parking location of the vehicle may be displayed on a display apparatus associated with the electronic device 7200. For example, when the electronic device is an electronic device having a display, like a mobile phone, a smartwatch, or a tablet computer, the parking location of the vehicle may be displayed on the display of the electronic device. For another example, when the electronic device is connected to an external display apparatus, the external display apparatus may be controlled to display the parking location of the vehicle.

For example, the electronic device 7200 may be further configured to send parking location request information. The vehicle 7100 may be configured to receive the parking location request information, and may be configured to send the first prompt message based on the parking location request information.

An embodiment of this application further provides a computer program product. The computer program product includes computer program code. When the computer program code is run on a computer, the computer is enabled to perform the method 200 and any possible implementation of the method 200.

An embodiment of this application further provides a computer-readable medium. The computer-readable medium stores program code. When the computer program code is run on a computer, the computer is enabled to perform the method 200 and any possible implementation of the method 200.

For example, the computer-readable medium may include any medium that can store program code, like a USB flash drive, a removable hard disk, a read-only memory, a random access memory, a magnetic disk, or an optical disc. This is not limited in embodiments of this application. The computer-readable medium may store instructions of the obtaining module 3610 and/or the processing module 3620. When the program code is run on the computer, the computer may be configured to perform an operation performed by the obtaining module 3610 and/or the processing module 3620.

The term "at least one" in this application means one or more, and the term "a plurality of" in this application means two or more.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. For example, the "first message" and the "second message" are merely used for differentiation, and do not mean that priorities of the "first message" and the "second message" are different.

It should be understood that sequence numbers of processes do not mean execution sequences in embodiments of this application. The execution sequences of the processes shall be determined based on functions and internal logic of the processes, and shall not be construed as any limitation on the implementation processes of embodiments of this application.

It should be understood that determining B based on A does not mean that B is determined based on only A, and B may alternatively be determined based on A and/or other information.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in embodiments of this application. The execution sequences of the processes shall be determined based on functions and internal logic of the processes, and shall not be construed as any limitation on the implementation processes of embodiments of this application.

The terms "component", "module", and "system" and the like used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network like the Internet interacting with another system by using a signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In several embodiments provided in this application, it should be understood that the disclosed system, apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and parts displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parking interaction method, comprising:
obtaining information about a first area when a vehicle enters the first area;
obtaining information about a second area when the vehicle enters the second area, wherein the second area is located in the first area; and
determining parking location information of the vehicle based on the information about the first area and the information about the second area.

2. The method according to claim 1, wherein the first area is a parking floor and/or a parking zone of a parking lot in which the vehicle is located;
the second area comprises a parking space for parking the vehicle; and
the parking location information comprises information about the parking space for parking the vehicle, and information about the parking floor and/or information about the parking zone.

3. The method according to claim 1 or 2, wherein the obtaining information about a second area when the vehicle enters the second area comprises:
obtaining a first instruction, wherein the first instruction indicates that a user of the vehicle has a parking intention; and
obtaining the information about the second area based on the first instruction.

4. The method according to claim 1 or 2, wherein the obtaining information about a second area when the vehicle enters the second area comprises:
obtaining the information about the second area when it is detected that the vehicle enters a parking state.

5. The method according to claim 4, wherein the method further comprises:
obtaining parking environment information in a process from entering the parking state by the vehicle to completing parking by the vehicle; and
the obtaining information about a second area comprises:
obtaining the information about the second area based on the parking environment information.

6. The method according to any one of claims 1 to 5, wherein the method further comprises:
sending a first prompt message, wherein the first prompt message comprises the parking location information of the vehicle.

7. The method according to claim 6, wherein the sending a first prompt message comprises:
sending the first prompt message when it is detected that the vehicle completes parking.

8. The method according to claim 6, wherein the method further comprises:
receiving parking location request information, wherein the parking location request information is used to request to obtain the parking location information of the vehicle; and
the sending a first prompt message comprises:
sending the first prompt message based on the parking location request information.

9. The method according to claim 8, wherein the parking location request information carries identity information of a requester, and the sending the first prompt message based on the parking location request information comprises:
sending the first prompt message based on the identity information of the requester.

10. The method according to any one of claims 1 to 9, wherein the method further comprises:
obtaining image information of the second area at a plurality of moments; and
determining a plurality of pieces of sign information based on the image information of the second area at the plurality of moments; and
the obtaining information about a second area comprises:
obtaining a sign of the second area based on the plurality of pieces of sign information, wherein the information about the second area comprises the sign of the second area.

11. The method according to claim 10, wherein the plurality of pieces of sign information comprise at least two first incomplete signs, the first incomplete sign comprises a part of the sign of the second area, and the obtaining a sign of the second area based on the plurality of pieces of sign information comprises:
concatenating and fusing a plurality of first incomplete signs in the at least two first incomplete signs, to obtain the sign of the second area.

12. The method according to claim 10 or 11, wherein the obtaining a sign of the second area based on the plurality of pieces of sign information comprises:
obtaining the sign of the second area based on confidence of at least one of the plurality of pieces of sign information.

13. The method according to any one of claims 1 to 12, wherein the method further comprises:
obtaining ambient environment information of the vehicle when it is determined that the vehicle enters the parking lot, wherein the ambient environment information is used to obtain the information about the first area and/or the information about the second area.

14. The method according to any one of claims 1 to 13, wherein the method further comprises:
detecting a marker in the first area based on data captured by a sensor on the vehicle; and
the obtaining information about a first area comprises:
obtaining the information about the first area based on the marker in the first area.

15. The method according to claim 14, wherein the obtaining the information about the first area based on the marker in the first area comprises:
determining one or more pieces of marker information based on image information of the marker in the first area; and
obtaining the information about the first area based on confidence of at least one of the one or more pieces of marker information.

16. The method according to any one of claims 1 to 15, wherein the vehicle comprises a vehicle-mounted display apparatus, and the method further comprises:
when the information about the first area is obtained, controlling the vehicle-mounted display apparatus to display the information about the first area; and/or
when the information about the second area is obtained, controlling the vehicle-mounted display apparatus to display the information about the second area.

17. The method according to any one of claims 1 to 16, wherein the first area comprises the parking floor, and the method further comprises:
obtaining pitch angle information of the vehicle; and
the obtaining information about a first area comprises:
determining the information about the parking floor based on the pitch angle information.

18. The method according to any one of claims 1 to 17, wherein the first area comprises the parking floor, the parking floor is connected to an inter-floor passage of the parking lot, and the method further comprises:
obtaining a passage guidance sign when it is determined that the vehicle passes through the inter-floor passage, wherein the passage guidance sign comprises information about a floor connected to the inter-floor passage; and
the obtaining information about a first area comprises:
obtaining the information about the parking floor based on the passage guidance sign.

19. A parking interaction apparatus, comprising:
an obtaining module, configured to: obtain information about a first area when a vehicle enters the first area; and obtain information about a second area when the vehicle enters the second area, wherein the second area is located in the first area; and
a processing module, configured to determine parking location information of the vehicle based on the information about the first area and the information about the second area.

20. The apparatus according to claim 19, wherein the first area is a parking floor and/or a parking zone of a parking lot in which the vehicle is located; the second area comprises a parking space for parking the vehicle; and the parking location information comprises information about the parking space for parking the vehicle, and information about the parking floor and/or information about the parking zone.

21. The apparatus according to claim 19 or 20, wherein the obtaining module is specifically configured to:
obtain a first instruction, wherein the first instruction indicates that a user of the vehicle has a parking intention; and
obtain the information about the second area based on the first instruction.

22. The apparatus according to claim 19 or 20, wherein the obtaining module is specifically configured to:
obtain the information about the second area when it is detected that the vehicle enters a parking state.

23. The apparatus according to claim 22, wherein the obtaining module is further configured to:
obtain parking environment information in a process from entering the parking state by the vehicle to completing parking by the vehicle; and
the obtaining module is specifically configured to:
obtain the information about the second area based on the parking environment information.

24. The apparatus according to any one of claims 19 to 23, wherein the apparatus further comprises:
a sending module, configured to send a first prompt message, wherein the first prompt message comprises the parking location information of the vehicle.

25. The apparatus according to claim 24, wherein the sending module is specifically configured to:
send the first prompt message when it is detected that the vehicle completes parking.

26. The apparatus according to claim 24, wherein the apparatus further comprises:
a receiving module, configured to receive parking location request information, wherein the parking location request information is used to request the parking location information of the vehicle, wherein
the sending module is specifically configured to:
send the first prompt message based on the parking location request information.

27. The apparatus according to claim 26, wherein the parking location request information carries identity information of a requester, and the sending module is specifically configured to:
send the first prompt message based on the identity information of the requester.

28. The apparatus according to any one of claims 19 to 27, wherein the obtaining module is further configured to:
obtain image information of the second area at a plurality of moments;
the processing module is further configured to:
determine a plurality of pieces of sign information based on the image information of the second area at the plurality of moments; and
the obtaining module is specifically configured to:
obtain a sign of the second area based on the plurality of pieces of sign information, wherein the information about the second area comprises the sign of the second area.

29. The apparatus according to claim 28, wherein the plurality of pieces of sign information comprise at least two first incomplete signs, the first incomplete sign comprises a part of the sign of the second area, and the obtaining module is specifically configured to:
concatenate and fuse a plurality of first incomplete signs in the at least two first incomplete signs, to obtain the sign of the second area.

30. The apparatus according to claim 28 or 29, wherein the obtaining module is specifically configured to:
obtain the sign of the second area based on confidence of at least one of the plurality of pieces of sign information.

31. The apparatus according to any one of claims 19 to 30, wherein the obtaining module is further configured to:
obtain ambient environment information of the vehicle when it is determined that the vehicle enters the parking lot, wherein the ambient environment information is used to obtain the information about the first area and/or the information about the second area.

32. The apparatus according to any one of claims 19 to 31, wherein the processing module is further configured to:
detect a marker in the first area based on data captured by a sensor on the vehicle; and
the obtaining module is specifically configured to:
obtain the information about the first area based on the marker in the first area.

33. The apparatus according to claim 32, wherein the obtaining module is specifically configured to:
determine one or more pieces of marker information based on image information of the marker in the first area; and
obtain the information about the first area based on confidence of at least one of the one or more pieces of marker information.

34. The apparatus according to any one of claims 19 to 33, wherein the vehicle comprises a vehicle-mounted display apparatus, and the processing module is further configured to:
when the information about the first area is obtained, control the vehicle-mounted display apparatus to display the information about the first area; and/or
when the information about the second area is obtained, control the vehicle-mounted display apparatus to display the information about the second area.

35. The apparatus according to any one of claims 19 to 34, wherein the first area comprises the parking floor, and the obtaining module is further configured to:
obtain pitch angle information of the vehicle; and
the obtaining module is specifically configured to:
determine the information about the parking floor based on the pitch angle information.

36. The apparatus according to any one of claims 19 to 35, wherein the first area comprises the parking floor, the parking floor is connected to an inter-floor passage of the parking lot, and the obtaining module is further configured to:
obtain a passage guidance sign when the vehicle passes through the inter-floor passage, wherein the passage guidance sign comprises information about a floor connected to the inter-floor passage; and
the obtaining module is specifically configured to:
obtain the information about the parking floor based on the passage guidance sign.

37. An apparatus, comprising a processor and a memory, wherein the memory is configured to store program instructions, and the processor is configured to invoke the program instructions to perform the method according to any one of claims 1 to 18.

38. A computer-readable storage medium, wherein the computer-readable medium stores program code, and when the program code is run on a computer, the computer is enabled to perform the method according to any one of claims 1 to 18.

39. A vehicle, comprising the apparatus according to any one of claims 19 to 37.

40. A system, comprising a vehicle and an electronic device, wherein the vehicle comprises the apparatus according to any one of claims 19 to 37;
the vehicle is configured to:
send a first prompt message, wherein the first prompt message comprises parking location information of the vehicle; and
the electronic device is configured to:
receive the first prompt message; and
control, based on the first prompt message, display of a parking location of the vehicle.

41. The system according to claim 40, wherein the electronic device is further configured to:
send parking location request information, wherein the parking location request information is used to request the parking location information of the vehicle;
the vehicle is further configured to receive the parking location request information; and
the vehicle is specifically configured to:
send the first prompt message based on the parking location request information.
